# EUROPEAN PATENT SPECIFICATION

(11) **EP 3 782 389 B1**
(45) Date of publication and mention of the grant of the patent: **19.07.2023**
(21) Application number: 19731787.8
(22) Date of filing: 01.05.2019
(51) Int. Cl.: H04W 8/00

(54) **SCHEDULED AND TRIGGERED MMW DISCOVERY ASSISTANCE BY LOWER BAND SIGNALING**
UNTERSTÜTZUNG VON GEPLANTER UND AUSGELÖSTER MMW-ENTDECKUNG DURCH UNTERBANDSIGNALISIERUNG
ASSISTANCE DE DÉCOUVERTE MMW PROGRAMMÉE ET DÉCLENCHÉE PAR SIGNALISATION DE BANDE INFÉRIEURE

(30) Priority: 30.05.2018 US 201862677792 P; 03.08.2018 US 201816055011
(43) Date of publication of application: 24.02.2021
(73) Proprietor: Sony Group Corporation, Tokyo 108-0075 (JP)
(72) Inventor: ABOUELSEOUD, Mohamed, San Jose, CA 95112 (US); SAKODA, Kazuyuki, San Jose, CA 95112 (US)
(74) Representative: D Young & Co LLP
(86) International application number: PCT/IB2019/053568
(87) International publication number: WO 2019/229557

(56) References cited:
- US-A1- 2015 382 171
- US-A1- 2016 044 711
- MOHAMED ABOUELSEOUD (SONY): "Discussion on the Multi-band Discovery Assistance Proposal", IEEE DRAFT; 11-18-0703-00-00AY-DISCUSSION-ON-THE-MULTI -BAND-DISCOVERY-ASSISTANCE-PROPOSAL, IEEE-SA MENTOR, PISCATAWAY, NJ USA , vol. 802.11ay 24 April 2018 (2018-04-24), pages 1-11, XP068125779, Retrieved from the Internet: URL:https://mentor.ieee.org/802.11/dcn/18/ 11-18-0703-00-00ay-discussion-on-the-multi -band-discovery-assistance-proposal.pptx [retrieved on 2018-04-24]
- MOHAMED ABOUELSEOUD (SONY): "Multi-band Discovery Assistance Normative Text", IEEE DRAFT; 11-18-0491-00-00AY-MULTI-BAND-DISCOVERY-AS SISTANCE-NORMATIVE-TEXT, IEEE-SA MENTOR, PISCATAWAY, NJ USA , vol. 802.11ay 6 March 2018 (2018-03-06), pages 1-21, XP068125499, Retrieved from the Internet: URL:https://mentor.ieee.org/802.11/dcn/18/ 11-18-0491-00-00ay-multi-band-discovery-as sistance-normative-text.docx [retrieved on 2018-03-06]

## Description

### STATEMENT REGARDING FEDERALLY SPONSORED RESEARCH OR DEVELOPMENT

Not Applicable

### INCORPORATION-BY-REFERENCE OF COMPUTER PROGRAM APPENDIX

Not Applicable

### BACKGROUND

### 1. Technical Field

The technology of this disclosure pertains generally to directional millimeter wave (mm) wireless network communications, and more particularly to scheduling and triggering mmW discovery assistance by lower band signaling.

### 2. Background Discussion

Wireless networking, including mesh networks and mixtures of mesh and non-mesh networks, are becoming increasingly important, especially in the millimeter wavelength (mm-wave or mmW) regimes. In response to the need of higher capacity, network operators have begun to embrace various concepts to achieve densification. Current sub-6 GHz wireless technology is not sufficient to cope with high data demands. One alternative is to utilize additional spectrum in the 30-300 GHz band which is often referred to as the millimeter wave band (mmW).

Utilizing mmW wireless systems generally requires properly dealing with channel impairments and propagation characteristics of these high frequency bands. High free-space path loss, high penetration, reflection and diffraction losses reduce available diversity and limit non-line-of-sight (NLOS) communications. Yet, the small wavelength of mmW enables the use of high-gain electronically steerable directional antennas of practical dimensions, which can provide sufficient array gain to overcome path loss and ensure a high Signal-to-Noise Ratio (SNR) at the receiver. Directional distribution networks (DNs) in dense deployment environments using mmW bands could be an efficient way for achieving reliable communications between stations (STAs) and overcoming line-of-sight channel restrictions.

When a new station (STA or node) is starting up it will be looking (searching) for neighboring STAs to discover in a network to be joined. The process of initial access of a STA to a network comprises scanning for neighboring STAs and discovering all active STAs in the local vicinity. This can be performed either through the new STA searching for a specific network or list of networks to join, or by the new STA sending a broadcast request to join any already established network that will accept the new STA.

A STA connecting to a distributed network (DN) needs to discover neighboring STAs to decide on the best way to reach a gateway / portal DN STAs and the capabilities of each of these neighboring STAs. The new STA examines every channel for possible neighboring STAs over a specific period of time. If no active STA is detected after that specific time, the new STA moves to test the next channel. When a STA is detected, the new STA collects sufficient information to configure its physical (PHY) layer (e.g., OSI model) for operation in the regulatory domain (IEEE, FCC, ETSI, MKK, etc.). This task is further challenging in mmWave communications due to directional transmissions. The challenges in this process can be summarized as: (a) knowledge of surrounding STAs IDs; (b) knowledge of the best transmission pattern(s) for beamforming; (c) channel access issues due to collisions and deafness; and (d) channel impairments due to blockage and reflections. Designing a neighborhood discovery method to overcome some or all of the above is of utmost importance to enable pervasiveness of mmWave D2D and DN technologies.

Most existing technologies for DN address discovery for networks operating in broadcast mode are not targeted to networks with directional wireless communications. In addition, those technologies which utilize directional wireless network communications often have very high overhead demands in regards to the generation of beacon signals. Still further these technologies lack sufficient mechanisms for reducing the overhead and latencies involved with performing discovery.

Accordingly, a need exists for enhanced mechanisms for providing discovery assistance within a mmWave directional wireless network. The present disclosure fulfills that need and provides additional benefits over previous technologies.
In a disclosure entitled "Discussion on the Multi-band Discovery Assistance Proposal", by Mohamed Abouelseoud (SONY), IEEE-SA Mentor, Piscataway, NJ, USA, vol. 802.11ay 24 April 2018 pages 1 - 11, a discovery assistance for a wireless mesh network is disclosed to assist a new node joining to join a mesh network.
In a disclosure entitled "Multi-band Discovery Assistance Normative Test", by Mohamed Abouelseoud (SONY), IEEE DRAFT; 11-18-0491-00-00AY-MULTI-BAND-DISCOVERY-ASSISTANCE-NORMATIVE-TEXT, Piscataway, NJ, USA, vol. 802.1 1ay 6 March 2018 pages 1 - 21, a Multi-band discovery assistance technique for a wireless mesh network is disclosed.
WO2014/151951 discloses a technique for multi-band operation in a wireless LAN system

### BRIEF SUMMARY

Various aspects and features of the present invention are defined in the appended claims. This disclosure describes various embodiments, including apparatus, systems and methods, for utilizing directional data transmission over a communication band (e.g., mmW) and performing discovery action over a discovery band (e.g., sub-6 GHz band) that aids scanning for mmW mesh network discovery. As a non-limiting example of the technology, an existing network node (AP or BSS STA) transmits beacons over the discovery band indicating the availability of discovery assistance. A new node transmits a request for assistance over the discovery band and includes a discovery assistance element with directional communication capability, to which the existing node responds with similar discovery assistance element. A beamforming process then commences over the directional communications band between the existing node and the new node after which communication is established. Embodiments are described supporting Time Division Duplex (TDD) Service Period (SP) as well as multiple channels of communication.

Further aspects of the technology described herein will be brought out in the following portions of the specification, wherein the detailed description is for the purpose of fully disclosing preferred embodiments of the technology without placing limitations thereon.

### BRIEF DESCRIPTION OF THE SEVERAL VIEWS OF THE DRAWING(S)

The technology described herein will be more fully understood by reference to the following drawings which are for illustrative purposes only:
FIG. 1 is a timing diagram of active scanning performed in an IEEE 802.11 wireless local area network (WLAN).
FIG. 2 is a STA diagram for a distributed network (DN) showing a combination of DN and non-DN stations.
FIG. 3 is a data field diagram depicting a DN identification element for an IEEE 802.11 WLAN.
FIG. 4 is a data field diagram depicting a DN configuration element for an IEEE 802.11 WLAN.
FIG. 5 is a schematic of antenna sector sweeping (SSW) in the IEEE 802.11ad protocol.
FIG. 6 is a signaling diagram showing signaling of sector-level sweeping (SLS) in the IEEE 802.11ad protocol.
FIG. 7 is a data field diagram depicting a sector sweep (SSW) frame element for IEEE 802.11ad.
FIG. 8 is a data field diagram depicting the SSW field within the SSW frame element for IEEE 802.11ad.
FIG. 9A and FIG. 9B are data field diagrams depicting SSW feedback fields shown when transmitted as part of an ISS in FIG. 9A, and when not transmitted as part of an ISS in FIG. 9B, as utilized for IEEE 802.11ad.
FIG. 10 is a block diagram of station hardware as utilized according to an embodiment of the present disclosure.
FIG. 11 is a mmW beam pattern diagram for the station hardware of FIG. 10 as utilized according to an embodiment of the present disclosure.
FIG. 12 is a beam pattern diagram for a discovery band communications antenna (i.e., sub-6 GHz), according to an embodiment of the present disclosure.
FIG. 13 is a communication period diagram of assisted discovery utilizing Assistance Request and Assistance response frames according to an embodiment of the present disclosure.
FIG. 14 is a communication period diagram of assisted discovery utilizing Fast Session Transfer (FST) Request and FST Response frames according to an embodiment of the present disclosure.
FIG. 15 is a communication period diagram of assisted discovery utilizing request and response frames through On Channel Tunneling (OCT) according to an embodiment of the present disclosure.
FIG. 16 is a communication period diagram of assisted discovery utilizing Probe Request and Probe Response frames according to an embodiment of the present disclosure.
FIG. 17 is a communication period diagram of Association, or Re-association, Request or Response frames according to an embodiment of the present disclosure.
FIG. 18A and FIG. 18B is a flow diagram of a BSS node offering assistance according to an embodiment of the present disclosure.
FIG. 19A and FIG. 19B is a flow diagram of a new STA requesting and receiving assistance according to an embodiment of the present disclosure.
FIG. 20 is a block and sequence diagram of beamforming multi-band synchronization performed according to an embodiment of the present disclosure.
FIG. 21 is a data field diagram of a Discovery Assistance element according to an embodiment of the present disclosure.
FIG. 22 is a data field diagram of subfields within the Discovery Assistance Control field of FIG. 21, according to an embodiment of the present disclosure.
FIG. 23 is a data field diagram of an Extended Schedule element format according to an embodiment of the present disclosure.
FIG. 24 is a data field diagram of subfields in the Allocation field from FIG. 23, according to an embodiment of the present disclosure.
FIG. 25 is a data field diagram of subfields in the Allocation Control subfield from FIG. 24, according to an embodiment of the present disclosure.
FIG. 26 is a data field diagram of a directional communication (e.g., Directional Multi-Gigabyte (DMG)) capability information element according to an embodiment of the present disclosure.
FIG. 27 is a data field diagram of a directional communications (DMG) STA Capability information element and field/subfield formats according to an embodiment of the present disclosure.
FIG. 28 is a data field diagram of a Multi-band element according to an embodiment of the present disclosure.
FIG. 29 is a data field diagram of a Multi-band Control field according to an embodiment of the present disclosure.
FIG. 30 is a communication period diagram of Discovery Assistance through beacon sweeping according to an embodiment of the present disclosure.
FIG. 31 is a data field diagram of a Discovery Assistance element according to an embodiment of the present disclosure.
FIG. 32 is a data field diagram of subfields in the Discovery Assistance Control field from FIG. 31, according to an embodiment of the present disclosure.
FIG. 33 is a data field diagram of an FST Response frame according to an embodiment of the present disclosure.
FIG. 34 is a data field diagram of subfields in the Discovery Assistance Control field from FIG. 33, according to an embodiment of the present disclosure.
FIG. 35 is a communication period diagram discovery assistance through triggering TDD SP beamforming according to an embodiment of the present disclosure.
FIG. 36 is data field diagram of an FST Setup Request Frame according to an embodiment of the present disclosure.
FIG. 37 is a data field diagram of subfields of the Discovery Assistance Control field from FIG. 36, according to an embodiment of the present disclosure.
FIG. 38 is data field diagram of an FST Setup Response Frame according to an embodiment of the present disclosure.
FIG. 39 is a data field diagram of subfields in the Discovery Assistance Control field from FIG. 36, according to an embodiment of the present disclosure.
FIG. 40 is a communication period diagram of discovery assistance through beamform scheduling according to an embodiment of the present disclosure.
FIG. 41 is a data field diagram of a DA FST Setup Request frame according to an embodiment of the present disclosure.
FIG. 42 is a data field diagram of subfields in the Discovery Assistance Control from FIG. 41, according to an embodiment of the present disclosure.
FIG. 43 is a data field diagram of an FST Setup Response Frame according to an embodiment of the present disclosure.
FIG. 44 is data field diagram of subfields in the Discovery Assistance Control field from FIG. 43, according to an embodiment of the present disclosure.
FIG. 45 is data field diagram of an Extended Schedule Element according to an embodiment of the present disclosure.
FIG. 46 is a data field diagram of subfields within the Allocation fields from FIG. 45, according to an embodiment of the present disclosure.
FIG. 47 is a data field diagram of subfields within the Allocation Control field from FIG. 46, according to an embodiment of the present disclosure.
FIG. 48 is a data field diagram of a Discovery Assistance in FST Setup Request frame according to an embodiment of the present disclosure.
FIG. 49 is a data field diagram of subfields within the Discovery Assistance Control field from FIG. 48, according to an embodiment of the present disclosure.
FIG. 50 is a data field diagram of a DA in FST Setup Response frame according to an embodiment of the present disclosure.
FIG. 51 is a data field diagram of subfields within the Discovery Assistance Control field from FIG. 50, according to an embodiment of the present disclosure.
FIG. 52 is a data field diagram of an Extended Schedule Element according to an embodiment of the present disclosure.
FIG. 53 is a data field diagram of subfields within the Allocation field from FIG. 52, according to an embodiment of the present disclosure.
FIG. 54 is a data field diagram of subfields within the Allocation Control field from FIG. 53, according to an embodiment of the present disclosure.
FIG. 55 is a communication period diagram of discovery assistance through beamforming over multiple communication (mmW) channels according to an embodiment of the present disclosure.

### DETAILED DESCRIPTION

### Definitions

A number of terms are utilized in the disclosure whose meanings are generally described below.

A-BFT: Association-Beamforming Training period; a period announced in the beacons that is used for association and beamform (BF) training of new stations (STAs) joining the network.

AP: Access Point; an entity that contains one station (STA) and provides access to the distribution services, through the wireless medium (WM) for associated STAs.

Beamforming (BF): a directional transmission from a directional antenna system or array, and not an Omni-directional or quasi-Omni antenna, for determining information for improving received signal power or signal-to-noise ratio (SNR) at the intended receiver.

BSS: Basic Service Set; a set of stations (STAs) that have successfully synchronized with an AP in the network.

BI: the Beacon Interval is a cyclic super frame period that represents the time between beacon transmission times.

BRP: BF Refinement protocol; a BF protocol that enables receiver training and iteratively trains the transmitter and receiver sides to optimize (achieve the best possible) directional communications.

BSS: Basic Service Set, is a component of the IEEE 802.11 WLAN architecture, built around a BSS which is actually a set of STAs connecting to the wireless medium allowing the STAs to communicate with each other.

BTI: Beacon Transmission Interval, is the interval between successive beacon transmissions.

CBAP: Contention-Based Access Period; the time period within the data transfer interval (DTI) of a directional multi-gigabit (DMG) BSS where contention-based enhanced distributed channel access (EDCA) is used.

DMG: Directional Multi-Gigabit (DMG).

DTI: Data Transfer Interval; the period in which full BF training is permitted followed by actual data transfer. The DTI can include one or more service periods (SPs) and contention-based access periods (CBAPs).

FST - Fast Session Transfer is a protocol that allows different streams or sessions to transfer smoothly from one channel to another in the same band or different bands.

LOS: Line-of-Sight, a communication in which the transmitter and receiver are ostensibly within sight of one another, and not the result of communication of a reflected signal.

MAC address: a Medium Access Control (MAC) address.

MBSS: DN Basic Service Set, a basic service set (BSS) that forms a self-contained network of distributed network (DN) Stations (DN STAs), and which may be used as a distribution system (DS).

MCS: Modulation and Coding Scheme; defines an index that can be translated into the physical (PHY) layer (e.g., OSI model) data rate.

MLME: MAC Layer Management Entity.

MMPDU: MAC Management Protocol Data Unit comprises management frames do not go beyond the Data Link layer of the OSI model and do not carry any upper-layer information, or MSDUs.

MSDU: MAC Service Data Unit, data in the Logical Link Control (LLC) lay is contained in the form of (MSDU).

MSTA: Mesh station (MSTA): A station (STA) that implements the Mesh facility, and when it operates in the Mesh BSS it may provide the distribution services for other MSTAs.

DN STA: distributed network (DN) station (DN STA): a station (STA) that implements the DN facility. A DN STA that operates in the DN BSS may provide the distribution services for other DN STAs.

OCT: On-Channel Tunnel.

Omni-directional: a mode of transmission utilizing a non-directional antenna.

Quasi-Omni directional: mode of communication utilizing a directional multi-gigabit (DMG) antenna with the widest beamwidth attainable.

Receive sector sweep (RXSS): Reception of Sector Sweep (SSW) frames via (across) different sectors, in which a sweep is performed between consecutive receptions.

RSNA: Robust Security Network Association, is an network communications authentication algorithm in IEEE 802.11.

SLS: Sector-level Sweep phase: a BF training phase that can include as many as four components: an Initiator Sector Sweep (ISS) to train the initiator, a Responder Sector Sweep (RSS) to train the responder link, such as using SSW Feedback and an SSW ACK.

SNR: received Signal-to-Noise Ratio in dB.

SP: Service Period; the SP that is scheduled by the access point (AP), with scheduled SPs starting at fixed intervals of time.

Spectral efficiency: the information rate that can be transmitted over a given bandwidth in a specific communication system, usually expressed in bits per second, or in Hertz.

SSID: service Set Identifier; the name assigned to a WLAN network.

STA: Station; a logical entity that is a singly addressable instance of a medium access control (MAC) and physical layer (PHY) interface to the wireless medium (WM).

Sweep: a sequence of transmissions, separated by a short beamforming interframe space (SBIFS) interval, in which the antenna configuration at the transmitter or receiver is changed between transmissions.

SSW: Sector Sweep, is an operation in which transmissions are performed in different sectors (directions) and information collected on received signals, strengths and so forth.

TDD: Time Division Duplex allows the communication link to be duplexed, in which uplink is separated from downlink by the allocation of different time slots in the same frequency band, to adjust for different uplink and downlink data transmission flows.

TDD SP: Time Division Duplexing Service Period is a service period with TDD channel access, in which the TDD SP comprises a sequence of TDD intervals that, in turn, comprise a sequence of TDD slots.

TSF: Timing Synchronization Function (TSF) is a synchronization function specified in IEEE 802.11 for wireless local area network (WLAN) to provide timing synchronization among stations as based on using timing ticks.

Transmit Sector Sweep (TXSS): transmission of multiple Sector Sweep (SSW) or Directional Multi-gigabit (DMG) Beacon frames via different sectors, in which a sweep is performed between consecutive transmissions.

### 1. Existing Directional Wireless Network Technology

### 1.1. WLAN Systems

In WLAN systems, such as 802.11, there are defined two modes of scanning; passive and active scanning. The following are the characteristics of passive scanning. (a) A new station (STA) attempting to join a network, examines each channel and waits for beacon frames for up to MaxChannelTime. (b) If no beacon is received, then the new STA moves to another channel, thus saving battery power since the new STA does not transmit any signal in scanning mode. The STA should wait enough time at each channel so that it does not miss the beacons. If a beacon is lost, the STA should wait for another beacon transmission interval (BTI).

The following are the characteristics of active scanning. (a) A new STA wanting to join a local network sends probe request frames on each channel, according to the following. (a)(1) The new STA moves to a channel, waits for incoming frames or a probe delay timer to expire. (a)(2) If no frame is detected after the timer expires, the channel is considered to not be in use. (a)(3) If a channel is not in use, the STA moves to a new channel. (a)(4) If a channel is in use, the STA gains access to the medium using regular DCF and sends a probe request frame. (a)(5) The STA waits for a desired period of time (e.g., Minimum Channel Time) to receive a response to the probe request if the channel was never busy. The STA waits for more time (e.g., Maximum Channel Time) if the channel was busy and a probe response was received.
(b) A Probe Request can use a unique service set identifier (SSID), list of SSIDs or a broadcast SSID. (c) Active scanning is prohibited in some frequency bands. (d) Active scanning can be a source of interference and collision, especially if many new STAs arrive at the same time and are attempting to access the network. (e) Active scanning is a faster way (less delay) for STAs to gain access to the network compared to the use of passive scanning, since STAs do not need to wait for beacons. (f) In the infrastructure basic service set (BSS) and IBSS, at least one STA is awake to receive and respond to probes. (g) STAs in a distributed network (DN) basic service set (MBSS) might not be awake at any point of time to respond. (h) When radio measurement campaigns are active, STAs might not answer the probe requests. (i) Collision of probe responses can arise. STAs might coordinate the transmission of probe responses by allowing the STA that transmitted the last beacon to transmit the first Probe Response. Other STAs can follow and use back-off times and regular distributed coordination function (DCF) channel access to avoid collision.

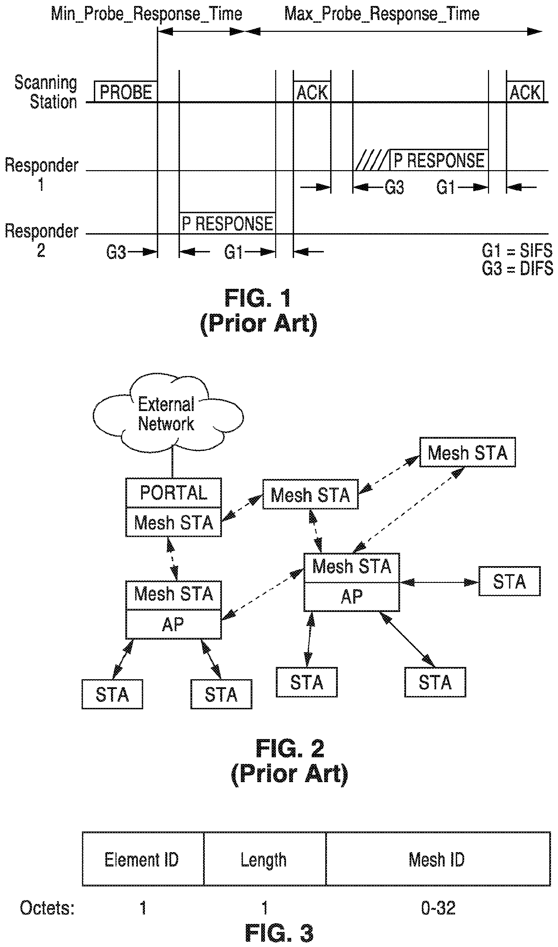

FIG. 1 depicts the use of active scanning in an IEEE 802.11 WLAN, depicting a scanning station sending a probe and two responding stations which receive and respond to the probe. The figure also shows the minimum and maximum probe response timing. The value G1 is shown set to SIFS which is the interframe spacing prior to transmission of an acknowledgment, while value G3 is DIFS which is DCF interframe spacing, represented the time delay for which a sender waits after completing a backoff period before sending an RTS package.

### 1.2. IEEE 802.11s Distributed Network (DN) WLAN

IEEE 802.11s (hereafter 802.11s) is a standard that adds wireless mesh networking capabilities to the 802.11 standard. In 802.11s new types of radio stations are defined as well as new signaling to enable mesh network discovery, establishing peer-to-peer connection, and routing of data through the mesh network.

FIG. 2 illustrates one example of a mesh network where a mix of non-mesh STA connect to Mesh-STA/AP (solid lines) and Mesh STAs connect to other mesh STA (dotted lines) including a mesh portal. Nodes in mesh networks use the same scanning techniques defined in the 802.11 standard for discovering neighbors. The identification of the mesh network is given by the Mesh ID element contained in the Beacon and the Probe Response frames. In one mesh network, all mesh STAs use the same mesh profile. Mesh profiles are considered the same if all parameters in the mesh profiles match. The mesh profile is included in the Beacon and Probe Response frames, so that the mesh profile can be obtained by its neighbor mesh STAs through the scan.

When a mesh STA discovers a neighbor mesh STA through the scanning process, the discovered mesh STA is considered a candidate peer mesh STA. It may become a member of the mesh network, of which the discovered mesh STA is a member, and establish a mesh peering with the neighbor mesh STA. The discovered neighbor mesh STA may be considered a candidate peer mesh STA when the mesh STA uses the same mesh profile as the received Beacon or Probe Response frame indicates for the neighbor mesh STA.

The mesh STA attempts to maintain the discovered neighbor's information in a Mesh Neighbors Table which includes: (a) neighbor MAC address; (b) operating channel number; and (c) the most recently observed link status and quality information. If no neighbors are detected, the mesh STA adopts the Mesh ID for its highest priority profile and remains active. All the previous signaling to discover neighbor mesh STAs are performed in broadcast mode. It should be appreciated that 802.11s was not targeted for networks with directional wireless communications.

FIG. 3 depicts a Mesh Identification element (Mesh ID element) which is used to advertise the identification of a Mesh Network. Mesh ID is transmitted in a Probe request, by a new STA willing to join a mesh network, and in beacon and signals, by existing mesh network STAs. A Mesh ID field of length 0 indicates the wildcard Mesh ID, which is used within a Probe Request frame. A wildcard Mesh ID is a specific ID that prevents a non-mesh STA from joining a mesh network. It should be recognized that a mesh station is a STA that has more features than a non-mesh station, for example a mesh network is like having the STA running as a module in additional to some other modules to serve the mesh functionality. If the STA does not have this mesh module it should not be allowed to connect to a mesh network.

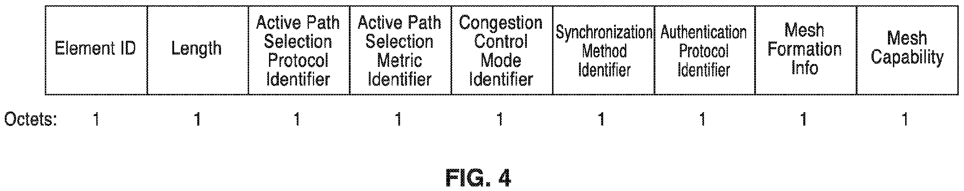

FIG. 4 depicts a Mesh configuration element as contained in Beacon frames and Probe Response frames transmitted by mesh STAs, and it is used to advertise mesh services. The main contents of the Mesh Configuration elements are: (a) a path selection protocol identifier; (b) a path selection metric identifier; (c) a congestion control mode identifier; (d) a synchronization method identifier; and (e) an authentication protocol identifier. The contents of the Mesh Configuration Element together with the Mesh ID form a mesh profile.

The 802.11a standard defines many procedures and mesh functionalities including: mesh discovery, mesh peering management, mesh security, mesh beaconing and synchronization, mesh coordination function, mesh power management, mesh channel switching, three address, four address, and extended address frame formats, mesh path selection and forwarding, interworking with external networks, intra-mesh congestion control and emergency service support in mesh BSS.

### 1.3. Millimeter Wave in WLAN

WLANs in millimeter wave bands generally require the use of directional antennas for transmission, reception or both, to account for the high path loss and to provide sufficient SNR for communication. Using directional antennas in transmission or reception makes the scanning process directional as well. IEEE 802.11ad and the new standard 802.11ay define procedures for scanning and beamforming for directional transmission and reception over the millimeter wave band.

### 1.4. IEEE 802.11ad Scanning and BF Training

An example of a mmWave WLAN state-of-the-art system is the 802.11ad standard.

### 1.4.1. Scanning

A new STA operates on passive or active scanning modes to scan for a specific SSID, a list of SSIDs, or all discovered SSIDs. To passively scan, a STA scans for DMG beacon frames containing the SSID. To actively scan: a DMG STA transmits Probe Request frames containing the desired SSID or one or more SSID List elements. The DMG STA might also have to transmit DMG Beacon frames or perform beamforming training prior to the transmission of Probe Request frames.

### 1.4.2. BF Training

BF training is a bidirectional sequence of BF training frame transmissions that uses a sector sweep and provides the necessary signaling to allow each STA to determine appropriate antenna system settings for both transmission and reception.

The 802.11ad BF training process can be performed in three phases. (1) A sector level sweep phase is performed whereby directional transmission with low gain (quasi-Omni) reception is performed for link acquisition. (2) A refinement stage is performed that adds receive gain and final adjustment for combined transmit and receive. (3) Tracking is then performed during data transmission to adjust for channel changes.

### 1.4.3. 802.11ad SLS BF Training Phase

This SLS BF Training Phase focuses on the sector level sweep (SLS) mandatory phase of the 802.11ad standard. During SLS, a pair of STAs exchange a series of sector sweep (SSW) frames (or beacons in case of transmit sector training at the PCP/AP) over different antenna sectors to find the one providing highest signal quality. The station that transmits first is called the initiator; the station that transmits second is referred to as the responder.

During a transmit sector sweep (TXSS), SSW frames are transmitted on different sectors while the pairing STA (the responder) receives utilizing a quasi-Omni directional pattern. The responder determines the antenna array sector from the initiator which provided the best link quality (e.g. SNR).

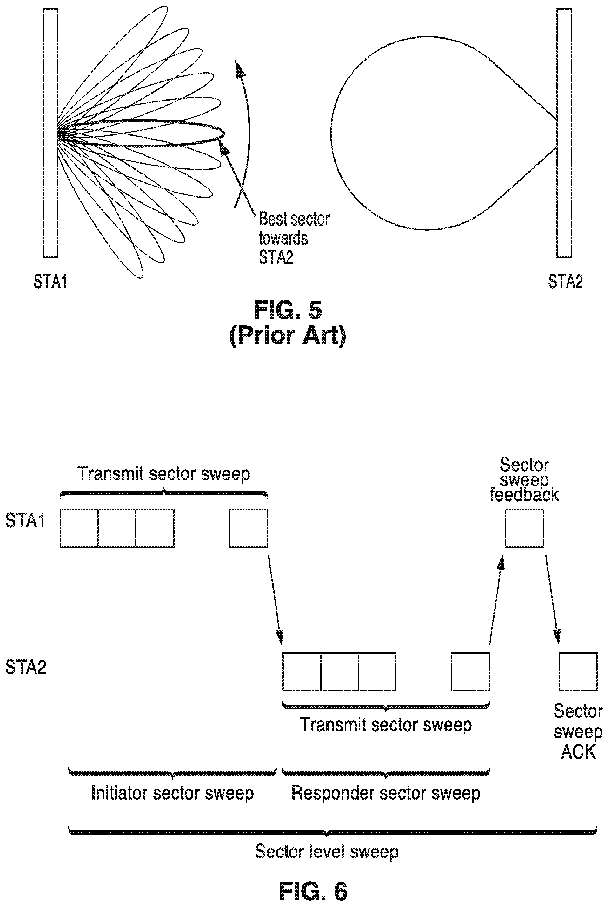

FIG. 5 depicts the concept of sector sweep (SSW) in 802.11ad. In this figure, an example is given in which STA 1 is an initiator of the SLS and STA 2 is the responder. STA 1 sweeps through all of the transmit antenna pattern fine sectors while STA 2 receives in a quasi-Omni pattern. STA 2 feeds back to STA 2 the best sector it received from STA 1.

FIG. 6 illustrates the signaling of the sector-level sweep (SLS) protocol as implemented in 802.11ad specifications. Each frame in the transmit sector sweep includes information on sector countdown indication (CDOWN), a Sector ID, and an Antenna ID. The best Sector ID and Antenna ID information are fed back with the Sector Sweep Feedback and Sector Sweep ACK frames.

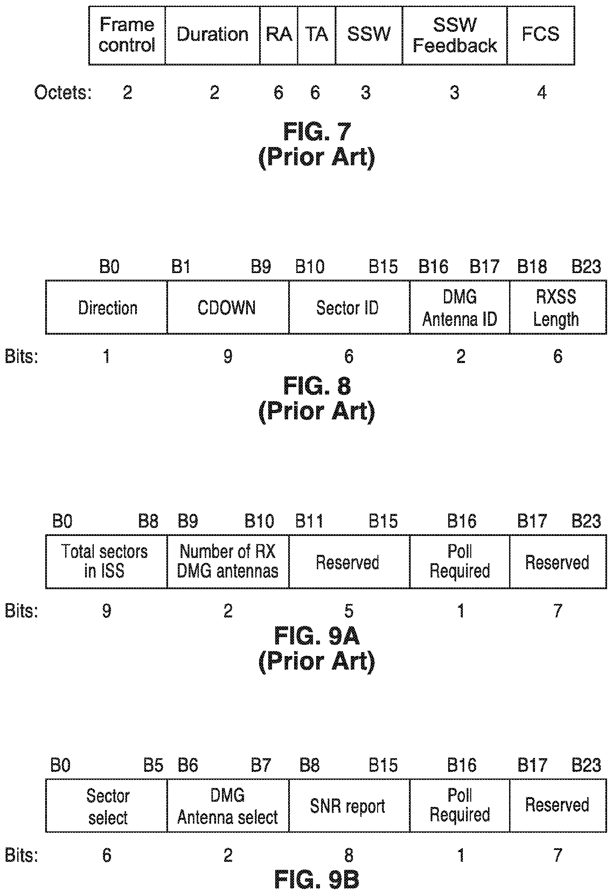

FIG. 7 depicts the fields for the sector sweep frame (an SSW frame) as utilized in the 802.11ad standard, with the fields outlined below. The Duration field is set to the time until the end of the SSW frame transmission. The RA field contains the MAC address of the STA that is the intended receiver of the sector sweep. The TA field contains the MAC address of the transmitter STA of the sector sweep frame.

FIG. 8 illustrates data elements within the SSW field. The principle information conveyed in the SSW field is as follows. The Direction field is set to 0 to indicate that the frame is transmitted by the beamforming initiator and set to 1 to indicate that the frame is transmitted by the beamforming responder. The CDOWN field is a down-counter indicating the number of remaining DMG Beacon frame transmissions to the end of the TXSS. The sector ID field is set to indicate sector number through which the frame containing this SSW field is transmitted. The DMG Antenna ID field indicates which DMG antenna the transmitter is currently using for this transmission. The RXSS Length field is valid only when transmitted in a CBAP and is reserved otherwise. This RXSS Length field specifies the length of a receive sector sweep as required by the transmitting STA, and is defined in units of a SSW frame. The SSW Feedback field is defined below.

FIG. 9A and FIG. 9B depict SSW feedback fields. The format shown in FIG. 9A is utilized when transmitted as part of an Internal Sublayer Service (ISS), while the format of FIG. 9B is used when not transmitted as part of an ISS. The Total Sectors in the ISS field indicate the total number of sectors that the initiator uses in the ISS. The Number of RX DMG Antennas subfield indicates the number of receive DMG antennas the initiator uses during a subsequent Receive Sector Sweep (RSS). The Sector Select field contains the value of the Sector ID subfield of the SSW field within the frame that was received with best quality in the immediately preceding sector sweep. The DMG Antenna Select field indicates the value of the DMG Antenna ID subfield of the SSW field within the frame that was received with best quality in the immediately preceding sector sweep. The SNR Report field is set to the value of the SNR from the frame that was received with best quality during the immediately preceding sector sweep, and which is indicated in the sector select field. The poll required field is set to 1 by a non-PCP / non-AP STA to indicate that it requires the PCP / AP to initiate communication with the non-PCP / non-AP. The Poll Required field is set to 0 to indicate that the non-PCP / non-AP has no preference about whether the PCP/AP initiates the communication.

### 2. Problem Statement

The requirement for STAs in the network to be continually sending discovery signals (beacons or beamforming frames) is a hindrance to efficient spectrum use while adversely impacting latency constraints in the system because transmissions need to be continuously interrupted to send beamforming signals even when they are not needed.

This existing mode of performing discovery also poses problems for the new stations. New STAs attempting to join this network have no information about channel access and scheduling allocation in the channel and the network it is connecting to. The new STA might miss the beamforming frames because it is not aware of when these are to be transmitted (transmit time) or are not ready to receive these frames when they are transmitted. Requiring new STAs to be continuously scanning (passive or active) for beamforming frames results in excess overhead and wasted power. Overall efficiency of the communication can be increased if the STA knows when and where the beamforming frames are transmitted, or are to be transmitted.

### 3. Benefits of Scheduled mmWave Discovery Assistance

A multi-band solution is disclosed to assist new node discovery through other bands (aside from the directional mmW channel). The new node requests discovery assistance (DA) for the intended band of communication (e.g., mmW) through the other band.

The new STA receives information about channel access and channel allocation for the intended band of directional communication through the other band where the node was discovered. The new STA uses this information to synchronize with the discovered node on the intended band of communication and access the channel on the intended band of communication.

### 4. Station (STA) Hardware Configuration

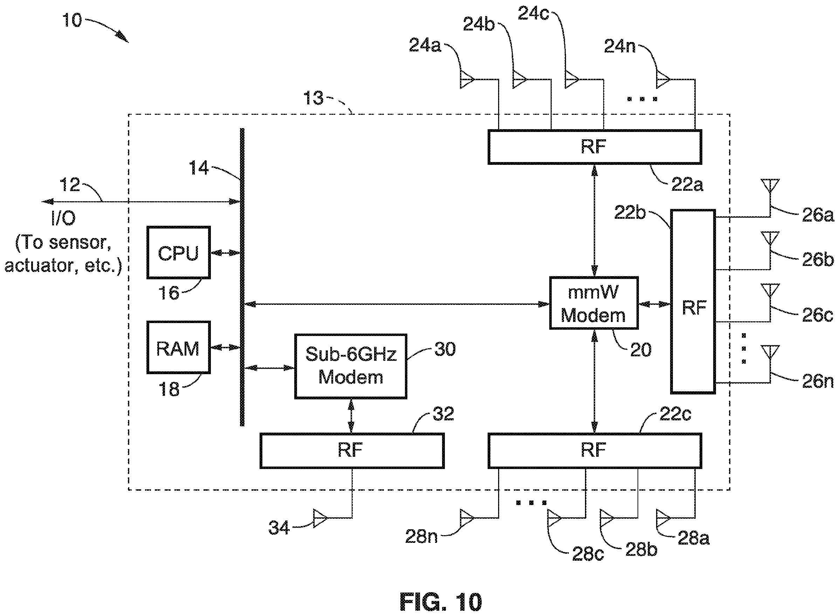

FIG. 10 illustrates an example embodiment 10 of STA hardware configuration showing I/O path 12 into hardware block 13, having a computer processor (CPU) 16 and memory (RAM) 18 coupled to a bus 14, which is coupled to I/O path 12 giving the STA external I/O, such as to sensors, actuators and so forth. Instructions from memory 18 are executed on processor 16 to execute a program which implements the communication protocols, which are executed to allow the STA to perform the functions of a "new STA", or one of the STAs already in the network. It should also be appreciated that the programming is configured to operate in different modes (source, intermediate, destination), depending on what role it is playing in the current communication context. This host machine is shown configured with a mmW modem 20 coupled to radio-frequency (RF) circuitry 22a, 22b, 22c to a plurality of antennas 24a - 24n, 26a - 26n, 28a - 28n to transmit and receive frames with neighboring STAs. In addition, the host machine is also seen with a sub-6 GHz modem 30 coupled to radio-frequency (RF) circuitry 32 to antenna(s) 34.

Thus, this host machine is shown configured with two modems (multi-band) and their associated RF circuitry for providing communication on two different bands. By way of example and not limitation the intended directional communication band is implemented with a mmW band modem and its associated RF circuitries for transmitting and receiving data in the mmW band. The other band, generally referred to herein as the discovery band, comprises a sub-6 GHz modem and its associated RF circuitry for transmitting and receiving data in the sub-6 GHz band.

Although three RF circuits are shown in this example for the mmW band, embodiments of the present disclosure can be configured with modem 20 coupled to any arbitrary number of RF circuits. In general, using a larger number of RF circuits will result in broader coverage of the antenna beam direction. It should be appreciated that the number of RF circuits and number of antennas being utilized is determined by hardware constraints of a specific device. Some of the RF circuitry and antennas may be disabled when the STA determines it is unnecessary to communicate with neighbor STAs. In at least one embodiment, the RF circuitry includes frequency converter, array antenna controller, and so forth, and is connected to multiple antennas which are controlled to perform beamforming for transmission and reception. In this way the STA can transmit signals using multiple sets of beam patterns, each beam pattern direction being considered as an antenna sector.

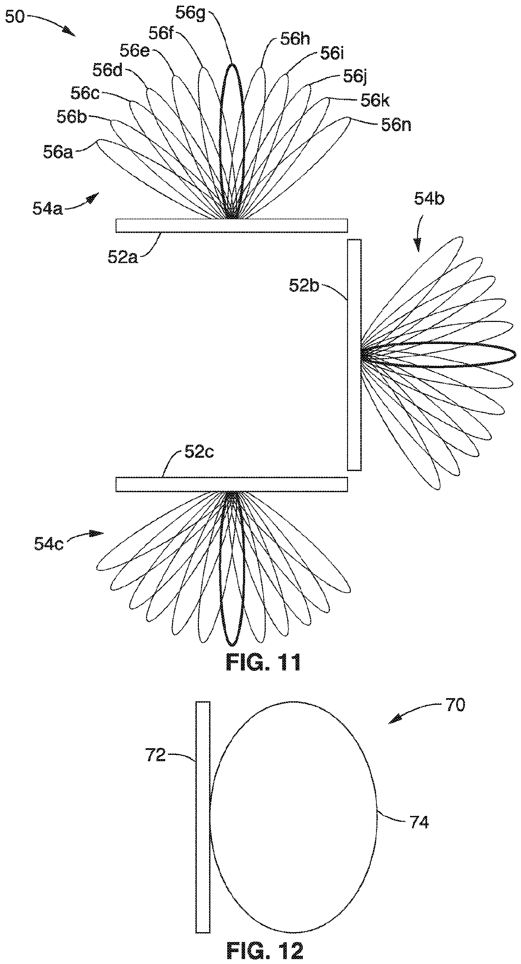

FIG. 11 illustrates an example embodiment 50 of mmWave antenna directions which can be utilized by a STA to generate a plurality (e.g., 36) of mmWave antenna sector patterns. In this example, the STA implements three RF circuits 52a, 52b, 52c and connected antennas, and each RF circuitry and connected antenna generate a beamforming pattern 54a, 54b, 54c. Antenna pattern 54a is shown having twelve beamforming patterns 56a, 56b, 56c, 56d, 56e, 56f, 56g, 56h, 56i, 56j, 56k and 56n ("n" representing that any number of patterns can be supported). The example station using this specific configuration has thirty six (36) antenna sectors, although the present disclosure can support any desired number of antenna sectors. For the sake of clarity and ease of explanation, the following sections generally exemplify STAs with a smaller number of antenna sectors, but is not to be construed as an implementation limitation. It should be appreciated that any arbitrary beam pattern can be mapped to an antenna sector. Typically, the beam pattern is formed to generate a sharp beam, but it is possible that the beam pattern is generated to transmit or receive signals from multiple angles.

Antenna sector is determined by a selection of mmWave RF circuity and beamforming commanded by the mmWave array antenna controller. Although it is possible that STA hardware components have different functional partitions from the one described above, such configurations can be deemed to be a variant of the explained configuration. Some of the mmWave RF circuitry and antennas may be disabled when the STA determines it is unnecessary to communicate with neighbor STAs.

In at least one embodiment, the RF circuitry includes frequency converter, array antenna controller, and so forth, and is connected to multiple antennas which are controlled to perform beamforming for transmission and reception. In this way the STA can transmit signals using multiple sets of beam patterns, each beam pattern direction being considered as an antenna sector.

FIG. 12 illustrates an example embodiment 70 of antenna pattern for the sub-6 GHz modem assumed to use a Quasi-Omni antenna 74 attached to its RF circuitry 72, although other circuitry and/or antennas may be utilized without limitation.

### 5. Multi-band Discovery Assistance

STAs are multi-band capable devices where each STA has access to multiple bands, for example at least two bands in the present discussion. One of these bands simplifies performing node discovery, and is generally referred to herein as the Discovery Band. By way of example and not limitation the discovery band can comprise the sub-6 GHz band in 802.11 WLAN framework. The band where the bulk of communications between nodes is to take place and where it is required to assist in node discovery is called the Communication Band, and in view of its directional capability referred to as the Directional Communications Band.

For each of these bands, discovery band and directional communications band, the present disclosure defines a MAC Layer Management Entity (MLME).

The STA announcing the multi-band capability and the discovery assistance feature on the discovery band is an existing network station (node) which may comprise an Access Point (AP), Basic Service Set (BSS) STA, or other STA which is already connected to the network.

The announcement is performed through transmitting a beacon or any message frame, (for example a beacon, probe request, announcement frame or any other frame) on the discovery band that carried a multi-band element. The multi-band element carries information about the other band over which the STA will be primarily communicating. The multi-band element should indicate that over the discovery band the STA is offering discovery assistance for the communications band.

The new multi-band capable STA(s) start scanning the discovery band (for example 2.4 or 5 GHz WiFi band). If the new STA receives a beacon frame, for example with multi-band element and discovery assistance enabled in the intended communication band, the new STA requests assistance.

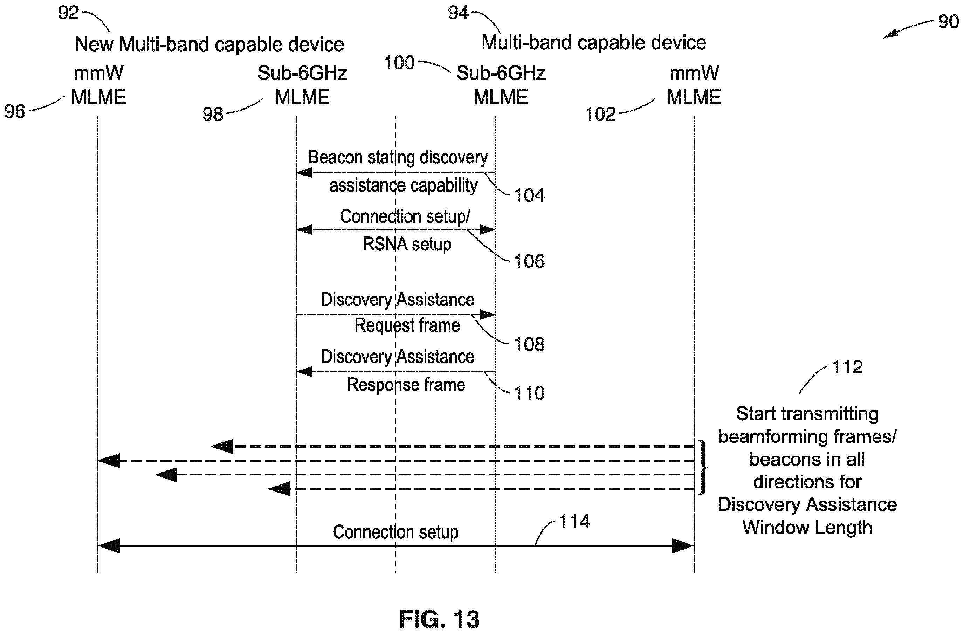

The new STA requests assistance from the discovered STA by exchanging assistance request and assistance response information elements. These elements can be added to any frames exchanged between the discovered STA and the new STA. For example these elements can be exchanged through a number of request-response interactions, such as exemplified by FIG. 13 through FIG. 17.

FIG. 13 illustrates an example embodiment 90 of assisted discovery utilizing Assistance Request and Assistance response frames, showing interaction between a new multi-band capable device 92 and an existing multi-band capable device 94 which is already connected to the network. Each of these devices is shown with mmW MLME 96, 102, and discovery band MLME, exemplified as a sub-6 GHz MLME 98, 100. In the exchange, a beacon 104 is sent over the sub-6 GHz band from the existing STA states discovery assistance capability. A connection setup / RSNA authentication setup is performed 106. Then the new STA sends a discovery assistance request frame 108 over the sub-6 GHz band to the existing STA, which responds by sending a discovery assistance response frame 110. After the discovery process, then the existing station starts beamforming 112 with frames/beacons in all directions for the length of the discovery assistance window. After beamforming, then a connection setup process 114 is performed to connect the new STA into the network. Thus it is seen that the new STA might associate with the discovered STA on the Discovery band prior to exchanging the assistance request and response elements to secure the link between the two STAs.

The Assistance Request and Assistance Response information elements contain the following information: (a) STA address; (b) information about the directional communication band, also referred to as Directional Multi-Gigabit (DMG) capability information; (c) antenna capability information; (d) directional communication band information; (e) communication band scanning mode request and response; (f) discovery assistance window request and response; and (g) new node dwelling time request and response, and (h) Assistance request response. It should be noted that the assistant request and assistant response are fields in the assistance request and assistance response elements that define the type of request and the response to that request.

In the next section the present disclosure utilizes Fast Session Transfer (FST) frame as an example of a frame to carry the DA information. All other frames or any similar frames (messages) can be similarly utilized as long as the information described above can be exchanged.

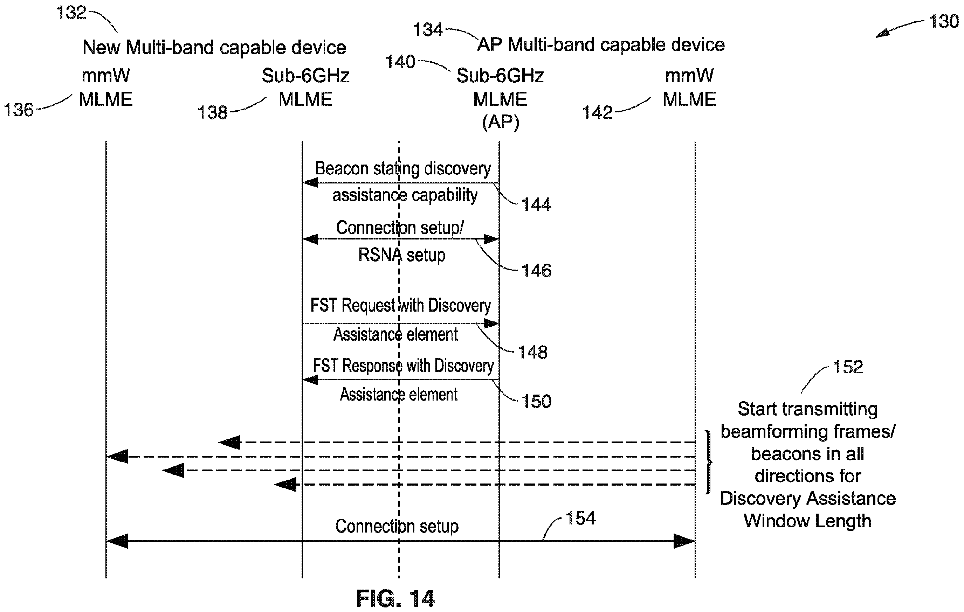

FIG. 14 illustrates an example embodiment 130 of assisted discovery utilizing Fast Session Transfer (FST) Request and FST Response Frames, showing interaction between a new multi-band capable device 132 and an Access Point (AP) multi-band capable device 134 which is already connected to the network. Each of these devices is shown with mmW MLME 136, 142, and discovery band MLME, exemplified as a sub-6 GHz MLME 138, 140. In the exchange, a beacon 144 is sent over the sub-6 GHz band from the existing STA which states discovery assistance capability. A connection setup / RSNA (authentication) setup is performed 146. Then the new STA sends a Fast Session Transfer (FST) request 148 having a discovery assistance request element over the sub-6 GHz band to the AP 134, which responds by sending an FST response with discovery assistance element 150. After the discovery process, then the AP station starts beamforming 152 with frames/beacons in all directions for the length of the discovery assistance window. After beamforming, then a connection setup process 154 is performed to connect the new STA to the AP of the network. It should be appreciated that the figure and description, herein and other embodiments, also generally applies to any station, because a station that is part of the same BSS, or a different BSS, can still utilize these procedures.

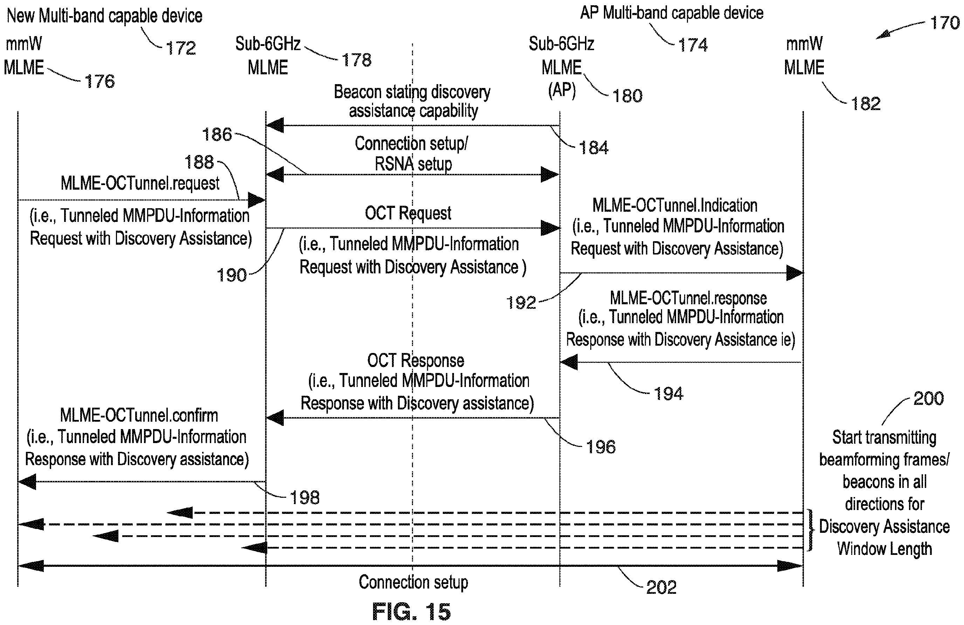

FIG. 15 illustrates an example embodiment 170 of assisted discovery utilizing Information Request or Information Response frames through On Channel Tunneling (OCT) Request and Response frames. Interaction is seen between a new multi-band capable device 172 and an Access Point (AP) multi-band capable device 174. Each of these devices is shown with mmW MLME 176, 182, and discovery band MLME, exemplified as a sub-6 GHz MLME 178, 180. In the exchange, a beacon 184 is sent over the sub-6 GHz band from the AP stating discovery assistance capability. A connection setup / RSNA (authentication) setup is performed 186. Then the new STA performs an MLME-OCTunnel request 188 from its mmW MLME 176 to the sub-6 GHz MLME 178, the request contains a request for discovery assistance. New STA sub-6 GHz MLME 178 communicates an OCT Request 190, with tunneled MMPDU-information request with discovery assistance. This is received at the AP, which generates a MLME-OCTunnel indication 192 (tunneled MMPDU information response with discovery assistance. The AP mmW 182 performs the request and communicates a MLME-OCTunnel response 194 containing tunneled MMPDU information in response to the discovery assistance request. In response to this, an OCT-Response 196 is sent over the sub-6 GHz MLME of the AP to the sub-6 GHz MLME of the new STA, which sends an MLME-OCTunnel confirmation 198 to its mmW MLME. After the discovery process, then the AP station starts beamforming 200 with frames/beacons in all directions for the length of the discovery assistance window. After beamforming, then a connection setup process 202 is performed to connect the new STA to the network AP.

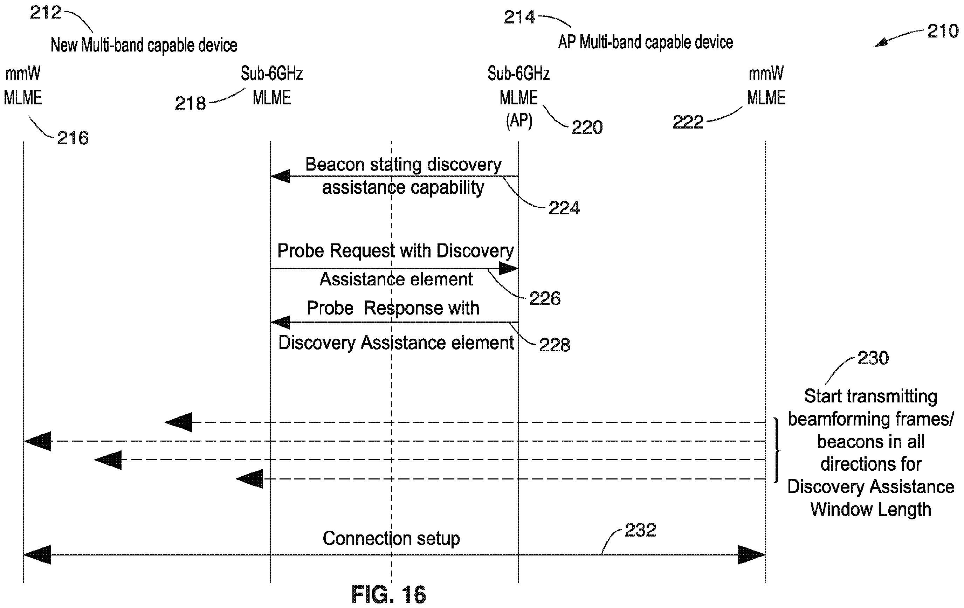

FIG. 16 illustrates an example embodiment 210 of assisted discovery utilizing Probe Request and Probe Response frames, showing interaction between a new multi-band capable device 212 and an Access Point (AP) multi-band capable device 214 on the network. Each of these devices is shown with mmW MLME 216, 222, and discovery band MLME, exemplified as a sub-6 GHz MLME 218, 220. In the exchange, a beacon 224 is sent over the sub-6 GHz band from the AP which states a discovery assistance capability. A probe request 226 with discovery assistance element is sent from the new STA to the AP. Then the AP responds by sending a probe response with discovery assistance element 228. After the discovery process, then the AP station starts beamforming 230 with frames / beacons in all directions for the length of the discovery assistance window. After beamforming, then a connection setup process 232 is performed to connect the new STA to the network AP.

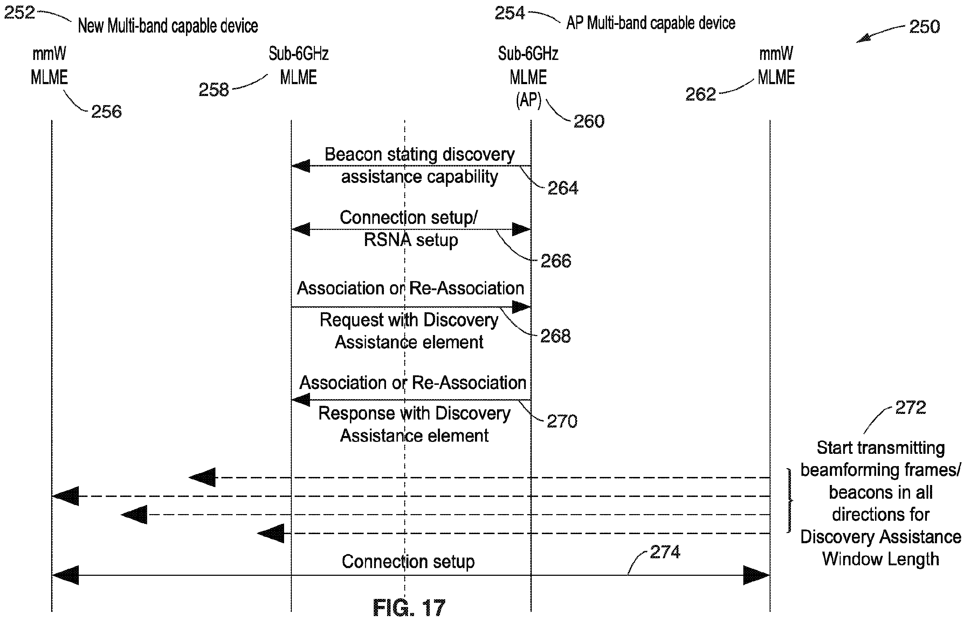

FIG. 17 illustrates an example embodiment of Association or Re-association Request or Response frames, showing interaction between a new multi-band capable device 252 and a network AP device 254. Each of these devices is shown with mmW MLME 256, 262, and discovery band MLME, exemplified as a sub-6 GHz MLME 258, 260. In the exchange, the AP sends a beacon (or other frame) 264, which includes discovery assistance capability information, over the sub-6 GHz band. A connection setup / RSNA (authentication) setup 266 is performed. Then the new STA sends an association or re-association request 268 containing a discovery assistance element over the sub-6 GHz band to the AP, which responds by sending a association or re-association response 270 containing a discovery assistance element. After the discovery process, then the AP starts beamforming 272 with frames/beacons in all directions for the length of the discovery assistance window. After beamforming, then a connection setup process 274 is performed to connect the new STA into the network. Thus it is seen that the new STA might associate with the AP on the Discovery band prior to exchanging the assistance request and response elements to secure the link between the two STAs.

### 6. Discovery Assistance Procedure

### 6.1. BSS node Offering Assistance

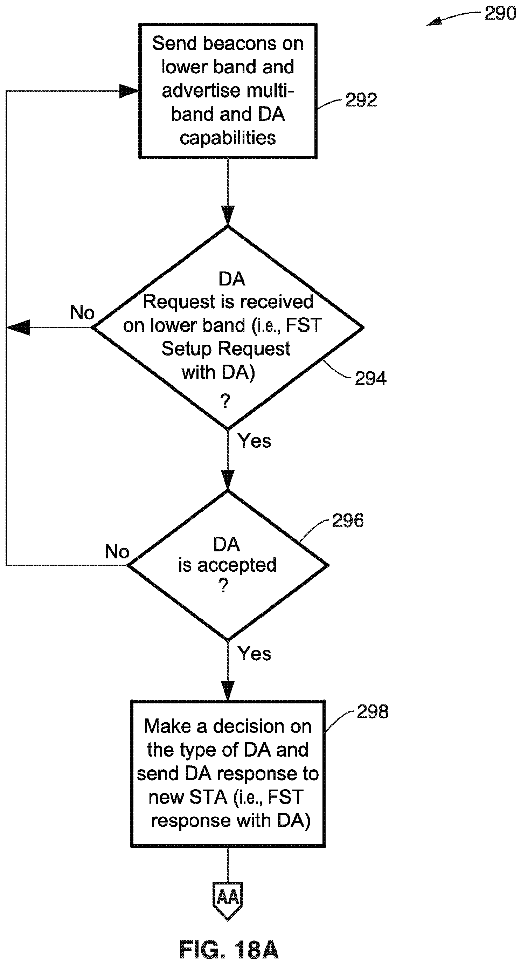

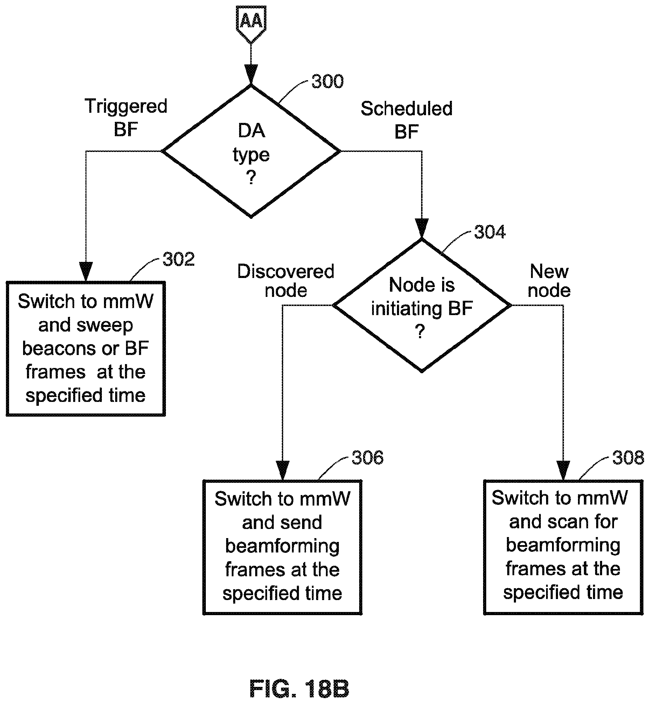

FIG. 18A and FIG. 18B illustrate an example embodiment 290 of a BSS node offering discovery assistance to new STAs. In the flow diagram the BSS indicates the availability of assistance by broadcasting 292 on the discovery band (lower band, such as sub-6 GHz) a multi-band element with indication of discovery assistance element on frames, such as for example beacons or any other desired frames, for instance probe response or association responses sent directly to the new STA in the network.

The BSS STA receives 294 the discovery assistance request from a STA that joined its lower band BSS. This request is received for example through an FST setup request frame (or other beacon/message frame) with DA information element attached to it, or other frames in a similar manner as previously described.

If the request for directory assistance is not accepted, the BSS STA ignores the request, with execution shown returning to block 292. Otherwise if the BSS STA decides on assisting the new STA, then block 298 is reached. In block 298 a decision is made on the type of discovery assistance to be provided, such as by performing beamforming or enabling discovery on the mmW band. If the discovery assistance request is accepted, the discovered BSS STA sends for example a FST setup response with discovery assistance element. The discovery assistance element contains all information to guide the new STA on whether the DA request is accepted and how the discovery assistance is performed if accepted.

The BSS STA has the option at block 300 to conduct the discovery assistance in either of two methods: beacon sweeping 302, or scheduled beamforming (BF) 304.

### 6.1.1. Beacon Sweeping (Triggered BF)

If beacon sweeping is selected, then block 302 of FIG. 18B is reached with the BSS STA switching to the directional communications band (e.g., mmW) and commencing beacon sweeping, for example it might start sweeping beacons during the Beacon Transmission Interval (BTI). The transmission of the beacon can be scheduled after some beacon intervals according to the AP decision. The beacon sweeping can be full exhaustive beacon sweeping in one BI or it can be partial beacon sweeping where the beacon transmission is fragmented. The details of the beacon sweeping schedule is included in the DA element.

### 6.1.2. Scheduled Beamforming (Scheduled BF)

If scheduled beamforming is selected, then block 304 is reached in FIG. 18B with the BSS STA scheduling the beamforming, for example it might schedule a period of time in the DTI to exchange the beamforming frames with the new STA. The beamforming exchange can be initiated by the BSS STA or the new STA. If at block 304 it is determined that the discovered node is to initiate BF, then block 306 is reached. In block 306, the BSS STA switches to the mmW and starts offering the discovery assistance as conveyed in the DA element and the other elements. The details of the scheduled beamforming is included in the DA element and additional elements that can be attached to the Discovery assistance response frame (FST setup response in this example) like the extended schedule element, Time Division Duplex (TDD) Service Period (SP) slot structure element and the TDD SP slot schedule element.

If at block 304 it is determined that the new node is to initiate BF, then block 308 is reached with the new node switching to the communications band (i.e., mmW) and scanning for beamforming frames at the specified time.

### 6.2. New STA Requesting Assistance

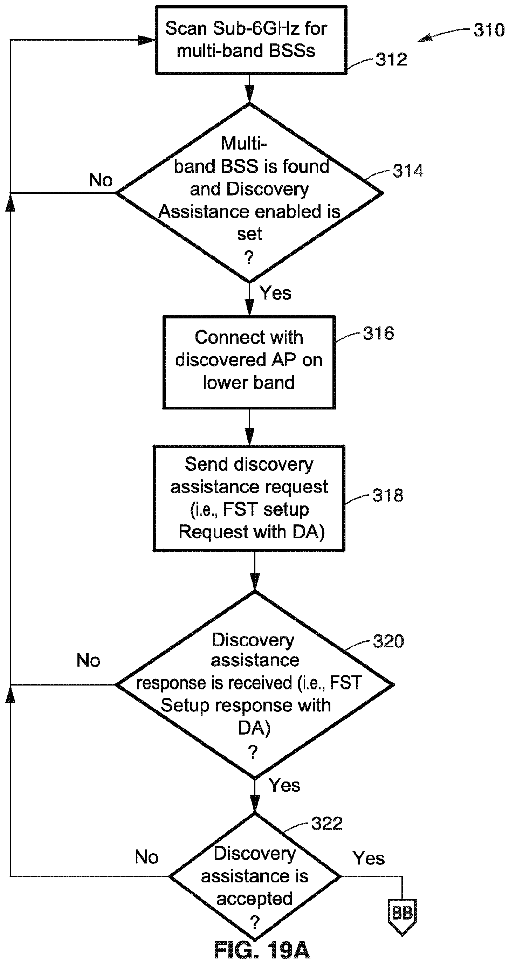

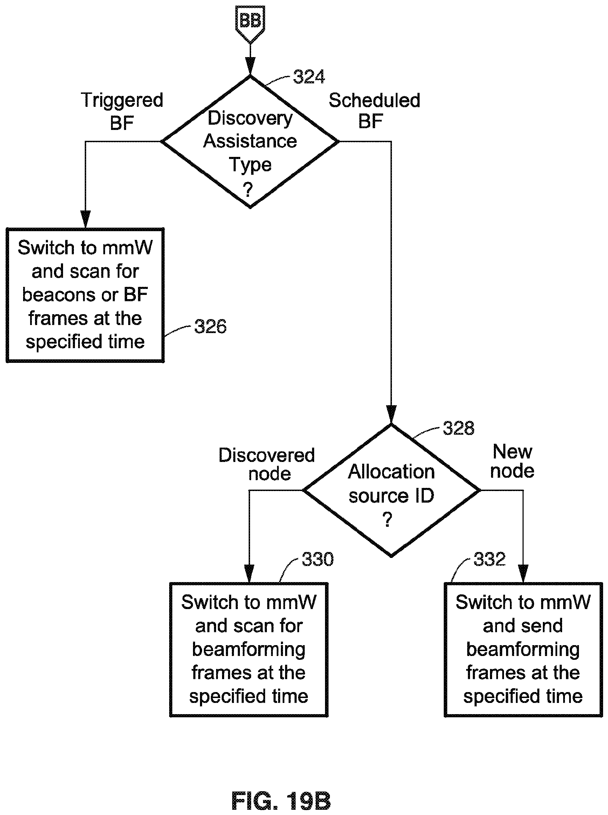

FIG. 19A and FIG. 19B illustrate an example embodiment 310 of a new node requesting discovery assistance from the network. A new STA scans the discovery band (e.g., sub-6 GHz) and discovers 314 the BSS STA beacon with multi-band element and DA indication. The new STA connects 316 to the BSS STA (AP) for the purpose of requesting discovery assistance

A new STA that is connected to the BSS STA on the discovery band (lower band such as sub-6 GHz band) sends a DA request 318 within a frame sent to the AP, for example through sending a FST setup request frame and attaching the Discovery assistance element to it.

A check is made at block 320 if the new STA receives the discovery assistance response from the BSS STA. Although any number of different frames can be used for passing discovery request and response information, this example considers the DA response to be a FST Setup Response frame with the DA element attached to it. If a discovery assistance response is not received, then execution moves back to block 312 in performing discovery channel scanning. Otherwise, if the DA response is received, execution moves to block 322 which checks that response to determine if the DA request was accepted. If the DA request was not accepted, then execution is again seen returning to block 312. Thus, if the DA request is rejected, the new STA can look for a new BSS STA to request assistance from, or resend the DA request to the same BSS STA. Otherwise, with the DA request accepted, execution moves to block 324 of FIG. 19B which determines discovery assistance type. In this next stage of DA, the new STA switches to the mmW band to receive the DA offered by the BSS STA.

Since the new STA DA request was accepted, the new STA obtains information about the offered assistance from the attached DA element, including the type of assistance offered. The Discovery assistance can be in two types: Beacon Sweeping 326 or Scheduled Beamforming 324.

### 6.2.1. Beacon Sweeping (Triggered BF)

If beacon sweeping is the type of assistance provided, then block 326 of FIG. 19B is reached, and the new STA obtains information from the DA element on the time where the beacon is starting and the time and frequency of sweeping the beacons. The new STA uses this information to scan the channel at the time of transmission to look for the beacons.

### 6.2.2. Scheduled Beamforming

If scheduled beamforming is the type of assistance provided, then block 328 of FIG. 19B is reached, which determines how the scheduled BF is to be performed. The DA element informs the new STA of the type of DA and the details of the Discovery Assistance scheduled period is preferably contained in the extended schedule element, the TDD slot structure element and the TDD schedule element attached to the DA response frame (e.g., FST setup response) if available. If the discovered node will be sending the beamforming frames, then block 330 is reached with the new station scanning for beamforming frames at the specified time. Otherwise, if the new node will be sending the beamforming frames, then block 332 is reached, and the new node switches to the mmW and sends beamforming frames at the specified time. Thus, in either case, it is seen that the new STA switches to the mmW and starts receiving discovery assistance as conveyed in the DA element and the other elements.

### 7. Beamforming Synchronization

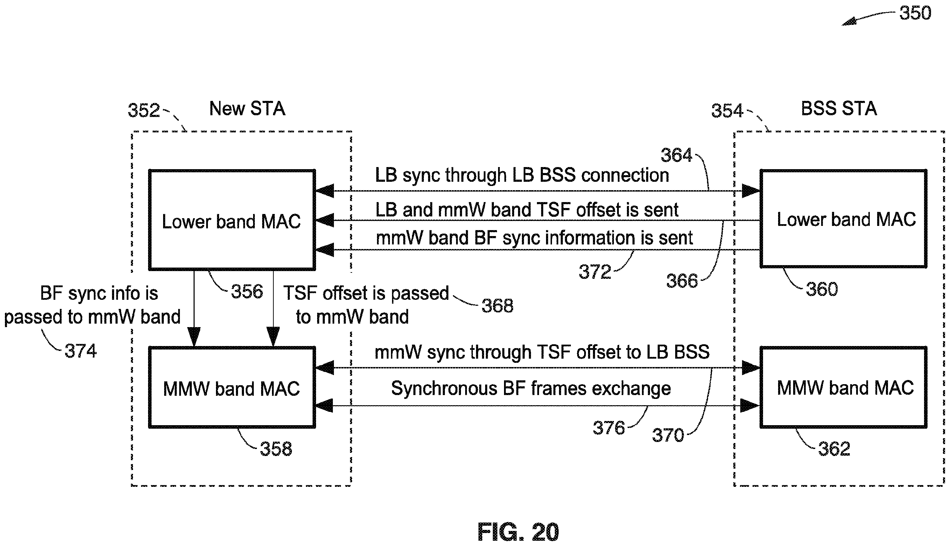

FIG. 20 illustrates an example embodiment 350 of beamforming multi-band synchronization between new STA 352 and BSS STA 354. Each of the STAs is shown with a discovery band (lower band) MAC 356, 360, and a mmW band MAC 358, 362. The discovery band (lower band) of the new STA synchronizes 364 with the discovery band (lower band) of the BSS STA once it discovers the BSS STA on the lower band for a connection and associates to it. The BSS STA forwards 366 the Timing Synchronization Function (TSF) offset of the discovery band (lower band) BSS and the mmW band BSS on the discovery band (lower band). The TSF offset information is forwarded through the multi-band element. The lower band MAC (discovery band MAC) of the new STA forwards 370 the TSF offset to the mmW band MAC. The mmW band MAC of the new STA and the BSS STA are considered synchronized after the TSF offset information is used to synchronize them.

The BSS STA forwards the BF synchronization information 372 (start time, end time, beamforming frames transmission style and / or scheduling information) of the mmW beamforming process to the discovery band (lower band) MAC of the new node on the lower band. The BF synchronization information is forwarded through the element associated with the FST setup response frame, such as discovery assistance element, scheduling element, slot structure element and slot schedule element.

The beamforming synchronization information is passed 374 to the mmW MAC of the new STA from the lower band MAC of the new STA. Synchronous beamforming is performed 376 on the mmW band using the information exchanged on the lower band.

By adopting the above operations, the new STA can obtain timing information on when the beamforming is scheduled on a mmW band, solely relying on the signal exchanged in the lower band. Using the timing information, the new STA may activate its mmW transmitter and / or receiver at the indicated timing.

### 8. Information Elements Definition

### 8.1. Discovery Assistance Information Element

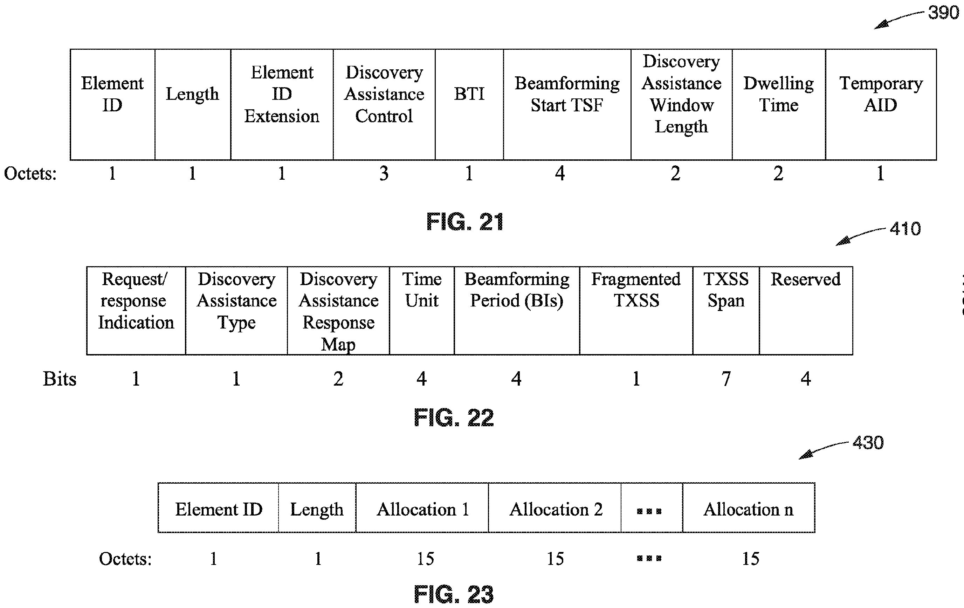

FIG. 21 and FIG. 22 illustrate an example embodiment 390, 410, of the Discovery Assistance information element, and Control Field, containing the necessary information for triggering the beamforming process.

In FIG. 21, the Element ID and Length fields define the ID of the element and its length. The element ID extension with the element ID defines the ID of the element and indicates the type of the element. The Discovery Assistance Control field is shown in FIG. 22 described below. The BTI field represents the time interval in Time Units between the start of the first DMG Beacon frame transmission during the assisted discovery window in a beacon interval to the end of the last DMG Beacon frame transmission by the STA in the same beacon interval.

The Beamforming Start TSF field represents the time on which the discovery assistance will commence. This can represent the start of the DMG beacon sweep, the Time Domain Duplex (TDD) Service Period (SP) beamforming or the expected time for the new STA to start active scanning. In at least one embodiment, the value can be contained in the lower four octets of the TSF of the DMG BSS at the time the beamforming frame transmissions start.

The Discovery Assistance Window Length indicates the time in Time Units that the discovered STA is offering Discovery assistance. During this time, the discovered STA is sending beamforming beacons or frames to the new STA, or listening to the new STA for beamforming frames or probes.

The Dwelling Time field indicates the recommended time for the new STA to sweep the received antenna pattern in scanning for beamforming or discovery signal in microseconds.

The Temporary AID (assistance ID) field contains a value assigned by the BSS STA to the new STA to represent a temporary AID for the new STA. The new STA uses this value to identify scheduled periods by the BSS STA to the new STA in case the extended schedule element is provided.

In FIG. 22, the subfields of the discovery assistance control field are seen. The Request / Response indication subfield is used to inform the receiving node whether the frame containing this element represents a request for discovery assistance (request element) or a response to a discovery assistance request that is sent from the receiving node (response element). If this field is set to a request, the receiving node triggers the discovery assistance protocol upon receiving this element. If the field is set to response, then the receiving node extracts the response information to receive discovery assistance from the transmitting node.

The Discovery Assistance Type subfield indicates the type of discovery assistance, as to whether it is through scheduled beamforming frame transmission or through triggered beamforming. This subfield represents a request if the subfield is in a request element and represents a response if the subfield is in a response element. When the subfield is set to triggered beamforming, the discovery assistance is performed through triggering the beamforming signal at a specified time (Beamforming Start TSF), this can be in the form of beacon sweeping or TDD-beamforming. When the subfield is set to scheduled beamforming, the discovery assistance is scheduled in the attached extended schedule element.

The Discovery Assistance Response Map field specifies the response of the discovery assistance request. The possible values of the Discovery Assistance Response Map field for this example embodiment are as follows. State 00: Reject a discovery assistance request on the band defined by the Band ID, operating class, channel number and BSSID, or other reason. The STA receiving this element will have to abort the discovery assistance procedure and optionally restart it again. State 10: Accept a discovery assistance request on the band defined by the Band ID, operating class, channel number and BSSID. The STA receiving this information element processes the information in the element and continues on the discovery assistance procedure, which includes transmitting or receiving beamforming frames or beacons. State 01: Reject a discovery assistance request on the band defined by the Band ID, operating class, channel number and BSSID, or other unauthorized access reason. The STA receiving this element will have to abort the discovery assistance procedure and optionally restart it again. State 11: Reject discovery assistance feature for the band defined by the Band ID, operating class, channel number and BSSID, or for reason of a different BSS suggested. The STA receiving this element aborts the discovery assistance procedure and optionally can restart it again.

The Time Unit subfield indicates the time unit for the next beamforming frame exchange field. In one example embodiment the time units for each value are given as follows: 0 = 1 µs ; 1 = 100 µs ; 2 = 400 µs and values 3-15 are presently reserved. The new STA uses this field to know the time unit of the next beamforming frame.

The Beamforming Period (in BI units) subfield indicates the number of beacon intervals (Bls) or TDD slots following the Time to next beamforming frame during which the DMG Beacon frame or beamforming frames will not be present. The discovered STA transmits beacons or beamforming frames every Beamforming Period. The discovered STA might expect beamforming frames or Probe Requests from the new STA every Beamforming Period.

The Fragmented Transmission Sector Sweep (TXSS) subfield is set to 1 to indicate the TXSS is a fragmented sector sweep and is set to 0 to indicate the TXSS is a complete sector sweep. This is to inform the STA that the beamforming or beacon sweep is spanning multiple beacon intervals in case of passive scanning.

The TXSS Span subfield indicates the number of beacon intervals is required for the STA sending the DMG Beacon frame to complete the TXSS phase. This subfield is always greater than or equal to 1. The new STA uses this information to determine the end of the scanning process in a quicker manner than if no beamforming frame was received for the TXSS span period, while in at least some instances this should increase the efficiency of the beamforming process.

### 8.2. Extended Schedule element

FIG. 23 through FIG. 25 illustrate an example embodiment 430, 450, 470 of the Extended Schedule element, and its Allocation field and Allocation control subfield. The Extended Schedule element contains information about the allocations in the mmW band. The new STA uses this element to extract information about the allocations on the mmW band and if any other STA is allocated to it for discovery. The new STA might make a decision about joining or not joining the BSS based on the information in the extended schedule element. The extended schedule information can have similar structure as the one defined in 802.11 WLAN standards.

In FIG. 23 the Extended Schedule element is seen with an Element ID giving the identification (element type identifier) and length of the element, followed by a number of Allocation fields.

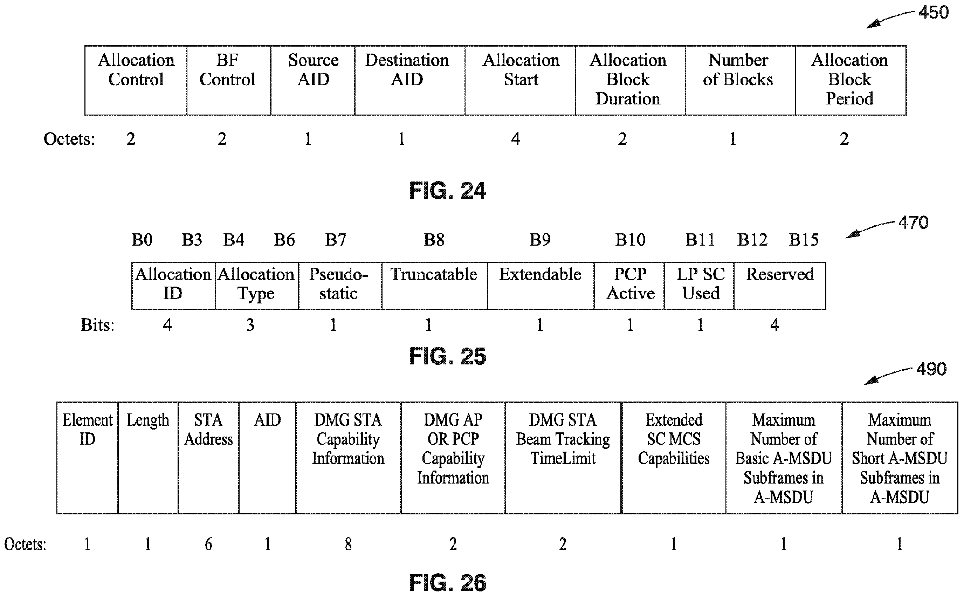

In FIG. 24 the Allocation field from FIG. 23 is exemplified as having the following fields. An Allocation Control subfield is shown whose fields are shown in FIG. 25. The BF Control contains information about the type of beamforming training to carry in the allocated slot (Initiator TXSS or Responder TXSS) and the number of training sectors used for training from initiator and or responder and the total number of RX DMG antennas.

The Source and Destination AID represent the ID for the source and Destination. If the source is the discovered STA and the destination is the new STA, the new STA performs passive discovery. If the source ID is the new STA and the destination ID is the discovered STA the new STA performs active discovery. The new STA can get a temporary AID from the BSS STA since the AID is not yet assigned to the station on the mmW band. Alternatively, the BSS STA assigns a reserved value of the AID to the new STA. In this case, an AID value of 0 (which is reserved) is used for this transaction.

The Allocation start time indicates the time at which the allocation starts. The Allocation Block Duration, the Number of Blocks and the Allocation Block Period indicates the allocation period and if it will repeat in the same BI after the Allocation Start. Additional fields can be utilized in the same context as defined in the WLAN 802.11 standard.

In FIG. 25 an example of the Allocation Control field seen in FIG. 24 is depicted with the following subfields. The Allocation ID is defined to indicate a unique ID for this allocation. The Allocation Type subfield is set to the type of channel access regarding whether this allocation is CBAP, SP or TDD SP. The Pseudo-static subfield can be used to indicate that the allocation is static and that the allocation is valid for the length of the Discovery Assistance Window Length.

The Truncatable subfield indicates whether the source DMG STA and destination DMG STA can request SP truncation for an SP allocation. The Extendable subfield indicates whether that the source DMG STA and destination DMG STA can request SP extension for an SP allocation. The PCP Active subfield indicates whether the PCP is available to transmit or receive during the CBAP or SP when PCP is in active mode. The LP SC Used indicates if the low-power SC mode is used in this SP.

### 8.3. DMG capability element

FIG. 26 illustrates an example embodiment 490 of a directional communication band (DMG) capability information element, providing information about DMG capabilities (directional communications band such as the described mmW band) of the STA on the mmW band. The new STA and BSS STA might exchange their DMG capabilities with each other to be aware of each other's capabilities and optimize the discovery and beamforming process.

The new STA can send the DMG capability information element to the BSS STA on the lower band where it can communicate with the BSS STA. By way of example and not limitation, the DMG capability information element can be sent with the FST Setup Request frame (or other communicated frames) to indicate the DMG capabilities of the new STA on the mmW band.

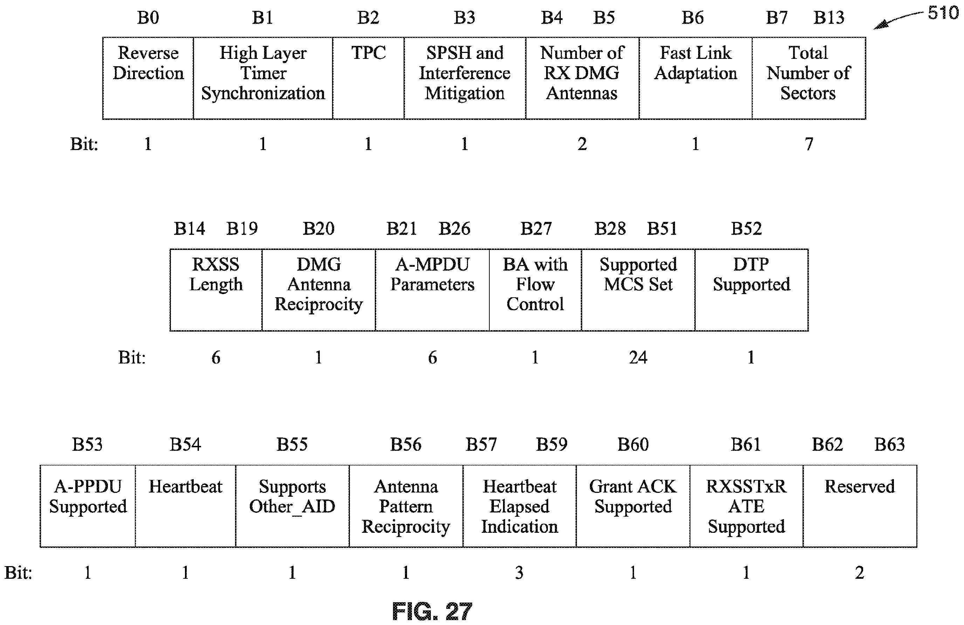

Conversely, the BSS STA can send the DMG capability information element to the new STA on the discovery band (lower band) to indicate where it can communicate with the BSS STA. By way of example and not limitation, the DMG capability information element can be sent with the FST Setup Response frame and indicates the DMG capabilities of the BSS STA on the mmW band. The DMG capability information element includes the following fields of interest in addition to other fields. An element ID and length as described for other messages. A STA address which contains the MAC address of the STA. An AID field contains the AID assigned to the STA by the AP or PCP, the new STA will have this field reserved. A DMG STA capability Information field, whose fields and subfields are described in FIG. 27.

The following fields are described in the WLAN 802.11 specification, and included herein only for convenience. The AP or PCP Capability information defines some capabilities of the PCP or the AP. The DMG STA Beam Tracking TimeLimit is used to set the value for the time limit for beamtracking. The Extended SC MCS Capabilities field advertises the support of the STA for some MCSs values. The Maximum number of basic A-MSDU subframes in A-MDSU indicates the maximum number of Basic A-MSDU subframes in an A-MSDU that the DMG STA is able to receive from another DMG STA. The Maximum number of short A-MSDU subframes in A-MDSU indicates the maximum number of Short A-MSDU subfields in an A-MSDU that the DMG STA is able to receive from another DMG STA.

FIG. 27 illustrates an example embodiment 510 of directional communications band (DMG) STA capability information field formats. It should be noted that the element is shown arbitrarily divided into sections merely for the sake of fitting the width of the drawing page, and that other fields may be included in the same context as defined in the WLAN 802.11 standard.

The following fields are described in the WLAN 802.11 specification, and included herein only for convenience. The Reverse Direction indicates if the STA supports reverse direction transmission. The Higher Layer Timer Synchronization subfield indicates if the STA supports Higher Layer Timer Synchronization. The TPC subfield indicates if the STA supports transmit power control. The SPSH (spatial sharing) and Interference Mitigation subfield indicates if the STA is capable of performing the function of spatial sharing and Interference Mitigation.

The Number of RX DMG Antennas subfield (B4 - B5) indicates the total number of receive DMG antennas of the STA. The Fast Link Adaptation subfield indicates if the STA supports the fast link adaptation procedure as defined in WLAN 802.11 standard, and included here only for convenience. The Total Number of Sectors subfield (B7 - B13) indicates the total number of transmit sectors the STA uses in a transmit sector sweep combined over all DMG antennas, including any LBIFS required for DMG antenna switching

The value represented by the RXSS Length subfield (B14 - B19) specifies the total number of receive sectors combined over all receive DMG antennas of the STA, including any LBIFS required for DMG antenna switching

The DMG Antenna Reciprocity (B20) subfield is set to 1 to indicate that the best transmit DMG antenna of the STA is the same as the best receive DMG antenna of the STA and vice versa. Otherwise, this subfield is set to 0.

The following fields are described in the WLAN 802.11 specification, and included herein only for convenience. The A-MPDU parameters define the parameters for the A-MPDU. The BA with Flow Control indicates if the STA supports block ACK with flow control. The supported MCS set indicates which MCSs a STA supports. The DTP supported indicates if the STA supports dynamic tone pairing. The A-PPDU Supported subfield indicates if the STA supports A-PPDU aggregation. The Supports Other AID subfield indicates how the STA sets its AWV configuration.

The Antenna Pattern Reciprocity subfield is set to 1 to indicate that the transmit antenna pattern associated with an AWV is the same as the receive antenna pattern for the same AWV. Otherwise, this subfield is set to 0.

The following fields are described in the WLAN 802.11 specification, and included herein only for convenience. The Heartbeat Elapsed Indication subfield indicates if the STA expects to receive a heartbeat frame. The Grant ACK supported indicates if the STA is capable of responding to a Grant frame with a Grant ACK frame. The RXSS TxR ATE Supported indicates if the STA can perform an RXSS with SSW frames transmitted at MCS 1 of the DMG SC modulation class. Currently there are Reserved fields (B61 - B62).

### 8.4. The Multi-band Element

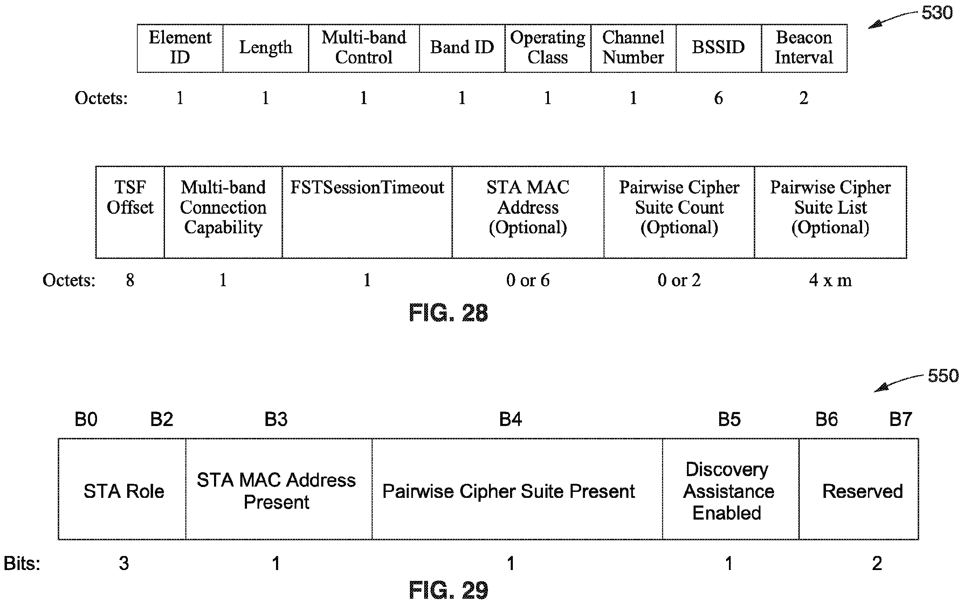

FIG. 28 and FIG. 29 illustrate example embodiments 530, 550 of the format for the Multi-band element and its Control field. The Element ID and its Length are standard to each of the information elements. The multi-band control field is as defined in IEEE 802.11 standard document, having subfields shown in FIG. 29. The Band ID, Channel number and BSSID indicates the channel and band and BSSID that the STA is supporting.

The Band ID field provides the identification of the frequency band related to the Operating Class and Channel Number fields. Operating Class indicates the channel set for which the Multi-band element applies. The Channel Number field is set to the number of the channel the transmitting STA is operating on or intends to operate on. The BSSID field specifies the BSSID of the BSS operating on the channel and frequency band indicated by the Channel Number and Band ID fields. The Beacon Interval field specifies the size of the beacon interval for the BSS operating on the channel and frequency band indicated by the Channel Number and Band ID fields.

TSF Offset indicates the time offset of the TSF of the BSS of which the transmitting STA is member on the channel indicated in this element relative to the TSF of the BSS corresponding to the BSSID of the MPDU in which this element is transmitted. The node receiving this element can use this value with the beacon interval to synchronize with BSSID on the channel indicated in this element.

The Multi-band Connection Capability field indicates the connection capabilities supported by the STA on the channel and band indicated in this element. The FST Session Timeout field is used to indicate the timeout value for FST session setup protocol. The STA MAC Address field contains the MAC address that the transmitting STA uses. The Pairwise Cipher Suite Count field indicates the number of pairwise cipher suite selectors that are contained in the Pairwise Cipher Suite List field. The Pairwise Cipher Suite List field contains a series of cipher suite selectors that indicate the pairwise cipher suites.

In FIG. 29 the subfields of the multi-band control field are the following. The STA Role subfield specifies the role the transmitting STA plays on the channel of the operating class indicated in this element. The STA MAC Address Present subfield indicates whether the STA MAC Address subfield is present in the Multi-band element. The Pairwise Cipher Suite Present subfield indicates whether the Pairwise Cipher Suite Count field and the Pairwise Cipher Suite List field are present in the Multi-band element.

Perhaps of most interest to DA protocol is the Discovery Assistance enabled subfield which indicates that the STA supports the discovery assistance protocol.

Other fields may be incorporated, for example as in the same context as defined in the WLAN 802.11 standard.

### 8.5. FST Setup Request Frame Format

An example embodiment for the FST Setup Request frame is: 1 - Category; 2 - FST Action; 3 - Dialog Token; 4 - LLT; 5 - Session Transition; 6 - Multi-band (optional); 7 - Discovery Assistance (optional); 8 - DMG Capabilities (optional); 9 - Other elements as needed.

The Category field and FST Action field define the type of the frame. The Multi-band field contains the Multi-band element of the MLME to which the STA is requesting to trigger discovery. The channel, frequency band and MAC address contained in this element are used to inform the peer STA about the frequency and STA to assist. The Discovery Assistance field contains the Discovery Assistance element of the STA which is requesting to trigger or schedule discovery on the channel on the defined frequency band.

The element also contains information that aids the peer STA toward optimizing the discovery process. The DMG Capability field is transmitted from the new STA to the BSS STA to inform the BSS STA about the capability of the new STA on the mmW band. The BSS STA uses this information to adapt the transmission of the beamforming signal to the new STA DMG capabilities.

Other fields may be incorporated, such as fields utilized in the same context as defined in the WLAN 802.11 standard.

### 8.6. FST Setup Response Frame Format

An example embodiment for the FST Setup Response frame is: 1 - Category; 2 - FST Action; 3 - Dialog Token; 4 - LLT; 5 - Session Transition; 6 - Multi-band element (optional); 7 - Discovery Assistance element (optional); 8 - DMG Capability element (optional); 9 - Extended Schedule element (optional); 10 - Slot structure element (optional); 11 - Slot schedule element (Optional); and 12 - Other elements as needed.

The Category field and FST Action field define the type of the frame. The Multi-band field contains the Multi-band element of the MLME to which the STA is confirming discovery assistance. The channel, frequency band and MAC address contained in this element are used to inform the peer STA about the frequency and STA to assist.

The Discovery Assistance field contains the Discovery Assistance element notifying the attribute of the confirmed discovery assistance performed on the channel specified by the Multi-band element in the frame. The element also contains information that aids peer STAs to optimize the discovery process. The DMG Capability field is transmitted from the BSS STA to the new STA to inform the new STA about the capability of the BSS STA on the mmW band. The new STA uses this information to adapt the transmission of the beamforming signal to the BSS STA DMG capabilities. The Extended Schedule field contains an Extended Schedule element indicating the timing when the discovery assistance will be performed. The Slot Structure field contains a Slot Structure element indicating TDD slot structure. The Slot Schedule field contains a Slot Schedule element indicating schedule information. Other fields may be incorporated, such as fields utilized in the same context as defined in the WLAN 802.11 standard.

### 9. Discovery Assistance Implementation Examples

### 9.1. Discovery Assistance Example through Beacon Sweeping

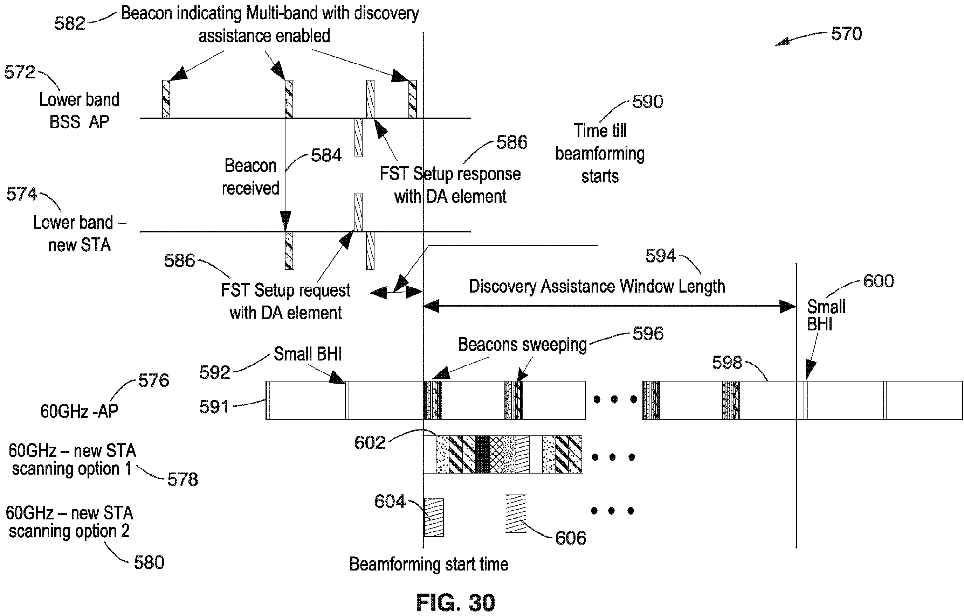

FIG. 30 illustrates an example embodiment 570 of Discovery assistance through beacon sweeping. The upper portion of the figure depicts communications over the discovery band (lower band, such as the sub-6 GHz band) by the BSS STA 572 and new STA 574, while the lower portion of the figure depicts communication over the communications band (Upper band, exemplified herein, but not limited to, 60 GHz) for the AP 576, the new STA using scanning option 1 578, and the new STA using scanning option 2 580.

The AP transmits beacons 582 which include DA (discovery assistance) enabled indications. The new STA receives 584 these beacons from the BSS AP on the lower band indicating multi-band and DA capabilities. The new STA forms a connection with the discovered BSS AP on the lower band, seen exemplified with an FST setup request 586 and response 588. The new STA sends an FST setup request frame and attaches the following element to the FST setup request frame. (a) The Multi-band element is attached to indicate the band and channel the new STA is requesting assistance for. (b) The discovery assistance element is attached with the request/response subfield set to request. (c) The capability elements are attached, such as the DMG capability element defined by WLAN 802.11 standard containing information about the new STA including antenna configuration of the new STA and the possibility of support for TDD SP.

The BSS AP receives the FST Setup Request with the Discovery Assistance element and the other capabilities and multi-band elements and decides either to offer discovery assistance, or not, to the new STA. In the example shown, the BSS AP sends a FST Setup Response frame 588 including a Discovery Assistance (DA) element and optionally a multi-band element. The DA element contains the following information. (a) The Discovery assistance response map indicates whether the AP is accepting or rejecting assisting the new STA on the band and channel indicated in the multi-band element if attached or previously sent in the FST setup request frame. If the decision is to accept, then the following fields and subfields are used. (b) Discovery Assistance type subfield is set to time triggering. This indicates that the beamforming signal will be sent at a specific time. This time is indicated by the Beamforming Start TSF field. The Beamforming Start TSF field indicates the time the BSS mmW STA will start sweeping beacons. (c) The beacon transmission interval is indicated in the BTI field. The new STA uses this field to adjust its scanning time to the BTI interval and scan during this time. The new STA might increase its scanning time to more than the BTI since the transmission of the beacon might be delayed if the channel is busy. (d) The Beamforming Period subfield indicates the period of time (in Bls in this example ) between sweeping the beacons in one BI and resweeping the beacons in another BI. If for example the Beamforming Period is zero, this indicates that the beacon is swept every BI for the Discovery window length. The new STA uses this field to expect the time 590 by which the beacons will be retransmitted if it did not receive it in the previous BI. (e) The Fragmented TXSS indicates if the beacon sweeping is partial sweeping. The TXSS Span indicates the number of beacon intervals it takes for the STA sending the DMG Beacon frame to complete the TXSS phase. If this subfield is 1 then this indicates that full sweeping is performed. The new STA uses this information to more quickly determine when the end of the scanning process will be if no beamforming frame was received for one or more TXSS span periods, which in some instances should increase beamforming efficiency as well. (f) The discovery Assistance Window length indicates the time the BSS STA will be sweeping beacons for discovery purpose for the new STA. (g) The Dwelling Time can indicate the rate over which the beacons are being swept. The new STA can use this Dwelling Time field to determine the time period to sweep the receive antenna pattern to scan for beacons.

The BSS AP uses the information in the directional communications band (DMG) capabilities that was sent with the FST setup request and specifically the new node antenna configuration to design the DMG beacon sweeping 591 for the new node during the discovery assistance period on the mmW band. Knowing the number of TX and RX antenna patterns and reciprocity status of the new STA, the BSS STA can perform the following: (a) adjust the number of training fields attached to the beacon to match the number of RX antenna pattern in the new STA; (b) adjust the number of ABFT slots; (c) adjust the number of the SSW frame fields in the ABFT period to match the number of the TX antenna patterns of the new STA; and (d) decide on whether a full beacon sweep or partial sweep should be performed based on latency constrains of the BSS STA. The beacon header interval (BHI) is the interval is the interval where beacon are being swept and transmitted in different directions. The procedure shown is such that this interval is kept minimal (transmit one or more beacon) which results in a small BHI 592, 600 and when a new node join or when a node requests discovery the BHI is full length.

The AP is seen commencing beacon sweeping 596 with periods 598 between beacons, through the time period of the discovery Assistance Window Length 594.

Once the new STA receives the FST setup response on the discovery band (lower band) it switches to the directional communications band (mmW) and scans for beacons if the request is accepted. If the discovery assistance type is beacon sweeping, then the new STA starts scanning the mmW at the beamforming start time. The new STA can use the dwelling time to switch its RX antenna pattern in the mmW band if specified, shown as option 1 reference 578, depicting different antenna patterns 602. Alternatively, the new STA can also scan only the time of beacon sweeping 604, 606 by using the information of the BTI and the Beamforming Period, shown as option 2 reference 580.

The new STA can stop scanning after the discovery assistance window length period has passed from the beamforming start time, or when it completes beamforming with the BSS STA on the mmW band.

### 9.1.1. Information Elements Parameter Setup

The FST Setup Request and Response Frames are transmitted on the lower band with the multi-band element where the Discovery Assistance Enabled field is set, the DMG capability element to reflect the directional communication band (DMG) capability of the STA transmitting the frame and the discovery assistance element

### 9.1.1.1. Discovery Assistance in FST Setup Request Frame

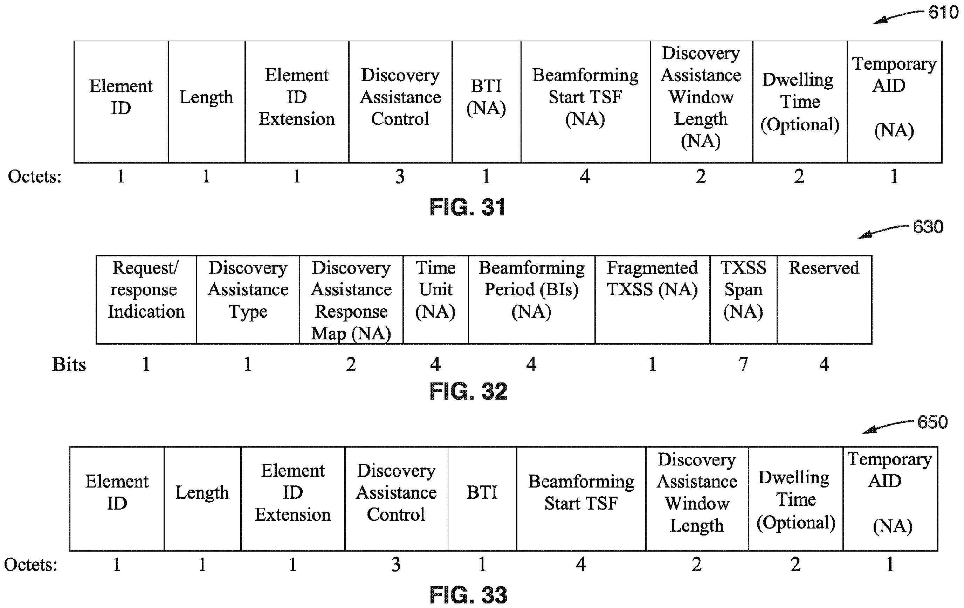

FIG. 31 and FIG. 32 illustrate an example embodiment 610, 630 of the Discovery Assistance Element and its Discovery Assistance Control field, respectively. The fields and subfields marked with NA are reserved for the Discovery Assistance in the FST Setup Request frames.

In FIG. 31 the Element ID, *Element ID Extension* and Length are shown as in the other messages for identifying the type of element and its length. A Discovery Assistance Control field is depicted whose subfields are shown in FIG. 32. The BTI field represents the time interval in Time Units between the start of the first DMG Beacon frame transmission during the assisted discovery window in a beacon interval to the end of the last DMG Beacon frame transmission by the STA in the same beacon interval. The Beamforming Start TSF field represents the time on which the discovery assistance will commence. The Discovery Assistance Window Length indicates the time in Time Units that the discovered STA is offering discovery assistance. Dwelling time is optionally used to indicate that the new STA is scanning the medium with directional beams with time between each beam equals to the Dwelling time. If this field is set to Zero, then this indicates that initial scanning is Quasi-Omni. The Temporary AID (assistance ID) field contains a value assigned by the BSS STA to the new STA to represent a temporary AID for the new STA.

In FIG. 32 the subfields of the Discovery Assistance Control field seen in FIG. 31 are as follows. The Request / Response Indication subfield should set to request. Discovery Assistance Type can be set to Beamform Triggering to show a request to do discovery assistance through triggering beamforming frames. This request can be overridden by the BSS STA decision. Other embodiments can neglect this subfield and make the selection of the Discovery Assistance type determined by the BSS STA.

The Discovery Assistance Response Map field specifies the response of the discovery assistance request. The Time Unit subfield indicates the time unit for the next beamforming frame exchange field. The Beamforming Period (in Bls) subfield indicates the number of beacon intervals (Bls) or TDD slots following the Time to next beamforming frame during which the DMG Beacon frame or beamforming frames will not be present. The Fragmented Transmission Sector Sweep (TXSS) subfield is set to 1 to indicate the TXSS is a fragmented sector sweep and is set to 0 to indicate the TXSS is a complete sector sweep. The TXSS Span subfield indicates the number of beacon intervals is required for the STA sending the DMG Beacon frame to complete the TXSS phase. The remaining bits are reserved.

### 9.1.1.2. Discovery Assistance (DA) in FST Setup Response Frame

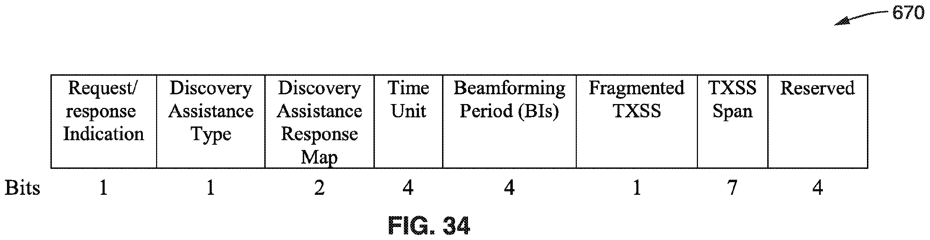

FIG. 33 and FIG. 34 illustrate an example embodiment 650, 670 of the FST Response frame and its Discovery Assistance Control field. The fields and subfields marked with NA are reserved for the Discovery Assistance in the FST Setup Request frames.

In FIG. 33 the Element ID, Element ID Extension and Length are shown as in the other messages for identifying the type of element and its length. A Discovery Assistance Control field is depicted whose subfields are shown in FIG. 34. BTI indicates the beacon transmission interval. Beamforming Start TSF indicates the time beam sweeping is starting. Discovery Assistance Window Length indicates the time the BSS STA is offering discovery assistance. Dwelling time is optionally used to indicate that the new STA is scanning the medium with directional beams with time between each beam equals to the Dwelling time. If this field is set to Zero that indicate that initial scanning is Quasi-Omni. The Temporary AID (assistance ID) field contains a value assigned by the BSS STA to the new STA to represent a temporary AID for the new STA.

In FIG. 34 the subfields of the Discovery Assistance Control field seen in FIG. 33 are as follows. The Request / Response Indication subfield should be set to response. The Discovery Assistance Type is set to triggered Beamforming to show the discovery assistance type offered. Discovery Assistance Map is set to the response of the discovery assistance request. If the value in the field is such that it reflects a reject, all other field in the element is neglected. Time Unit is set to indicate the BTI time unit. Beamforming Period (Bls) indicates the period in Bls where beamforming triggering within the Discovery Assistance Window Length. Fragmented TXSS indicates if beamforming is fragmented. TXSS Span indicates the beamforming span if fragmented TXSS is set. The remaining bits are reserved.

### 9.2. DA Example via Triggering TDD SP Beamforming

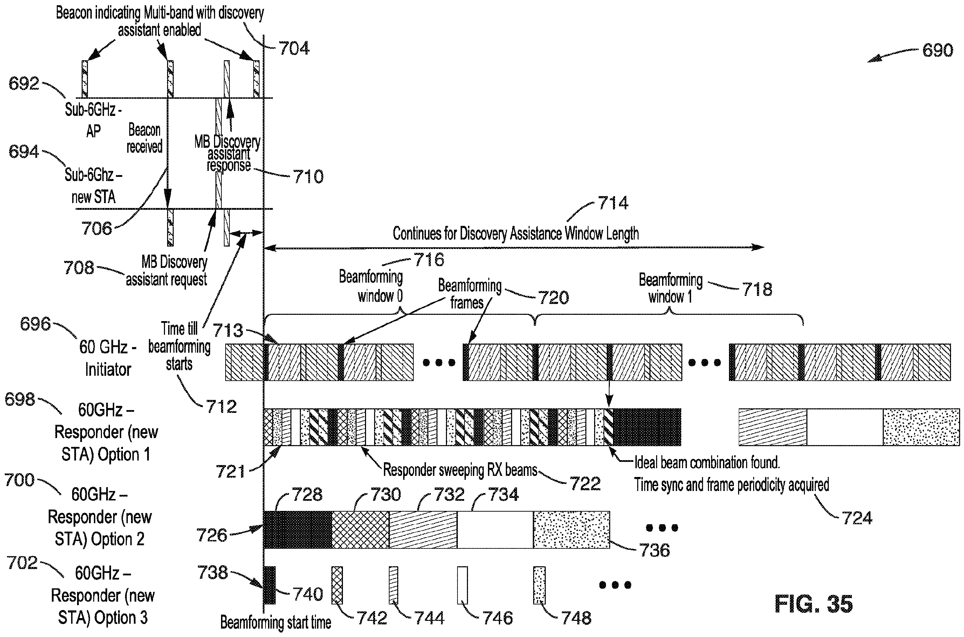

FIG. 35 illustrates an example embodiment 690 of discovery assistance through triggering TDD SP beamforming. The upper portion of the figure depicts communications over the discovery band (lower band, such as sub-6 GHz) by the BSS (AP) STA 692 and new STA 694, while the lower portion of the figure depicts communication over the directional

communications band (Upper band, mmW, exemplified herein, but not limited to, 60 GHz) for the Initiator 696, the Responder (new STA) using a first option 698, the Responder (new STA) using a second scanning option 700, and the Responder (new STA) using a third scanning option 702.

The AP is seen sending sub-6 GHz beacons 704 indicating multi-band and DA capabilities, which are received 706 by the new STA. The new STA forms a connection with the discovered BSS AP on the lower band. In this example, the new STA sends an FST setup request frame 708 and attaches the following elements to the FST setup request frame: (a) the Multi-band element to indicate the band and channel the new STA is requesting assistance for; (b) the discovery assistance element with the request / response subfield set to request; and (c) the capability elements such as for example directional communication band (DMG) capability element. The DMG capability information is as defined by WLAN 802.11 standard having information about the new STA including antenna configuration of the new STA and the possibility of support for TDD SP.

The BSS AP receives the FST Setup Request with the Discovery Assistance element and the other capabilities and multi-band elements and decides whether or not to offer discovery assistance to the new STA. In this case the BSS AP decides to offer discovery assistance, and sends a FST Setup Response frame 710 with Discovery Assistance element and possibly the multi-band element, the slot structure element and the slot schedule element. The DA element contains the following information. (a) The Discovery assistance response map to indicate whether the AP is accepting or rejecting assisting the new STA on the band and channel indicated in the multi-band element if attached or previously sent in the FST setup request frame. If the decision is to accept, then the following fields and subfields are utilized. (b) Discovery Assistance type subfield is set to time triggering. This indicates that the beamforming signal will be sent at a specific time. This time is indicated by the Beamforming Start TSF field, providing a time until beamforming starts 712. The Beamforming Start TSF field indicates the time the BSS mmW STA will start transmitting TDD beamforming signal. (c) The discovery Assistance Window length 714 indicates the time the BSS STA will be sending beamforming frames for discovery purpose for the new STA. (d) The Dwelling Time can have the rate over which the beamforming frames are sweeping. The new STA can use this field to determine the time period to sweep the receive antenna pattern to scan for TDD beamforming frames.

The BSS AP uses the information in the DMG capabilities that was sent with the FST setup request and specifically the new node antenna configuration to design the TDD SP beamforming process for the new node during the discovery assistance period on the mmW band. Knowing the number of TX and RX antenna patterns and reciprocity status of the new STA, the BSS STA can adjust the number of slots over which an SSW frame is sent from one sector before switching to a new SSW frame transmission from another sector.

Once the new STA receives the FST setup response on the discovery band (lower band) it switches to the directional communication band (mmW) and scans for beamforming frames if the request is accepted. If the discovery assistance type is beamform triggering, the new STA starts scanning the mmW at the beamforming start time. If any of the slot structure elements or the slot schedule element or both are provided, the new STA is expecting TDD SP beamforming. Even if none of these elements are provided the new STA might still receive TDD SP beamforming frames.

The Initiator commences beamforming 696 in the upper frequency band (e.g., 60 GHz) with transmissions 713. In the example shown the AP is the initiator. Beamforming will continue for the period 714 of the Discovery Assistance Window Length. In this example it can be seen that within the given window length there is a window 0 of beamforming 716 and a window 1 of beamforming 718. Periodic beamforming frames 720 are shown during beamforming. The new STA starts scanning as seen in the three options 698, 700, 702. In the first depicted scanning option 698 the new STA is scanning 721 its receiving antenna and can use the dwelling time to switch its RX antenna pattern 722 in the mmW band if specified, once the new STA finds a SSW frame it adjust its scanning period and switch to full synchronized mode 724.

In the second depicted scanning option 700, if the slot structure element is provided with the FST setup response frame, then the new STA can use the information in the Slot Structure element to switch directly 726 to full synchronized mode where it switches its RX antenna pattern whenever the BSS STA is transmitting a new SSW frame, the changes being seen as antenna patterns 728, 730, 732, 734 and 736.

In the third depicted scanning option 702 if the slot structure element and the Slot Schedule element are provided with the FST setup Response frame, then the new STA can extract the beamforming slot schedule information from the slot schedule element and only scan 738 during the time when SSW frames are transmitted. This can increase the efficiency of the scanning period and reduce scanning power consumption. The different antenna patterns 740, 742, 744, 746 and 748 are seen during these scans.

The new STA can stop scanning after the discovery assistance window length period from the beamforming start time or when it has beamformed with the BSS STA on the upper band (e.g., mmW, such as the example 60 GHz).

### 9.2.1. Information Elements Parameter Setup

The FST Setup Request and Response Frames are transmitted on the lower band with the multi-band element where the Discovery Assistance Enabled field is set, and with the DMG capability element reflecting the DMG capability of the STA transmitting the frame and the discovery assistance element.

The FST response can include the Slot Structure element and the Slot Schedule element to provide additional information to the new STA about the TDD-SP beamforming process. It is noted here that the Extended Schedule element is not sent with the FST setup Response frame.

### 9.2.1.1. Discovery Assistance in FST Setup Request Frame

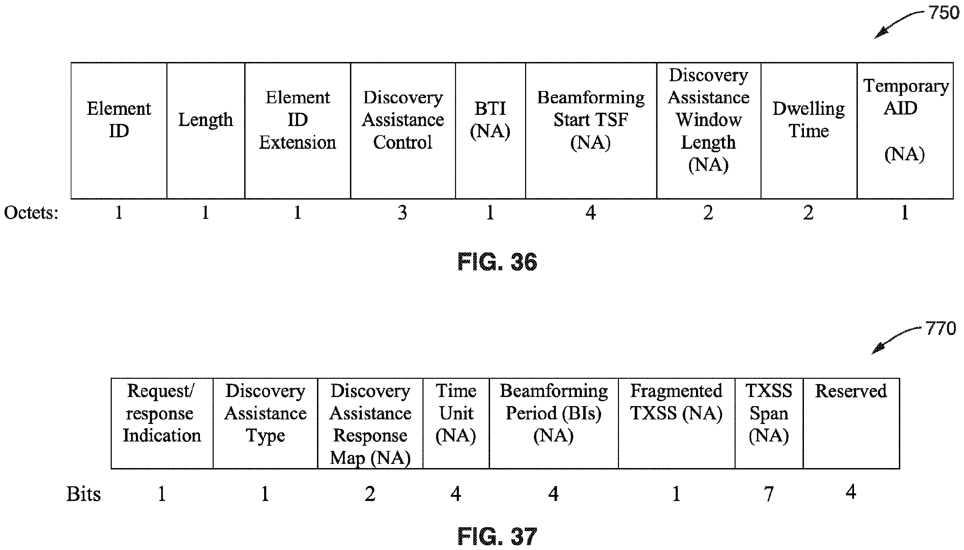

FIG. 36 and FIG. 37 illustrate an example embodiment 750, 770 of the FST Setup Request Frame (FIG. 36) and its Discovery Assistance Control field (FIG. 37). The fields and subfields marked with NA are reserved for the Discovery Assistance in the FST Setup Request frames.

In FIG. 36 the FST Setup Request frame has the following fields. An Element ID, Element ID Extension and Length are shown as in the other messages for identifying the type of element and its length. A Discovery Assistance Control field is depicted whose subfields are shown in FIG. 37. The BTI, Beamforming Start TSF, Discovery Assistance Window Length, and Temporary AID are marked as NA as not applicable in this context. Dwelling time is optionally used to indicate that the new STA is scanning the medium with directional beams with the suggested time between each beam equals to the Dwelling time. If this field is set to Zero then this indicates that initial scanning is Quasi-Omni. The (assistance ID) field contains a value assigned by the BSS STA to the new STA to represent a temporary AID for the new STA.

In FIG. 37 the subfields of the Discovery Assistance Control field seen in FIG. 36 are as follows. The Request / Response Indication subfield should be set to request. Discovery Assistance Type can be set to Beamform Triggering to show a request to do discovery assistance through triggering beamforming frames. This request can be overridden by the BSS STA decision. Other implementations can ignore this subfield and make the selection of the Discovery Assistance type determined by the BSS STA. The Discovery Assistance Response Map, Time Unit, Beamforming Period, Fragmented TXSS, and TXSS Span are all marked as NA, as not being Applicable in this context.

### 9.2.1.2. Discovery Assistance in FST Setup Response Frame

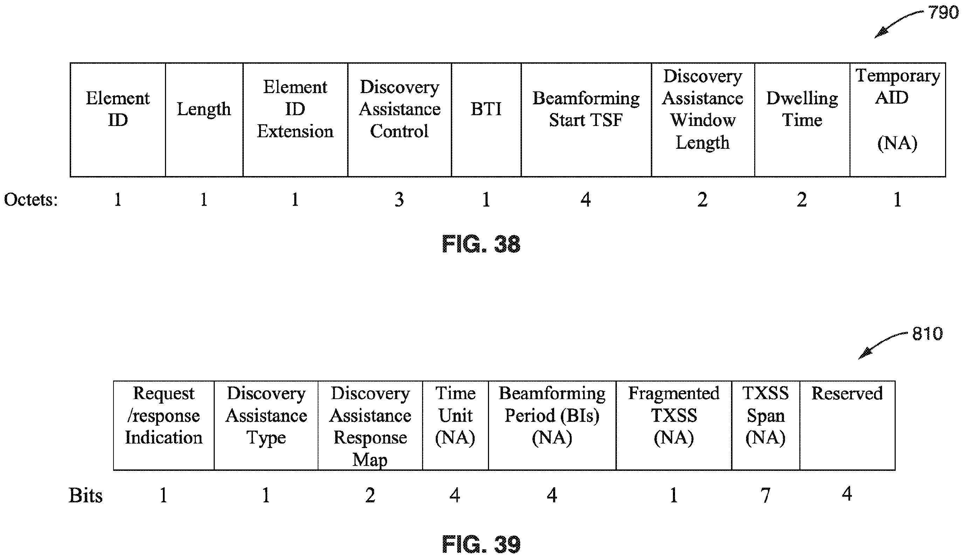

FIG. 38 and FIG. 39 illustrate an example embodiment 790, 810 of the FST Setup Response Frame (FIG. 38) and its Discovery Assistance Control field (FIG. 39). The fields and subfields marked with NA are reserved for the Discovery Assistance in the FST Setup Request frames.

In FIG. 38 FST Setup Response Frame is seen with an Element ID, Element ID Extension and Length as in the other messages for identifying the type of element and its length. A Discovery Assistance Control field is depicted whose subfields are shown in FIG. 39. The BTI field equals to zero can indicate that the beamforming is TDD beamforming. Beamforming Start TSF indicates the time that Time Domain Duplexing (TDD) beamform frames are starting. The Discovery Assistance Window indicates the time the BSS STA is offering discovery assistance. Dwelling time indicates that the new STA is scanning the medium with directional beams with time between each beam equal to the Dwelling time. The Temporary AID (assistance ID) field is not applicable in this context.

In FIG. 39 the subfields of the Discovery Assistance Control field seen in FIG. 38 are as follows. The Request / Response Indication subfield should set to response. The Discovery Assistance Type is set to Beamform Triggering to show discovery assistance type offered. The Discovery Assistance Map is set to the response of the discovery assistance request. If the value in the field is such that it reflects a reject, then all other fields in the element can be ignored. The Time Unit, Beamforming Period, Fragmented TXSS, and TXSS Span are marked as NA, indicating they are not applicable in this context.

### 9.3. Discovery Assistance through Beamforming Scheduling

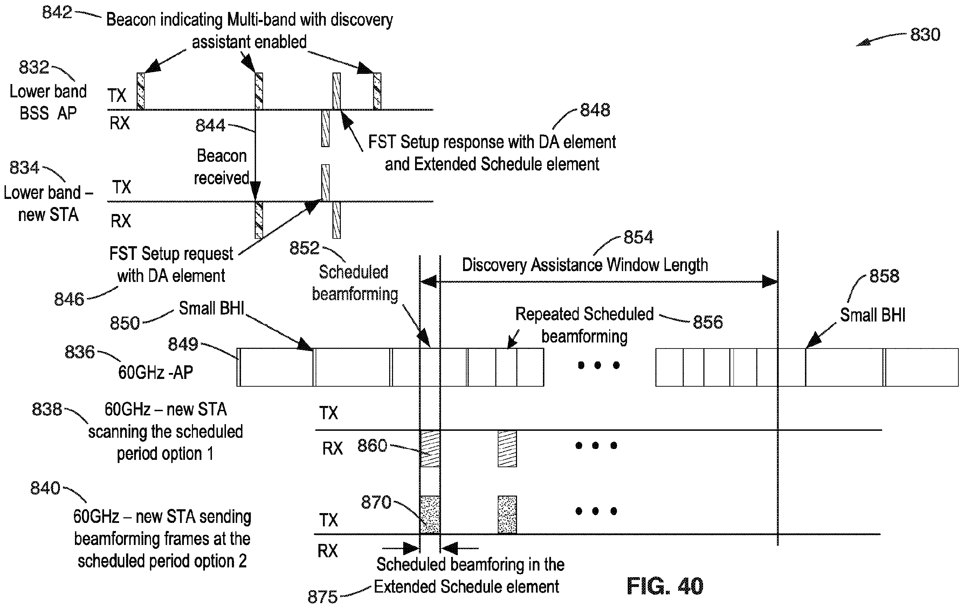

FIG. 40 illustrates an example embodiment 830 of discovery assistance through beamform scheduling. The upper portion of the figure depicts communications over the discovery band (lower band, such as sub-6 GHz) by the BSS AP STA 832 and new STA 834, while the lower portion of the figure depicts communication over the communications band (Upper band, exemplified herein, but not limited to, 60 GHz) for the AP 836, the new STA using a first option 838, and the new STA using a second option 840.

The AP is seen sending sub-6 GHz beacons 842 indicating multi-band and DA capabilities, which are received 844 by the new STA. The new STA forms a connection with the discovered BSS AP on the lower band. The new STA sends an FST setup request frame 846 and attaches the following elements to the FST setup request frame. (a) The Multi-band element is attached to indicate the band and channel the new STA requesting assistance for. (b) The discovery assistance element with the request/response subfield set to request. (c) Capability elements are attached such as a directional communication band (DMG) capability element. The DMG capability information can be utilized as defined by the WLAN 802.11 standard providing information about the new STA including antenna configuration of the new STA and the possibility of support for TDD SP.

The BSS AP receives the FST Setup Request with the Discovery Assistance element and the other capabilities and multi-band elements and decides whether or not to offer discovery assistance to the new STA. The BSS AP decides to offer assistance and sends an FST Setup Response frame 848 with Discovery Assistance element, Extended Schedule element and the multi-band element when applicable, the slot structure element and the slot schedule element. The DA element contains the information as follows. (a) The Discovery assistance response map to indicate whether the AP is accepting or rejecting assisting the new STA on the band and channel indicated in the multi-band element if attached or previously sent in the FST setup request frame. If the decision is to accept the DA, then the following fields and subfields are used. (b) Discovery Assistance type subfield is set to Scheduled beamforming. This indicates that the beamforming is to be performed in a scheduled period 852 in the BI and the details of the scheduled period is in the extended schedule element that should be provided in the FST setup response element with the DA element. (c) The discovery Assistance Window length indicates the time the BSS STA will be sending beamforming signal 854 for discovery purpose for the new STA. (d) The Dwelling Time can provide the rate over which the beamforming frames are sweeping. The new STA can use this field to determine the time period to sweep the receive antenna pattern to scan for TDD beamforming frames.

The BSS AP uses the information in the DMG capabilities that was sent with the FST setup request and specifically the new node antenna configuration to design the beamforming process for the new node during the discovery assistance period 854 on the mmW band. Knowing the number of TX and RX antenna patterns and reciprocity status of the new STA, the BSS STA can adjust the number of allocated slots for the new STA to TX its SSW frames for example, or allocates the right number of training fields to beamform the RX antennas in the new STA.

The BSS mmW STA schedules time in the BI to beamform the new STA in the mmW band. The BSS STA adds the schedule information in the extended schedule element and attaches it to the FST setup Response Frame. The BSS mmW STA can repeat this assignment every Beamforming Period by including the periodicity of the scheduled period in the DA element beamforming period subfield.

The Extended schedule element contains information about the time period(s) 852 in the DTI period that AP is expected to beamform with the new STA. The Beamforming Start time can refer to the BI where the extended schedule element information is active. If the Beamforming Period subfield is used, the BSS AP schedules the same period identified in the extended schedule element every Beamforming Period. The BSS AP starts transmitting beamforming 849 shown with periodic small beacon header interval (BHI) 850, with repeated scheduled beamforming 856 and additional small BHI 858.

The new STA expects assistance every Beamforming period until the end of the discovery assistance window 854. Once the new STA receives the FST setup response on the discovery band (lower band) it switches to the directional communications band (mmW) and scans for beamforming frames if the request is accepted. If the discovery assistance type is scheduled beamforming, the new STA extracts the scheduling information 875 from the provided Extended Schedule element attached to the FST Setup Response frame.

The new STA can scan in many ways, such as the following. In the first depicted scanning option 838, if the scheduled beamforming period is such that the reserved SP is a TDD SP, then the new STA is expecting TDD beamforming frames. The AP can send the slot structure element and the slot schedule element with the FST setup response frame to make the scanning 860 more efficient as discussed previously.

In a second scanning option 840, the following are performed. If the Scheduled beamforming is non-TDD SP and the source is referring to the new STA, the new STA is expected to be the initiator and should start transmitting beamforming frames 870 in the assigned period(s). If the Scheduled beamforming is non-TDD SP and the source is referring to the BSS STA, the BSS STA is expected to be the initiator and should start transmitting beamforming frames in the assigned period(s).

The new STA can stop scanning after the discovery assistance window length period from the beamforming start time or when it beamform with the BSS STA on the mmW band.

### 9.3.1. Information Elements Setup for non-TDD Scheduled DA

The FST Setup Request and Response frames are transmitted on the lower band with the multi-band element where the Discovery Assistance Enabled field is set, and the directional communication band (DMG) capability element reflects the DMG capability of the STA transmitting the frame and the discovery assistance element. The extended schedule element is sent with the FST setup Response frame to indicate the discovery assistance is through scheduled allocation of the beamforming period.

### 9.3.1.1. Discovery Assistance in FST Setup Request Frame

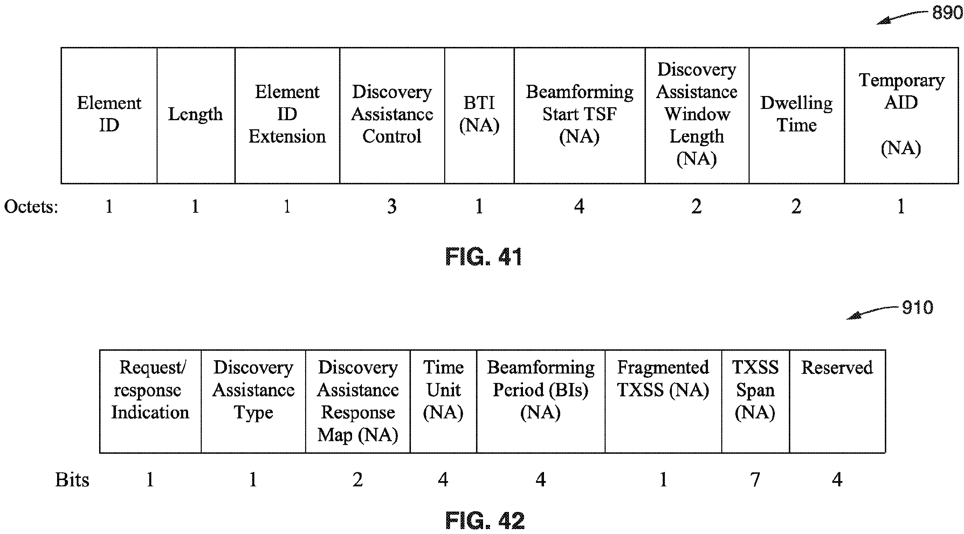

FIG. 41 and FIG. 42 illustrate an example embodiment 890, 910 of DA FST Setup Request frame (FIG. 41), and the Discovery Assistance Control field (FIG. 42) from that Setup Request frame. The fields and subfields marked with NA are reserved for the Discovery Assistance in the FST Setup Request frames.

In FIG. 41 the DA FST Setup Request field has the following fields. An Element ID, Element ID Extension and Length are shown as in the other messages for identifying the type of element and its length. A Discovery Assistance Control field is depicted whose subfields are shown in FIG. 42. Dwelling time is optionally used to indicate that the new STA is scanning the medium with directional beams with the suggested time between each beam equals to the Dwelling time. If this field is set to Zero, then this indicates that the initial scanning is performed Quasi-Omni. The BTI, Beamforming Start TSF, Discovery Assistance Window Length, and Temporary AID fields are marked as NA as not applicable in this context.

In FIG. 42 the subfields of the Discovery Assistance Control field seen in FIG. 41 are as follows. The Request / Response Indication subfield should be set to request. The Discovery Assistance Type can be set to scheduled beamforming to show a request to do discovery assistance through scheduled SP or CBAP period. This request can be overridden by the BSS STA decision. Other implementation can ignore this subfield, and for example select the Discovery Assistance type as determined by the BSS STA.

### 9.3.1.2 Discovery Assistance in FST Setup Response Frame

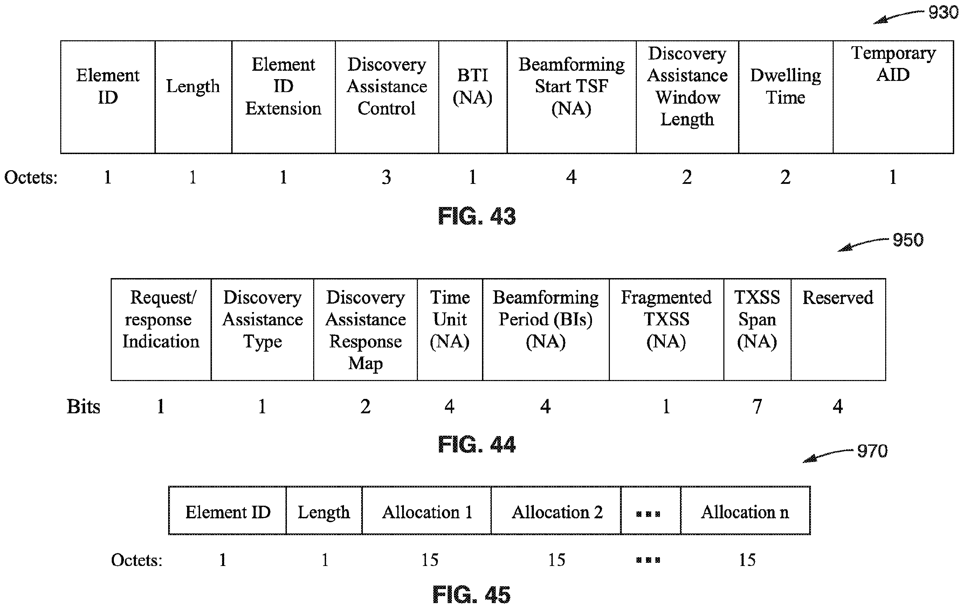

FIG. 43 and FIG. 44 illustrate an example embodiment 930, 950 of the FST Setup Response Frame (FIG. 43), and the Discovery Assistance Control field (FIG. 44) from that Setup Response frame. The fields and subfields marked with NA are reserved for the Discovery Assistance in the FST Setup Request frames.

In FIG. 43 the DA FST Setup Response frame has the following fields. An Element ID, Element ID Extension and Length are shown as in the other messages for identifying the type of element and its length. A Discovery Assistance Control field is depicted whose subfields are shown in FIG. 44. The BTI, and Beamforming Start TSF fields are marked NA as they are not applicable in this context. The Discovery Assistance Window indicates the time the BSS STA is offering discovery assistance. The Dwelling time indicates that the new STA is scanning the medium with directional beams with time between each beam equal to the Dwelling time. The Temporary AID contains a value assigned by the BSS STA to the new STA to represent a temporary AID for the new STA. The new STA uses this value to identify scheduled periods by the BSS STA to the new STA in case the extended schedule element is provided.

In FIG. 44 the subfields of the Discovery Assistance Control field seen in FIG. 43 are as follows. The Request / Response Indication subfield should set to response. The Discovery Assistance Type is set to scheduled beamforming to show discovery assistance type offered. The Discovery Assistance Map is set to the response of the discovery assistance request. If the value in the field is such that it reflects a reject, all other fields in the element can be ignored. The remaining fields are marked as NA as not applicable to this context.

### 9.3.1.3. Extended Schedule Element

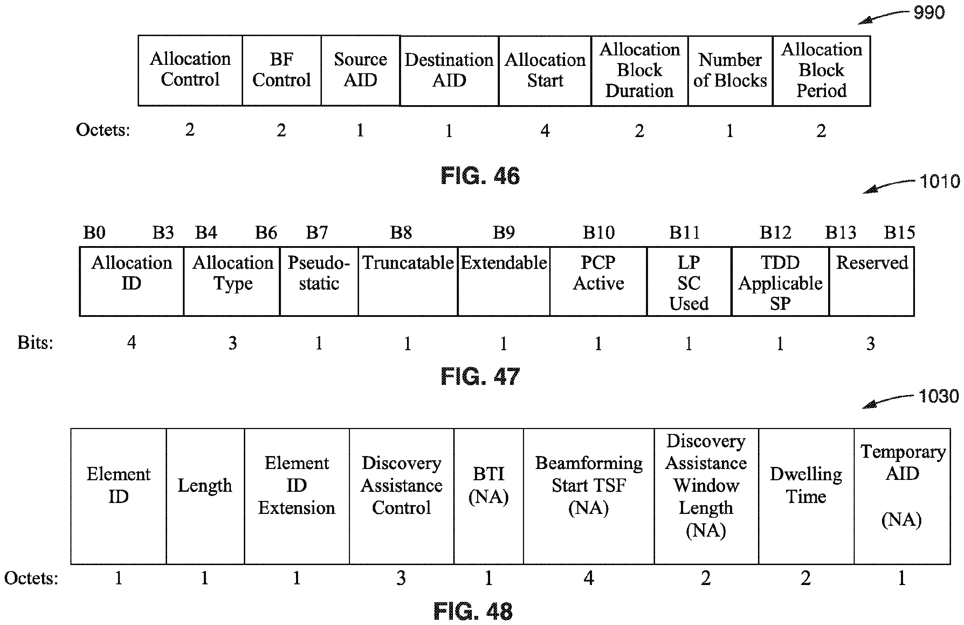

FIG. 45 through FIG. 47 illustrates an example embodiment 970, 990, 1010 of an Extended Schedule Element (FIG. 45), the format of the Allocation field (FIG. 46), and the Allocation Control subfield format (FIG. 47). The following fields and subfields are needed for discovery assistance and are setup as follows, with the remaining field being setup as described in 802.11 WLAN standard document.

In FIG. 45 it is seen that each extended schedule element has an Element ID field, Length field, and a number of Allocations, seen here as Allocation 1 through Allocation n. An example of the Allocation field is shown in FIG. 46.

In FIG. 46 the Allocation field format is seen having an Allocation control field, which is further described in FIG. 47. The allocation block has an identifier (ID) subfield. The BF Control subfield is set such that beamforming is enabled with details of beamforming indicated. The Source AID field represents the BSS STA AID if the BSS STA is initiating the beamforming and the new STA temporary AID (or reserved AID) if the new STA is initiating the beamforming. The Destination AID represents the BSS STA AID if the new STA is initiating the beamforming and the new STA temporary AID (or reserved AID) if the BSS STA is initiating the beamforming. Allocation Start indicates the start time for the beamforming allocation period. The allocation block duration, number of blocks allocated and allocation Block Period indicates the allocation inside the DTI period.

In FIG. 47 the subfields in the Allocation Control field are as follows. The allocation ID is set to a value picked by the BSS STA. The Allocation type can be SP or CBAP. Pseudo-static indicates that the allocation is repeated for the discovery assistance window length. The TDD Applicable SP is set to 0 to indicate a non-TDD SP.

### 9.3.2. Information Parameters for TDD Scheduled DA

The FST Setup Request and Response frames are transmitted on the discovery band (lower band) with the multi-band element where the Discovery Assistance Enabled field is set, with the directional communication band (DMG) capability element reflecting the DMG capability of the STA transmitting the frame and the discovery assistance element. The DMG capability element should indicate that the TDD-SP is supported on both devices for this to work properly. The extended schedule element is sent with the FST setup Response frame to indicate that the discovery assistance is performed through scheduled allocation of the beamforming period. The FST Setup response can carry the slot structure element and the slot schedule element to provide the new STA information about the TDD-SP for more efficient scanning.

### 9.3.2.1. Discovery Assistance in FST Setup Request Frame

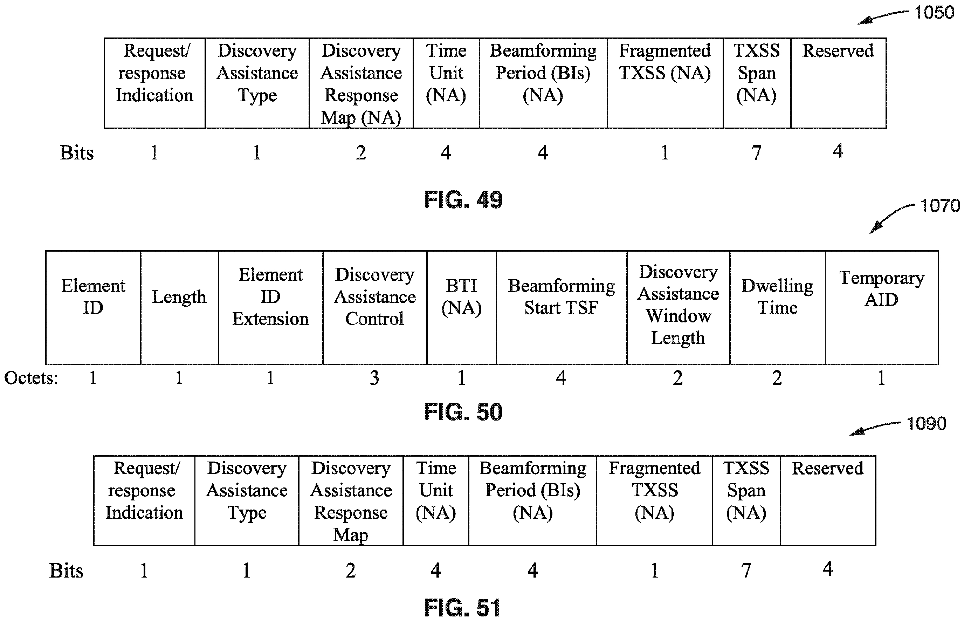

FIG. 48 and FIG. 49 illustrate an example embodiment 1030, 1050 of the Discovery Assistance in FST Setup Request frame (FIG. 48), and the Discovery Assistance Control field (FIG. 49) from that Setup Request frame.

In FIG. 48 the Discovery Assistance in FST Setup Request has the following fields. An Element ID, Element ID Extension and Length are shown as in the other messages for identifying the type of element and its length. A Discovery Assistance Control field is depicted whose subfields are shown in FIG. 49. Dwelling time is optionally used to indicate that the new STA is scanning the medium with directional beams with the suggested time between each beam equals to the Dwelling time. If this field is set to Zero, then this indicates that the initial scanning is performed Quasi-Omni. The remaining fields are marked NA, as they are not applicable in this context.

In FIG. 49 the Discovery Assistance Control field is shown having the following subfields. The Request / Response Indication subfield should be set to request. Discovery Assistance Type can be set to scheduled beamforming to show a request to do discovery assistance through scheduled SP or CBAP period. This request can be overridden by the BSS STA decision. Other implementations can ignore this subfield and select the Discovery Assistance type determined by the BSS STA. The remaining fields are marked NA, as they are not applicable in this context.

### 9.3.2.2. Discovery Assistance in FST Setup Response Frame

FIG. 50 and FIG. 51 illustrate an example embodiment 1070, 1090 of the DA in FST Setup Response frame (FIG. 50), and the Discovery Assistance Control field (FIG. 51) from that Setup Request frame. The fields and subfields marked with NA are reserved for the Discovery Assistance in the FST Setup Request frames.

In FIG. 50 the DA in FST Setup Response frame is shown having the following fields. An Element ID, Element ID Extension and Length are shown as in the other messages for identifying the type of element and its length. A Discovery Assistance Control field is depicted whose subfields are shown in FIG. 51. The Start TSF field indicates the time TDD beamform frames are starting. The DA Window Length is the Discovery Assistance Window which indicates the time the BSS STA is offering discovery assistance. The Dwelling Time field is the dwelling time indicating that the new STA is scanning the medium with directional beams with time between each beam equal to the Dwelling time. The Temporary AID field contains a value assigned by the BSS STA to the new STA to represent a temporary AID for the new STA. The new STA uses this value to identify scheduled periods by the BSS STA to the new STA in case the extended schedule element is provided. The remaining fields are marked NA, as they are not applicable in this context.

In FIG. 51 is depicted the Discovery Assistance Control field from FIG. 50, which has the following subfields. The Request / Response Indication subfield should set to response. The Discovery Assistance Type is set to scheduled beamforming to show discovery assistance type offered. The Discovery Assistance Map is set to the response of the discovery assistance request. If the value in the field is such that it reflects a reject, then all other fields in the element can be ignored. The remaining fields are marked NA, as they are not applicable in this context.

### 9.3.2.3. Extended Schedule Element

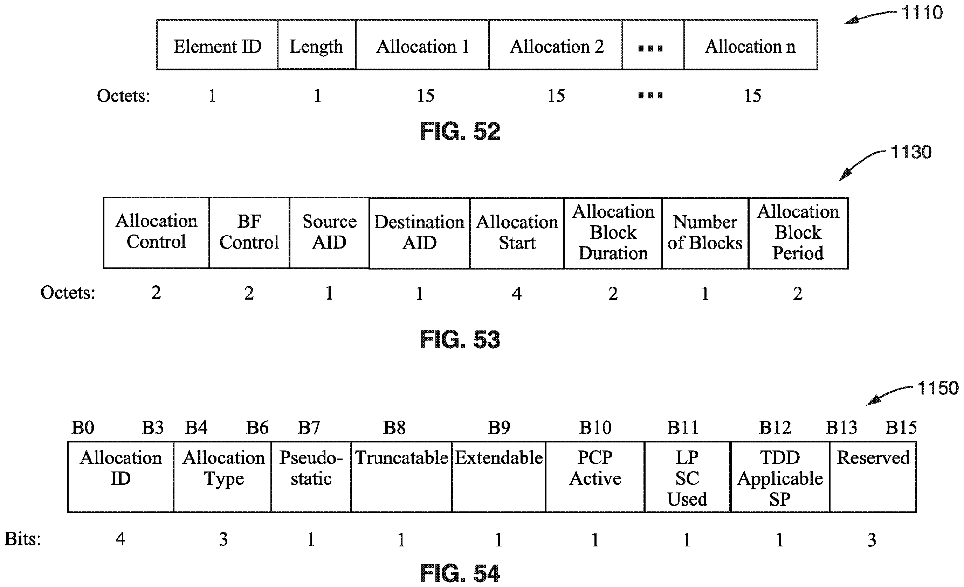

FIG. 52 through FIG. 54 illustrates an example embodiment 1110, 1130 and 1150 of an Extended Schedule Element (FIG. 52), the format of the Allocation field (FIG. 53), and the Allocation Control subfield format (FIG. 54). The following fields and subfields are utilized for discovery assistance and are setup as follows, with the remaining fields being setup as described in 802.11 WLAN standard document.

In FIG. 52 the Extended Schedule Element is seen with Element ID field, Length field, and a number of Allocations, seen here as Allocation 1 through Allocation n. An example of the Allocation field is shown in FIG. 53.

In FIG. 53 the Allocation field format is seen having the following fields. The Allocation Control subfield is described in FIG. 54. The BF Control subfield is set such that beamforming is enabled and the detail of the beamforming is indicated. Source AID represents the BSS STA AID. Destination AID represents the new STA. Allocation Start indicates the start time for the beamforming allocation period. The subfields Allocation block duration, Number of Blocks and Allocation Block Period indicate the allocation inside the DTI period.

In FIG. 54 the Allocation control field is seen having the following subfields. The following fields and subfields are needed for discovery assistance and are setup like follows, the remainder of the fields are setup as described in 802.11 WLAN standard document, and are not described in further detail. The allocation ID is set to a value picked by the BSS STA. The Allocation type is SP. The Pseudo-static subfield indicates that the allocation is repeated for the discovery assistance window length. The Truncatable subfield indicates whether the source DMG STA and destination DMG STA can request SP truncation for an SP allocation. The Extendable subfield indicates whether that the source DMG STA and destination DMG STA can request SP extension for an SP allocation. The PCP Active subfield indicates whether the PCP is available to transmit or receive during the CBAP or SP when PCP is in active mode. The LP SC Used indicates if the low-power SC mode is used in this SP. The TDD Applicable SP is set to 1 to indicate a TDD SP.

### 10. DA Extension over Multiple mmW Channels

If BSS AP operates multiple BSSs over the mmW band, for example on channel 1 and channel 2, it is possible that the BSS AP offers discovery assistance on both channel 1 and channel 2. In this case, BSS AP can support discovery assistance on both channels simultaneously by triggering beamform frames or discovery signals on both channels and allocating beamform schedules at different times. The present disclosure provides an example for beamforming scheduling over multiple channels (Channel 1 and Channel 2 for example), but the same method and frames can be used to enable beamform triggering as described in sections 9.1 and 9.2.

### 10.1 FST Setup Request Frame Format

When a new STA requests discovery assistance to a BSS STA, the new STA transmits a frame, such as the FST Setup Request frame, containing the following information to request discovery assistance on channel X and channel Y. An example embodiment of this FST request frame contains the following fields: 1 - Category; 2 - FST Action; 3 - Dialog Token; 4 - LLT; 5 - Session Transition; 6 - Multi-band 1; 7 - Discovery Assistance 1; 8 - DMG Capabilities 1; 9 - Multi-band 2; 10 - Discovery Assistance 2; 11 - DMG Capabilities 2; and 12 - Other elements as needed.

The Category field and FST Action field define the type of the frame (FST Setup Request). The Multi-band 1 field contains a Multi-band element of the MLME to which the STA is requesting to trigger discovery. This field specifies attributes of channel X. The Discovery Assistance 1 field contains the Discovery Assistance element associated with channel X. The DMG Capability 1 field contains DMG Capability of the STA when it communicates on channel X. The Multi-band 2 field contains a Multi-band element of the MLME to which the STA is requesting to trigger discovery. This field specifies attribute of channel Y. The Discovery Assistance 2 field contains the Discovery Assistance element associated with channel Y. The DMG Capability 2 field contains DMG Capability of the STA when it communicates on channel Y.

Upon reception of the FST Request frame, BSS AP examines if it can schedule sector sweep at the requested channels. Details of the BSS AP's procedure are described in a latter section.

### 10.2. FST Setup Response Frame Format

When the BSS AP accepts discovery assistance requests on multiple channels, it responds back with FST Setup Response frame containing multiple Multi-band elements, Discovery Assistance elements, and Extended Schedule elements. When the BSS AP accepts discovery assistance on channel X and channel Y, the BSS AP transmits an FST Setup Response frame containing the following information, confirming discovery assistance on channel X and channel Y.

The FST response frame format has the following fields: 1 - Category; 2 - FST Action; 3 - Dialog Token; 4 - LLT; 5 - Session Transition; 6 - Multi-band 1; 7 - Discovery Assistance 1; 8 - DMG Capability 1; 9 - Extended Schedule 1; 10 - Slot Structure 1 (optional); 11 - Slot Schedule 1 (optional); 12 - Multi-band 2; 13 - Discovery Assistance 2; 14 - DMG Capability 2; 15 - Extended Schedule 2; 16 - Slot Structure 2 (optional); 17 - Slot Schedule 2 (optional); and 18 - Other elements as needed.

The Category field and FST Action field define the type of the frame (FST Setup Response). The Multi-band 1 field contains the Multi-band element of the MLME to which the STA is confirming discovery assistance, which specifies attributes of channel X. The Discovery Assistance 1 field contains the Discovery Assistance element notifying the attributes of the confirmed discovery assistance performed on the channel specified by the Multi-band element present prior to this field in the frame. The Discovery Assistance 1 field contains the Discovery Assistance element associated with channel X. The DMG Capability 1 field contains DMG Capability (directional communications band capability) of the BSS STA that operates on channel X. The Extended Schedule 1 field contains an Extended Schedule element indicating the timing when discovery assistance will be performed on channel X. The Slot Structure 1 field contains a Slot Structure element indicating TDD slot structure on channel X. The Slot Schedule 1 field contains Slot Schedule element indicating schedule information on channel X. The Multi-band 2 field contains the Multi-band element of the MLME to which the STA is confirming discovery assistance, which specifies attributes of channel Y. The Discovery Assistance 2 field contains the Discovery Assistance element notifying the attribute of the confirmed discovery assistance performed on channel Y. The DMG Capability 2 field contains DMG Capability of the BSS STA that operates on channel Y. The Extended Schedule 2 field contains Extended Schedule element indicating the timing when the discovery assistance will be provided on channel Y. The Slot Structure 2 field contains Slot Structure element indicating TDD slot structure on channel Y. The Slot Schedule 2 field contains Slot Schedule element indicating schedule information on channel Y.

### 10.3. DA through Beamforming over Multiple mmW Channels

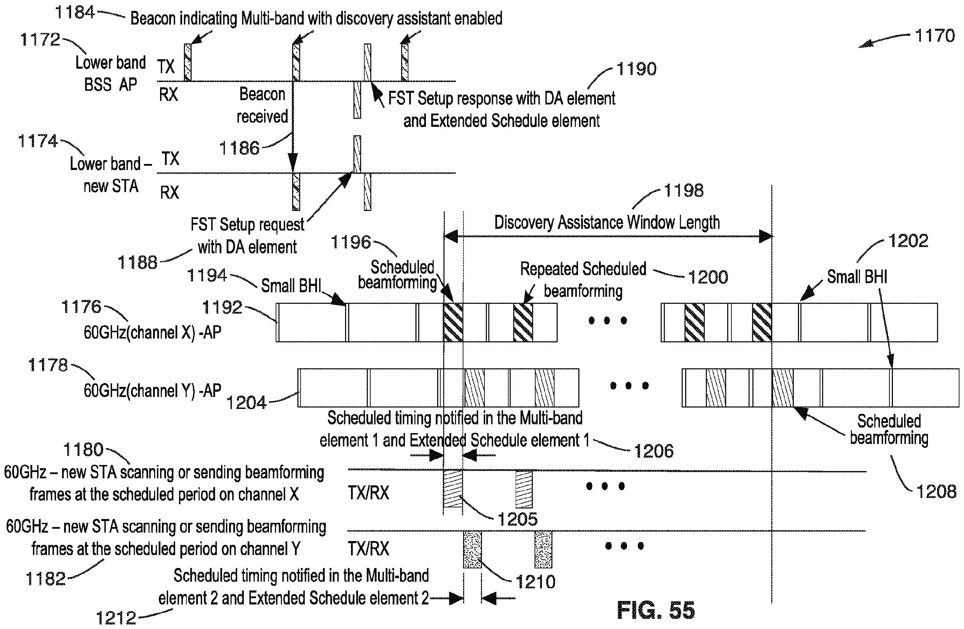

FIG. 55 illustrates an example embodiment 1170 of discovery assistance through beamforming over multiple directional communication band (mmW) channels. The upper portion of the figure depicts communications over the discovery band (lower band, such as sub-6 GHz) by the BSS AP STA 1172 and new STA 1174, while the lower portion of the figure depicts communication over the directional communications band (Upper band, exemplified herein, but not limited to, 60 GHz) for the AP on channel X 1176 and channel Y 1178, and for the new STA on channel X 1180 and on channel Y 1182.

The AP is seen sending sub-6 GHz beacons 1184 indicating multi-band and DA capabilities, which are received 1186 by the new STA. The new STA forms a connection with the discovered BSS AP on the lower band, in response to transmitting an FST Setup Request 1188 with a discovery assistance (DA) element, and attaches the following elements. (a) The Multi-band elements (Multi-band 1 and Multi-band 2) are attached to indicate the band and channel the new STA is requesting assistance for. If the BSS AP indicates that it operates multiple BSSs on mmW channels, then the new STA contains multiple Multi-band elements to indicate its willingness to be part of any candidate BSS. (b) The discovery assistance elements (Discovery Assistance 1 and Discovery Assistance 2) with the request / response subfield are set to request. Discovery Assistance 1 corresponds to the channel identified by Multi-band 1, and Discovery Assistance 2 corresponds to the channel identified by Multi-band 2. (c) The capability elements are similar to the DMG capability element for example which is defined by the WLAN 802.11 standard, having information about the new STA including antenna configuration of the new STA and the possibility of support for TDD SP (DMG Capabilities 1 and DMG Capabilities 2). DMG Capabilities 1 corresponds to the channel identified by Multi-band 1, and DMG Capabilities 2 corresponds to the channel identified by Multi-band 2.

The BSS AP receives the FST Setup Request with the Discovery Assistance elements, DMG Capabilities, and Multi-band elements. The BSS AP examines if it can schedule sector sweep at the requested channels. If the BSS AP can find a right timing to transmit sector sweep on channels, it schedules sector sweep on multiple channels at different timing so the New STA can perform scanning without missing one of the signals.

Then, the BSS AP encodes the scheduled timings to Extended Schedule elements, and responds back with FST Setup Response frame 1190 containing said Extended Schedule elements, in order to notify the new STA when to scan which channel.

When the BSS AP accepts the discovery assistance request on multiple channels, it responds back with an FST Setup Response frame 1190 containing multiple Multi-band elements, Discovery Assistance elements, and Extended Schedule elements. Even if the new STA requested discovery assistance over multiple mmW channels, it only performs discovery assistance on the channel where the BSS AP can find a suitable timing to schedule sector sweep transmissions and the channel has sufficient bandwidth to accommodate a new STA. The BSS AP may include Slot Structure elements and the Slot Schedule elements, if it supports TDD SP.

The Discovery Assistance element contains the following information effective on the corresponding directional communication band (mmW) channel. (a) The Discovery assistance response map to indicate whether the AP accepting or rejecting assisting the new STA on the band and channel indicated in the multi-band element if attached or previously sent in the FST setup request frame. If the decision is to accept the DA, then the following fields and subfields are used. (b) The Discovery Assistance type subfield is set to Scheduled beamforming. This indicates that the beamforming is to be performed in a scheduled period in the BI and the details of the scheduled period are in the extended schedule element that is provided in the FST setup response element with the DA element. (c) The discovery Assistance Window length indicates the time 1198 the BSS STA will be sending beamforming signal for discovery purpose for the new STA. (d) The Dwelling Time can have the rate over which the beamforming frames are sweeping. The new STA can use this field to determine the time period 1196 to sweep the receive antenna pattern to scan for TDD beamforming frames.

The BSS AP uses the information in the DMG capabilities that was sent with the FST setup request and specifically the new node antenna configuration to design the beamforming process for the new node during the discovery assistance period on the corresponding mmW channel. Knowing the number of TX and RX antenna patterns and reciprocity status of the new STA, the BSS STA allowed adjusting the number of allocated slots for the new STA to TX its SSW frames for example or allocate the right number of training fields to beamform the RX antennas in the new STA.

The AP is seen commencing beamforming on channel X 1192 and channel Y 1204 to span at least the Discovery Assistance Window Length 1198. This beamforming is seen with small beacon header interval (BHI) 1194, 1202. The BSS mmW STA schedules time 1196, 1206 in the BI to beamform the new STA in the mmW channels. The BSS STA adds the schedule information in the extended schedule element and attaches it to the FST setup Response Frame. The BSS mmW STA can repeat 1200 this assignment every Beamforming Period by including the periodicity of the scheduled period in the DA element beamforming period subfield.

The Extended Schedule element contains information about the time period(s) in the DTI period that AP is expected to beamform with the new STA, on the corresponding mmW channel.

The Beamforming Start time can refer to the BI where the extended schedule element information is active.

If the Beamforming Period subfield is used, the BSS AP schedules the same period identified in the extended schedule element every Beamforming Period. The new STA can expect assistance every Beamforming period till the end of the discovery assistance window 1198.

Once the new STA receives the FST setup response notifying the acceptance of the discovery assistance on the discovery band (lower band), it switches to the mmW channels indicated in the Multi-band elements in the received frame. The new STA extracts the scheduling information from the received Extended Schedule elements in the FST Setup Response frame, and switches mmW channels to be able to transmit/receive signals on a channel at scheduled times on each channel.

The new STA is seen scanning, or sending beamforming frames, 1180, 1182, on channel X and channel Y, respectively, with timing shown 1205, and 1210, respectively.

During the scheduled time at a channel, the new STA can scan in a number of ways:
(a) If the scheduled beamforming period is such that the reserved SP is a TDD SP, the new STA is expecting TDD beamforming frames. The AP can send the slot structure element and the slot schedule element with the FST setup response frame to make the scanning more efficient as discussed in before.
(b) If the Scheduled beamforming is non-TDD SP and the source is referring to the new STA, the new STA is expected to be the initiator and should start transmitting beamforming frames in the assigned period(s).
(c) If the Scheduled beamforming is non-TDD SP and the source is referring to the BSS STA, the BSS STA is expected to be the initiator and should start transmitting beamforming frames in the assigned period(s).

The new STA can stop scanning after the discovery assistance window length period from the beamforming start time or when it beamform with the BSS STA on the mmW channels.

### 11. Summary of Disclosure Elements.

The following is a partial summary of aspects associated with the present disclosure.

A BSS STA can provide discovery assistance to a STA that is trying to discovery the BSS STA through sending information in the discovery band (lower band). This information informs the new STA about how to discover and beamform with the new STA. This information can include the following. (a) The availability of this DA feature on the directional communication (mmW) band. (b) The availability of the BSS STA to engage in discovery assistance with the new STA upon receiving a request from the new STA. (c) The triggering time at which the beamforming or the discovery signal shall start. (d) The period of time that the beamforming or the discovery signal is taking place. (e) The type of beamforming and which STA should initiate the beamforming frame exchanges. (f) The periodicity of repeating the beamforming or the discovery signal transmission and how long the BSS STA is in discovery assistance mode. (g) The RX antenna pattern scanning frequency if the new STA is using directional scanning.

A Multi-band BSS offers discovery assistance to other STAs in the network through advertising its multi-band capability and discovery assistance capability on the lower band and responding to discovery assistance requests on lower band.

A new STA requests discovery assistance through sending a discovery assistance request to the BSS STA on lower band and receive the response on the lower band. The new STA shall send its multi-band capability, DMG capability to the BSS STA to inform it about its capabilities.

A multi-band BSS offering discovery assistance can trigger or schedule beamforming to a new STA after receiving a discovery assistance request on the lower band. The BSS STA shall send the scheduling information, or the trigger time, to the new STA on the lower band in addition to the band where discovery is taking place.

A multi-band BSS offering discovery assistance can trigger or schedule TDD-beamforming to a new STA after receiving a discovery assistance request and the DMG capability of a new STA stating that it supports TDD-SP on the lower band. The BSS STA shall send the scheduling information or the trigger time to the new STA on the lower band in addition to the band where discovery is taking place and all TDD-SP slot and scheduling information if needed.

A new STA can request discovery assistance over multiple channels by sending discovery assistance request with multi-band element and DMG capability for each channel it is requesting discovery assistance with the discovery assistance request over the lower band. The BSS STA responds with discovery assistance response over the lower band includes multi-band element, DMG Capability and discovery assistance response for each channel it will offer assistance in. The BSS STA can schedule beamforming or trigger beamforming at each of these channels. If beamforming is scheduled in any of the channels requested, a schedule element is sent with the discovery assistance response frame for that channel.

### 12. General Scope of Embodiments

The enhancements described in the presented technology can be readily implemented within the protocols of various wireless communication stations. It should also be appreciated that wireless communication stations are preferably implemented to include one or more computer processor devices (e.g., CPU, microprocessor, microcontroller, computer enabled ASIC, etc.) and associated memory storing instructions (e.g., RAM, DRAM, NVRAM, FLASH, computer readable media, etc.) whereby programming (instructions) stored in the memory are executed on the processor to perform the steps of the various process methods described herein.

The computer and memory devices were not depicted in the diagrams for the sake of simplicity of illustration, as one of ordinary skill in the art recognizes the use of computer devices for carrying out steps involved with image/video encoding and decoding. The presented technology is non-limiting with regard to memory and computer-readable media, insofar as these are non-transitory, and thus not constituting a transitory electronic signal.

Embodiments of the present technology may be described herein with reference to flowchart illustrations of methods and systems according to embodiments of the technology, and/or procedures, algorithms, steps, operations, formulae, or other computational depictions, which may also be implemented as computer program products. In this regard, each block or step of a flowchart, and combinations of blocks (and/or steps) in a flowchart, as well as any procedure, algorithm, step, operation, formula, or computational depiction can be implemented by various means, such as hardware, firmware, and/or software including one or more computer program instructions embodied in computer-readable program code. As will be appreciated, any such computer program instructions may be executed by one or more computer processors, including without limitation a general purpose computer or special purpose computer, or other programmable processing apparatus to produce a machine, such that the computer program instructions which execute on the computer processor(s) or other programmable processing apparatus create means for implementing the function(s) specified.

Accordingly, blocks of the flowcharts, and procedures, algorithms, steps, operations, formulae, or computational depictions described herein support combinations of means for performing the specified function(s), combinations of steps for performing the specified function(s), and computer program instructions, such as embodied in computer-readable program code logic means, for performing the specified function(s). It will also be understood that each block of the flowchart illustrations, as well as any procedures, algorithms, steps, operations, formulae, or computational depictions and combinations thereof described herein, can be implemented by special purpose hardware-based computer systems which perform the specified function(s) or step(s), or combinations of special purpose hardware and computer-readable program code.

Furthermore, these computer program instructions, such as embodied in computer-readable program code, may also be stored in one or more computer-readable memory or memory devices that can direct a computer processor or other programmable processing apparatus to function in a particular manner, such that the instructions stored in the computer-readable memory or memory devices produce an article of manufacture including instruction means which implement the function specified in the block(s) of the flowchart(s). The computer program instructions may also be executed by a computer processor or other programmable processing apparatus to cause a series of operational steps to be performed on the computer processor or other programmable processing apparatus to produce a computer-implemented process such that the instructions which execute on the computer processor or other programmable processing apparatus provide steps for implementing the functions specified in the block(s) of the flowchart(s), procedure (s) algorithm(s), step(s), operation(s), formula(e), or computational depiction(s).

It will further be appreciated that the terms "programming" or "program executable" as used herein refer to one or more instructions that can be executed by one or more computer processors to perform one or more functions as described herein. The instructions can be embodied in software, in firmware, or in a combination of software and firmware. The instructions can be stored local to the device in non-transitory media, or can be stored remotely such as on a server, or all or a portion of the instructions can be stored locally and remotely. Instructions stored remotely can be downloaded (pushed) to the device by user initiation, or automatically based on one or more factors.

It will further be appreciated that as used herein, that the terms processor, hardware processor, computer processor, central processing unit (CPU), and computer are used synonymously to denote a device capable of executing the instructions and communicating with input/output interfaces and/or peripheral devices, and that the terms processor, hardware processor, computer processor, CPU, and computer are intended to encompass single or multiple devices, single core and multicore devices, and variations thereof.

As used herein, the singular terms "a," "an," and "the" may include plural referents unless the context clearly dictates otherwise. Reference to an object in the singular is not intended to mean "one and only one" unless explicitly so stated, but rather "one or more."

As used herein, the term "set" refers to a collection of one or more objects. Thus, for example, a set of objects can include a single object or multiple objects.

As used herein, the terms "substantially" and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%. For example, "substantially" aligned can refer to a range of angular variation of less than or equal to ±10°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

Although the description herein contains many details, these should not be construed as limiting the scope of the disclosure but as merely providing illustrations of some of the presently preferred embodiments. Therefore, it will be appreciated that the scope of the disclosure fully encompasses other embodiments which may become obvious to those skilled in the art.

## Claims

1. An apparatus (10, 92, 94, 132, 134, 172, 174, 212, 214, 252, 254) for wireless communication in a network, the apparatus comprising:
(a) a wireless communication circuit (30, 32, 20, 22a, 22b, 22c, 24a-n, 26a-n, 28a-n) configured for wirelessly communicating with at least one other wireless communication station having multi-band communications capability comprising a discovery band, and a directional communications band;
(b) a processor (16) coupled to said wireless communication circuit to form a station configured for operating on a wireless network;
(c) a non-transitory memory (18) storing instructions executable by the processor;
(d) wherein said instructions, when executed by the processor (16), perform steps comprising:
(i) operating said wireless communication circuit (30, 32, 20, 22a, 22b, 22c, 24a-n, 26a-n, 28a-n) as a network node already connected to the wireless network configured for aiding any new nodes attempting to join the wireless network, by performing steps comprising:
(A) announcing its discovery assistance capability by transmitting any message frames on the discovery band, to indicate if the discovery assistance capability is available for the directional communications band;
(B) transmitting a message on the discovery band which includes a discovery assistance element, having information on new node directional communication capability, which is generated in response to receiving a discovery assistance request from any new node attempting to join the wireless network, wherein the discovery assistance element comprises information on the availability of the network node already connected to the wireless network to engage in the discovery assistance with the new node upon receiving a request from the new node and information on a triggering time at which the beamforming or discovery signaling shall commence; and
(C) switching, at the triggering time, to the directional communications band and beamforming according to the information received in the discovery assistance element; and
(D) establishing a connection setup over the directional communications band in response to directional information received during said beamforming process; and
(ii) operating said wireless communication circuit (30, 32, 20, 22a, 22b, 22c, 24a-n, 26a-n, 28a-n) as a new node attempting to join the wireless network, by performing steps comprising:
(A) receiving a message frame over the discovery band, containing an indication of discovery assistance capability, from the network node already connected to the wireless network;
(B) transmitting a request message containing a discovery assistance element, having information on a directional communication capability of the new node, over the discovery band to the network node already connected to the wireless network; and
(C) receiving a response to the request message as a response message containing a discovery assistance element over the discovery band the network node already connected to the wireless network, wherein the discovery assistance element comprises information on the availability of the network node already connected to the wireless network to engage in the discovery assistance with the new node upon receiving a request from the new node and information on a triggering time at which the beamforming or discovery signaling shall commence;
(D) switching, at the triggering time, to the directional communications band and beamforming according to the information received in the discovery assistance element and the transmitted discovery assistance element, which discovers the new node in a beamforming process; and
(E) establishing a connection setup over the directional communications band in response to directional information received during said beamforming process.

2. The apparatus (10, 92, 94, 132, 134, 172, 174, 212, 214, 252, 254) of claim 1, wherein said instructions when executed by the processor performing steps for the network node already connected to the wireless network and the new node further comprising exchanging information on directional communications band capabilities toward optimizing discovery and beamforming.

3. The apparatus (10, 92, 94, 132, 134, 172, 174, 212, 214, 252, 254) of claim 1, wherein said discovery assistance element comprises information on type of beamforming to be performed and whether the new node or network node already connected to the wireless network should initiate beamforming frame exchanges.

4. The apparatus (10, 92, 94, 132, 134, 172, 174, 212, 214, 252, 254) of claim 1, wherein said discovery assistance element comprises information on periodicity of the network node already connected to the wireless network repeating a beamforming process or discovery signal transmission, and length of time the network node already connected to the wireless network will remain in discovery assistance mode.

5. The apparatus (10, 92, 94, 132, 134, 172, 174, 212, 214, 252, 254) of claim 1, wherein said discovery assistance element comprises information on a receiver antenna pattern scanning frequency.

6. The apparatus (10, 92, 94, 132, 134, 172, 174, 212, 214, 252, 254) of claim 1, wherein said instructions when executed by the processor performing steps operating as the new node requesting discovery assistance communicating the discovery assistance element containing its multi-band capability and directional communications band capability, to inform the network node already connected to the wireless network about its capabilities.

7. The apparatus (10, 92, 94, 132, 134, 172, 174, 212, 214, 252, 254) of claim 1, wherein said discovery assistance element comprises a station address, directional communications band capability information, antenna capability information, communication band information, communication band scanning mode, discovery assistance window, and dwelling time.

8. The apparatus (10, 92, 94, 132, 134, 172, 174, 212, 214, 252, 254) of claim 1, wherein said instructions when executed by the processor performing steps as a network node already connected to the wireless network and commencing the beamforming process further comprises offering discovery assistance by either triggered beamforming, or scheduled beamforming with the new node, and transmitting information on beamforming schedule or beamforming trigger to the new node.

9. The apparatus (10, 92, 94, 132, 134, 172, 174, 212, 214, 252, 254) of claim 1, wherein said instructions when executed by the processor performing steps as a network node already connected to the wireless network further comprise offering discovery assistance for triggered beamforming or scheduled beamforming with the new node using Time Division Duplex (TDD)-beamforming after receiving a discovery assistance request and directional communication band capability of a new node which indicates over the discover band that it supports TDD Service Period (SP).

10. The apparatus (10, 92, 94, 132, 134, 172, 174, 212, 214, 252, 254) of claim 9, wherein said instructions when executed by the processor performing steps as a network node already connected to the wireless network further comprise sending directional communications band beamforming scheduling information or trigger time to the new node over the discovery band.

11. The apparatus (10, 92, 94, 132, 134, 172, 174, 212, 214, 252, 254) of claim 10, wherein said instructions when executed by the processor performing steps as a network node already connected to the wireless network further comprise sending over the discovery band Time Division Duplex (TDD) Service Period (SP) slot structure and scheduling information.

12. The apparatus (10, 92, 94, 132, 134, 172, 174, 212, 214, 252, 254) of claim 1, wherein said instructions when executed by the processor performing steps as a new node further comprise communicating over the discovery band requesting discovery assistance over multiple channels of the directional communication band by sending a request message containing a discovery assistance element having a multi-band element and directional communications band capability for each channel for which it is requesting discovery assistance.

13. The apparatus (10, 92, 94, 132, 134, 172, 174, 212, 214, 252, 254) of claim 12, wherein said instructions when executed by the processor performing steps as a network node already connected to the wireless network comprising responding to the new node discovery assistance request by sending a response message with a discovery assistance element comprising a multi-band element, directional communications band capability and for each channel of the new node for which it will offer assistance.

14. The apparatus (10, 92, 94, 132, 134, 172, 174, 212, 214, 252, 254) of claim 13, wherein said instructions when executed by the processor performing steps as a network node already connected to the wireless network comprising performing scheduled beamforming or trigger beamforming for each of these channels, and including a schedule element over the discovery band for any channels for which scheduled beamforming is to be performed.

15. A method of directional wireless communication in a network, the method comprising:
(a) operating a wireless communication circuit for wirelessly communicating with at least one other wireless communication station having multi-band communications capability comprising a discovery band, and a directional communications band;
(b) operating said wireless communication circuit as a network node already connected to a wireless network, wherein said network node is configured for aiding any new nodes attempting to join the wireless network, by performing steps comprising:
(i) announcing its discovery assistance capability by transmitting any message frames on the discovery band, to indicate if the discovery assistance capability is available for the directional communications band;
(ii) transmitting a message on the discovery band which includes a discovery assistance element, having information on new node directional communication capability, which is generated in response to receiving a discovery assistance request from any new node attempting to join the wireless network, wherein the discovery assistance element comprises information on the availability of the network node already connected to the wireless network to engage in the discovery assistance with the new node upon receiving a request from the new node and information on a triggering time at which the beamforming or discovery signaling shall commence; and
(iii) switching, at the triggering time, to the directional communications band and beamforming according to information received in exchanged discovery assistance elements; and
(iv) establishing a connection setup over the directional communications band in response to directional information received during said beamforming process; and
(c) operating said wireless communication circuit as a new node attempting to join the wireless network, by performing steps comprising:
(i) receiving a message frame over the discovery band, containing an indication of discovery assistance capability, from the network node already connected to the wireless network;
(ii) transmitting a request message containing a discovery assistance element, having information on new node directional communication capability, over the discovery band to the network node already connected to the wireless network; and
(iii) receiving a response to the request message as a response message containing a discovery assistance element over the discovery band the network node already connected to the wireless network wherein the discovery assistance element comprises information on the availability of the network node already connected to the wireless network to engage in the discovery assistance with the new node upon receiving a request from the new node and information on a triggering time at which the beamforming or discovery signaling shall commence;
(iv) switching, at the triggering time, to the directional communications band and beamforming according to information received in exchanged discovery assistance elements assistance request and discovery assistance response exchange to discover this new node in a beamforming process; and
(v) establishing a connection setup over the directional communications band in response to directional information received during said beamforming process.

## Patentansprüche

1. Vorrichtung (10, 92, 94, 132, 134, 172, 174, 212, 214, 252, 254) zur drahtlosen Kommunikation in einem Netzwerk, wobei die Vorrichtung umfasst:
(a) eine Drahtloskommunikationsschaltung (30, 32, 20, 22a, 22b, 22c, 24a-n, 26a-n, 28a-n), die dazu ausgelegt ist, drahtlos mit mindestens einer anderen Drahtloskommunikationsstation zu kommunizieren, die über eine Multiband-Kommunikationsfähigkeit verfügt, die ein Entdeckungsband und ein gerichtetes Kommunikationsband umfasst;
(b) einen Prozessor (16), der mit der Drahtloskommunikationsschaltung gekoppelt ist, um eine Station zu bilden, die zum Betreiben in einem drahtlosen Netzwerk ausgelegt ist;
(c) einen nichtflüchtigen Speicher (18), der vom Prozessor ausführbare Anweisungen speichert;
(d) wobei die Anweisungen, wenn sie von dem Prozessor (16) ausgeführt werden, Schritte durchführen, die umfassen:
(i) Betreiben der Drahtloskommunikationsschaltung (30, 32, 20, 22a, 22b, 22c, 24a-n, 26a-n, 28a-n) als ein Netzwerkknoten, der bereits mit dem drahtlosen Netzwerk verbunden ist, der dazu ausgelegt ist, allen neuen Knoten, die versuchen, dem drahtlosen Netzwerk beizutreten, zu helfen, durch Durchführen von Schritten, die umfassen:
(A) Ankündigen seiner Fähigkeit zur Entdeckungsunterstützung durch Übertragen beliebiger Nachrichtenframes auf dem Entdeckungsband, um anzugeben, ob die Fähigkeit zur Entdeckungsunterstützung für das gerichtete Kommunikationsband verfügbar ist;
(B) Übertragen einer Nachricht auf dem Entdeckungsband, die ein Entdeckungsunterstützungselement mit Informationen über die gerichtete Kommunikationsfähigkeit des neuen Knotens beinhaltet, das als Antwort auf das Empfangen einer Entdeckungsunterstützungsanforderung von irgendeinem neuen Knoten, der versucht, dem drahtlosen Netzwerk beizutreten, erzeugt wird, wobei das Entdeckungsunterstützungselement Informationen über die Verfügbarkeit des Netzwerkknotens, der bereits mit dem drahtlosen Netzwerk verbunden ist, um in die Entdeckungsunterstützung mit dem neuen Knoten nach dem Empfangen einer Anforderung von dem neuen Knoten einzutreten, und Informationen über eine Auslösezeit, zu der die Strahlformungs- oder Entdeckungssignalisierung beginnen soll, umfasst; und
(C) Umschalten zum Auslösezeitpunkt auf das gerichtete Kommunikationsband und die Strahlformung gemäß der in dem Entdeckungsunterstützungselement empfangenen Information; und
(D) Erstellen eines Verbindungsaufbaus über das gerichtete Kommunikationsband als Antwort auf während des Strahlformungsprozesses empfangenen gerichteten Informationen; und
(ii) Betreiben der Drahtloskommunikationsschaltung (30, 32, 20, 22a, 22b, 22c, 24a-n, 26a-n, 28a-n) als einen neuen Knoten, der versuchen, dem drahtlosen Netzwerk beizutreten, durch Durchführen von Schritten, die umfassen:
(A) Empfangen eines Nachrichtenframes über das Entdeckungsband, der eine Angabe über die Fähigkeit zur Entdeckungsunterstützung enthält, von dem Netzwerkknoten, der bereits mit dem drahtlosen Netzwerk verbunden ist;
(B) Übertragen einer Anforderungsnachricht, die ein Entdeckungsunterstützungselement mit Informationen über eine gerichtete Kommunikationsfähigkeit des neuen Knotens enthält, über das Entdeckungsband an den Netzwerkknoten, der bereits mit dem drahtlosen Netzwerk verbunden ist; und
(C) Empfangen einer Antwort auf die Anforderungsnachricht als eine Antwortnachricht, die ein Entdeckungsunterstützungselement über das Entdeckungsband des Netzwerkknotens, der bereits mit dem drahtlosen Netzwerk verbunden ist, enthält, wobei das Entdeckungsunterstützungselement Informationen über die Verfügbarkeit des Netzwerkknotens, der bereits mit dem drahtlosen Netzwerk verbunden ist, umfasst, um in die Entdeckungsunterstützung mit dem neuen Netzwerkknoten bei Empfangen einer Anforderung von dem neuen Netzwerkknoten einzutreten, sowie Informationen über einen Auslösezeitpunkt, zu dem die Strahlformung oder die Entdeckungssignalisierung beginnen soll;
(D) Umschalten zum Auslösezeitpunkt auf das gerichtete Kommunikationsband und Strahlformung gemäß den in dem Entdeckungsunterstützungselement empfangenen Informationen und dem übertragenen Entdeckungsunterstützungselement, das den neuen Knoten in einem Strahlformungsprozess entdeckt; und
(E) Erstellen eines Verbindungsaufbaus über das gerichtete Kommunikationsband als Antwort auf während des Strahlformungsprozesses empfangenen gerichteten Informationen.

2. Vorrichtung (10, 92, 94, 132, 134, 172, 174, 212, 214, 252, 254) nach Anspruch 1, wobei die Anweisungen, wenn sie von dem Prozessor ausgeführt werden, der Schritte für den Netzwerkknoten, der bereits mit dem drahtlosen Netzwerk verbunden ist, und den neuen Knoten durchführt, ferner das Austauschen von Informationen über gerichtete Kommunikationsband-Fähigkeiten zum Optimieren der Erkennung und der Strahlformung umfassen.

3. Vorrichtung (10, 92, 94, 132, 134, 172, 174, 212, 214, 252, 254) nach Anspruch 1, wobei das Entdeckungsunterstützungselement Informationen über die Art der durchzuführenden Strahlformung umfasst und darüber, ob der neue Knoten oder der Netzwerkknoten, der bereits mit dem drahtlosen Netzwerk verbundene ist, den Austausch von Strahlformungsframes einleiten soll.

4. Vorrichtung (10, 92, 94, 132, 134, 172, 174, 212, 214, 252, 254) nach Anspruch 1, wobei das Entdeckungsunterstützungselement Informationen über die Periodizität umfasst, mit der der Netzwerkknoten, der bereits mit dem drahtlosen Netzwerk verbundene ist, einen Strahlformungsprozess oder eine Entdeckungssignalübertragung wiederholt, sowie über die Zeitdauer, die Netzwerkknoten, der bereits mit dem drahtlosen Netzwerk verbunden ist, im Entdeckungsunterstützungsmodus bleibt.

5. Vorrichtung (10, 92, 94, 132, 134, 172, 174, 212, 214, 252, 254) nach Anspruch 1, wobei das Entdeckungsunterstützungselement Informationen über eine Empfängerantennenmuster-Abtastfrequenz umfasst.

6. Vorrichtung (10, 92, 94, 132, 134, 172, 174, 212, 214, 252, 254) nach Anspruch 1, wobei die Anweisungen, wenn sie von dem Prozessor ausgeführt werden, der Schritte durchführt, die als neuer Knoten arbeiten, der Entdeckungsunterstützung anfordert, das Entdeckungsunterstützungselement kommuniziert, das seine Multibandfähigkeit und gerichtete Kommunikationsbandfähigkeit enthält, um den Netzwerkknoten, der bereits mit dem drahtlosen Netzwerk verbunden ist, über seine Fähigkeiten zu informieren.

7. Vorrichtung (10, 92, 94, 132, 134, 172, 174, 212, 214, 252, 254) nach Anspruch 1, wobei das Entdeckungsunterstützungselement eine Stationsadresse, gerichtete Kommunikationsbandfähigkeitsinformationen, Antennenfähigkeitsinformationen, Kommunikationsbandinformationen, einen Kommunikationsbandabtastmodus, ein Entdeckungsunterstützungsfenster und eine Verweilzeit umfasst.

8. Vorrichtung (10, 92, 94, 132, 134, 172, 174, 212, 214, 252, 254) nach Anspruch 1, wobei die Anweisungen, wenn sie von dem Prozessor ausgeführt werden, der die Schritte als ein Netzwerkknoten, der bereits mit dem drahtlosen Netzwerk verbunden ist, durchführt und den Strahlformungsprozess beginnt, ferner das Anbieten von Erkennungsunterstützung durch entweder ausgelöste Strahlformung oder geplante Strahlformung mit dem neuen Knoten und das Übertragen von Informationen über den Strahlformungszeitplan oder den Strahlformungsauslöser an den neuen Knoten umfassen.

9. Vorrichtung (10, 92, 94, 132, 134, 172, 174, 212, 214, 252, 254) nach Anspruch 1, wobei die Anweisungen, wenn sie von dem Prozessor ausgeführt werden, der Schritte als ein Netzwerkknoten durchführt, der bereits mit dem drahtlosen Netzwerk verbunden ist, ferner das Anbieten von Entdeckungshilfe für ausgelöste Strahlformung oder geplante Strahlformung mit dem neuen Knoten unter Verwendung von Time Division Duplex (TDD)-Strahlformung umfassen, nachdem eine Anforderung für Entdeckungshilfe und gerichtete Kommunikationsbandfähigkeit eines neuen Knotens empfangen wurde, der über das Entdeckungsband angibt, dass er TDD Dienstzeit (SP) unterstützt.

10. Vorrichtung (10, 92, 94, 132, 134, 172, 174, 212, 214, 252, 254) nach Anspruch 9, wobei die Anweisungen, wenn sie von dem Prozessor ausgeführt werden, der die Schritte als ein Netzwerkknoten, der bereits mit dem drahtlosen Netzwerk verbunden ist, durchführt, ferner das Senden von gerichteten Kommunikationsband-Strahlformungs-Planungsinformationen oder einer Auslösezeit an den neuen Knoten über das Entdeckungsband umfassen.

11. Vorrichtung (10, 92, 94, 132, 134, 172, 174, 212, 214, 252, 254) nach Anspruch 10, wobei die Anweisungen, wenn sie von dem Prozessor ausgeführt werden, der Schritte als Netzwerkknoten durchführt, der bereits mit dem drahtlosen Netzwerk verbunden ist, ferner das Senden von Informationen über die Struktur und Planung von Zeitschlitzen über das Entdeckungsband Time Division Duplex (TDD) Dienstperiode (SP) umfassen.

12. Vorrichtung (10, 92, 94, 132, 134, 172, 174, 212, 214, 252, 254) nach Anspruch 1, wobei die Anweisungen, wenn sie von dem Prozessor ausgeführt werden, der Schritte als neuer Knoten durchführt, ferner das Kommunizieren über das Entdeckungsband umfassen, wobei Entdeckungsunterstützung über mehrere Kanäle des gerichteten Kommunikationsbandes durch Senden einer Anforderungsnachricht anfordert, die ein Entdeckungsunterstützungselement enthält, das ein Multibandelement und gerichtete Kommunikationsbandfähigkeit für jeden Kanal aufweist, für den es Entdeckungsunterstützung anfordert.

13. Vorrichtung (10, 92, 94, 132, 134, 172, 174, 212, 214, 252, 254) nach Anspruch 12, wobei die Anweisungen, wenn sie von dem Prozessor ausgeführt werden, der die Schritte als ein Netzwerkknoten, der bereits mit dem drahtlosen Netzwerk verbunden ist, durchführt, das Antworten auf die Entdeckungsunterstützungsanforderung des neuen Knotens durch Senden einer Antwortnachricht mit einem Entdeckungsunterstützungselement umfasst, das ein Multibandelement, eine gerichtete Kommunikationsbandfähigkeit und für jeden Kanal des neuen Knotens, für den er Unterstützung anbieten wird, umfasst.

14. Vorrichtung (10, 92, 94, 132, 134, 172, 174, 212, 214, 252, 254) nach Anspruch 13, wobei die Anweisungen, wenn sie von dem Prozessor ausgeführt werden, der Schritte als ein Netzwerkknoten, der bereits mit dem drahtlosen Netzwerk verbunden ist, durchführt, das Durchführen von geplanter Strahlformung umfasst, oder Strahlformung für jeden dieser Kanäle auslöst, und ein Planungselement über das Entdeckungsband für alle Kanäle beinhalten, für die geplante Strahlformung durchgeführt werden soll.

15. Verfahren zur gerichteten drahtlosen Kommunikation in einem Netzwerk, wobei das Verfahren umfasst:
(a) Betreiben einer Drahtloskommunikationsschaltung zum drahtlosen Kommunizieren mit mindestens einer anderen Drahtloskommunikationsstation, die über eine Multiband-Kommunikationsfähigkeit verfügt, die ein Entdeckungsband und ein gerichtetes Kommunikationsband umfasst;
(b) Betreiben der Drahtloskommunikationsschaltung als Netzwerkknoten, der bereits mit einem drahtlosen Netzwerk verbunden ist, wobei der Netzwerkknoten dazu ausgelegt ist, allen neuen Knoten, die versuchen, dem drahtlosen Netzwerk beizutreten, zu helfen, durch Durchführen von Schritten, die umfassen:
(i) Ankündigen seiner Fähigkeit zur Entdeckungsunterstützung durch Übertragen beliebiger Nachrichtenframes auf dem Entdeckungsband, um anzugeben, ob die Fähigkeit zur Entdeckungsunterstützung für das gerichtete Kommunikationsband verfügbar ist;
(ii) Übertragen einer Nachricht auf dem Entdeckungsband, die ein Entdeckungsunterstützungselement mit Informationen über die gerichtete Kommunikationsfähigkeit des neuen Knotens beinhaltet, die als Antwort auf das Empfangen einer Entdeckungsunterstützungsanforderung von irgendeinem neuen Knoten, der versucht, dem drahtlosen Netzwerk beizutreten, erzeugt wird, wobei das Entdeckungsunterstützungselement Informationen über die Verfügbarkeit des Netzwerkknotens, der bereits mit dem drahtlosen Netzwerk verbunden ist, um in die Entdeckungsunterstützung mit dem neuen Knoten nach dem Empfangen einer Anforderung von dem neuen Knoten einzutreten, und Informationen über eine Auslösezeit, zu der die Strahlformungs- oder Entdeckungssignalisierung beginnen soll, umfasst; und
(iii) Umschalten zum Auslösezeitpunkt auf das gerichtete Kommunikationsband und die Strahlformung gemäß den in ausgetauschten Entdeckungsunterstützungselementen empfangenen Informationen; und
(iv) Erstellen eines Verbindungsaufbaus über das gerichtete Kommunikationsband als Antwort auf während des Strahlformungsprozesses empfangenen gerichteten Informationen; und
(c) Betreiben der Drahtloskommunikationsschaltung als einen neuen Knoten, der versucht, dem drahtlosen Netzwerk beizutreten, durch Durchführen von Schritten, die umfassen:
(i) Empfangen eines Nachrichtenframes über das Entdeckungsband, der eine Angabe über die Fähigkeit zur Entdeckungsunterstützung enthält, von dem Netzwerkknoten, der bereits mit dem drahtlosen Netzwerk verbunden ist;
(ii) Übertragen einer Anforderungsnachricht, die ein Entdeckungsunterstützungselement mit Informationen über die gerichtete Kommunikationsfähigkeit des neuen Knotens enthält, über das Entdeckungsband an den Netzwerkknoten, der bereits mit dem drahtlosen Netzwerk verbunden ist; und
(iii) Empfangen einer Antwort auf die Anforderungsnachricht als eine Antwortnachricht, die ein Entdeckungsunterstützungselement über das Entdeckungsband des Netzwerkknotens, der bereits mit dem drahtlosen Netzwerk verbunden ist, enthält, wobei das Entdeckungsunterstützungselement Informationen über die Verfügbarkeit des Netzwerkknotens, der bereits mit dem drahtlosen Netzwerk verbunden ist, umfasst, um in die Entdeckungsunterstützung mit dem neuen Netzwerkknoten bei Empfangen einer Anforderung von dem neuen Netzwerkknoten einzutreten, sowie Informationen über einen Auslösezeitpunkt, zu dem die Strahlformung oder die Entdeckungssignalisierung beginnen soll;
(iv) Umschalten, zum Auslösezeitpunkt, auf das gerichtete Kommunikationsband und Strahlformung gemäß den Informationen, die in ausgetauschten Entdeckungsunterstützungselementen empfangen wurden, Unterstützungsanforderung und Entdeckungsunterstützungsantwortaustausch, um diesen neuen Knoten in einem Strahlformungsprozess zu entdecken; und
(v) Erstellen eines Verbindungsaufbaus über das gerichtete Kommunikationsband als Antwort auf während des Strahlformungsprozesses empfangenen gerichteten Informationen.

## Revendications

1. Appareil (10, 92, 94, 132, 134, 172, 174, 212, 214, 252, 254) pour la communication sans fil dans un réseau, l'appareil comprenant :
(a) un circuit de communication sans fil (30, 32, 20, 22a, 22b, 22c, 24a-n, 26a-n, 28a-n) configuré pour communiquer sans fil avec au moins une autre station de communication sans fil ayant une capacité de communication multibande comprenant une bande de découverte et une bande de communication directionnelle ;
(b) un processeur (16) couplé audit circuit de communication sans fil pour former une station configurée pour fonctionner sur un réseau sans fil ;
(c) une mémoire non transitoire (18) stockant des instructions exécutables par le processeur ;
(d) où lesdites instructions, lorsqu'elles sont exécutées par le processeur (16), exécutent des étapes suivantes :
(i) faire fonctionner ledit circuit de communication sans fil (30, 32, 20, 22a, 22b, 22c, 24a-n, 26a-n, 28a-n) en tant que noeud de réseau déjà connecté au réseau sans fil configuré pour aider tout nouveau noeud tentant de rejoindre le réseau sans fil, en exécutant des étapes suivantes :
(A) annoncer sa capacité d'assistance à la découverte en transmettant des trames de message quelconques sur la bande de découverte, afin d'indiquer si la capacité d'assistance à la découverte est disponible pour la bande de communication directionnelle ;
(B) transmettre un message sur la bande de découverte qui comprend un élément d'assistance à la découverte, contenant des informations sur la capacité de communication directionnelle du nouveau noeud, qui est générée en réponse à la réception d'une demande d'assistance à la découverte de tout nouveau noeud tentant de rejoindre le réseau sans fil, où l'élément d'assistance à la découverte comprend des informations sur la disponibilité du noeud de réseau déjà connecté au réseau sans fil pour s'engager dans l'assistance à la découverte avec le nouveau noeud lors de la réception d'une demande du nouveau noeud et d'informations sur un temps de déclenchement auquel la formation de faisceaux ou la signalisation de découverte doit commencer ; et
(C) passer, au moment du déclenchement, à la bande de communication directionnelle et à la formation de faisceaux en fonction des informations reçues dans l'élément d'assistance à la découverte ; et
(D) établir une configuration de connexion sur la bande de communication directionnelle en réponse aux informations directionnelles reçues au cours dudit processus de formation de faisceaux ; et
(ii) faire fonctionner ledit circuit de communication sans fil (30, 32, 20, 22a, 22b, 22c, 24a-n, 26a-n, 28an) en tant que nouveau noeud tentant de rejoindre le réseau sans fil, en exécutant des étapes suivantes :
(A) recevoir une trame de message sur la bande de découverte, contenant une indication de la capacité d'assistance à la découverte, depuis le noeud de réseau déjà connecté au réseau sans fil ;
(B) transmettre un message de demande contenant un élément d'assistance à la découverte, contenant des informations sur une capacité de communication directionnelle du nouveau noeud, sur la bande de découverte, au noeud de réseau déjà connecté au réseau sans fil ; et
(C) recevoir une réponse au message de demande sous la forme d'un message de réponse contenant un élément d'assistance à la découverte sur la bande de découverte du noeud de réseau déjà connecté au réseau sans fil, où l'élément d'assistance à la découverte comprend des informations sur la disponibilité du noeud de réseau déjà connecté au réseau sans fil pour s'engager dans l'assistance à la découverte avec le nouveau noeud lors de la réception d'une demande en provenance du nouveau noeud et des informations sur le moment de déclenchement auquel la formation de faisceaux ou la signalisation de découverte doit commencer ;
(D) passer, au moment du déclenchement, à la bande de communication directionnelle et à la formation de faisceaux en fonction des informations reçues dans l'élément d'assistance à la découverte et l'élément d'assistance à la découverte transmis, qui découvre le nouveau noeud dans un processus de formation de faisceaux ; et
(E) établir une configuration de connexion sur la bande de communication directionnelle en réponse aux informations directionnelles reçues au cours dudit processus de formation de faisceaux.

2. Appareil (10, 92, 94, 132, 134, 172, 174, 212, 214, 252, 254) selon la revendication 1, dans lequel lesdites instructions, lorsqu'elles sont exécutées par le processeur exécutant des étapes pour le noeud de réseau déjà connecté au réseau sans fil et le nouveau noeud, comprennent en outre l'échange d'informations sur les capacités de la bande de communication directionnelle afin d'optimiser la découverte et la formation de faisceaux.

3. Appareil (10, 92, 94, 132, 134, 172, 174, 212, 214, 252, 254) selon la revendication 1, dans lequel ledit élément d'aide à la découverte comprend des informations sur le type de formation de faisceaux à effectuer et sur le fait de savoir si le nouveau noeud ou le noeud de réseau déjà connecté au réseau sans fil doit lancer des échanges de trames de formation de faisceaux.

4. Appareil (10, 92, 94, 132, 134, 172, 174, 212, 214, 252, 254) selon la revendication 1, dans lequel ledit élément d'assistance à la découverte comprend des informations sur la périodicité du noeud de réseau déjà connecté au réseau sans fil répétant un processus de formation de faisceaux ou une transmission de signal de découverte, et sur la durée pendant laquelle le noeud de réseau déjà connecté au réseau sans fil restera en mode d'assistance à la découverte.

5. Appareil (10, 92, 94, 132, 134, 172, 174, 212, 214, 252, 254) selon la revendication 1, dans lequel ledit élément d'aide à la découverte comprend des informations sur une fréquence de balayage de diagramme d'antenne de récepteur.

6. Appareil (10, 92, 94, 132, 134, 172, 174, 212, 214, 252, 254) selon la revendication 1, dans lequel lesdites instructions, lorsqu'elles sont exécutées par le processeur exécutant des étapes opérant en tant que nouveau noeud demandant une assistance à la découverte, communiquent un élément d'assistance à la découverte contenant sa capacité multibande et sa capacité de bande de communication directionnelle, pour informer le noeud de réseau déjà connecté de ses capacités.

7. Appareil (10, 92, 94, 132, 134, 172, 174, 212, 214, 252, 254) selon la revendication 1, dans lequel ledit élément d'assistance à la découverte comprend une adresse de station, des informations sur la capacité de la bande de communication directionnelle, des informations sur la capacité de l'antenne, des informations sur la bande de communication, le mode de balayage de la bande de communication, la fenêtre d'assistance à la découverte et le temps d'attente.

8. Appareil (10, 92, 94, 132, 134, 172, 174, 212, 214, 252, 254) selon la revendication 1, dans lequel lesdites instructions, lorsqu'elles sont exécutées par le processeur exécutant les étapes en tant que noeud de réseau déjà connecté au réseau sans fil et commençant le processus de formation de faisceaux, comprennent en outre d'offrir une assistance à la découverte soit par formation de faisceaux déclenchée, soit par formation de faisceaux programmée avec le nouveau noeud, et de transmettre des informations sur la programmation de formation de faisceaux ou le déclenchement de formation de faisceaux au nouveau noeud.

9. Appareil (10, 92, 94, 132, 134, 172, 174, 212, 214, 252, 254) selon la revendication 1, dans lequel lesdites instructions, lorsqu'elles sont exécutées par le processeur exécutant les étapes en tant que noeud de réseau déjà connecté au réseau sans fil, comprennent en outre d'offrir une assistance à la découverte pour la formation de faisceaux déclenchée ou la formation de faisceaux programmée avec le nouveau noeud utilisant la formation de faisceaux en duplex à répartition dans le temps, TDD, après réception d'une demande d'assistance à la découverte et d'une capacité de bande de communication directionnelle d'un nouveau noeud qui indique sur la bande de découverte qu'il prend en charge la période de service, SP, TDD.

10. Appareil (10, 92, 94, 132, 134, 172, 174, 212, 214, 252, 254) selon la revendication 9, dans lequel lesdites instructions, lorsqu'elles sont exécutées par le processeur exécutant les étapes en tant que noeud de réseau déjà connecté au réseau sans fil, comprennent en outre d'envoyer des informations de programmation de formation de faisceaux de bande de communication directionnelle ou de temps de déclenchement au nouveau noeud par l'intermédiaire de la bande de découverte.

11. Appareil (10, 92, 94, 132, 134, 172, 174, 212, 214, 252, 254) selon la revendication 10, dans lequel lesdites instructions, lorsqu'elles sont exécutées par le processeur exécutant les étapes en tant que noeud de réseau déjà connecté au réseau sans fil, comprennent en outre d'envoyer sur la bande de découverte des informations de programmation et de structure de créneaux de période de service, SP, de duplex à répartition dans le temps, TDD.

12. Appareil (10, 92, 94, 132, 134, 172, 174, 212, 214, 252, 254) selon la revendication 1, dans lequel lesdites instructions, lorsqu'elles sont exécutées par le processeur exécutant les étapes en tant que nouveau noeud, comprennent en outre une communication sur la bande de découverte demandant une assistance à la découverte sur plusieurs canaux de la bande de communication directionnelle en envoyant un message de demande contenant un élément d'assistance à la découverte ayant un élément multibande et une capacité de bande de communication directionnelle pour chaque canal pour lequel il demande une assistance à la découverte.

13. Appareil (10, 92, 94, 132, 134, 172, 174, 212, 214, 252, 254) selon la revendication 12, dans lequel lesdites instructions, lorsqu'elles sont exécutées par le processeur exécutant des étapes en tant que noeud de réseau déjà connecté au réseau sans fil, comprennent de répondre à la demande d'assistance à la découverte de nouveau noeud en envoyant un message de réponse ayant un élément d'assistance à la découverte comprenant un élément multibande, une capacité de bande de communication directionnelle et pour chaque canal du nouveau noeud pour lequel il offrira de l'assistance.

14. Appareil (10, 92, 94, 132, 134, 172, 174, 212, 214, 252, 254) selon la revendication 13, dans lequel lesdites instructions, lorsqu'elles sont exécutées par le processeur exécutant les étapes en tant que noeud de réseau déjà connecté au réseau sans fil, comprennent de procéder à une formation de faisceaux programmée ou à une formation de faisceaux déclenchée pour chacun de ces canaux, et d'inclure un élément de programmation sur la bande de découverte pour tous les canaux quels qu'ils soient pour lesquels une formation de faisceaux programmée doit être exécutée.

15. Procédé de communication sans fil directionnelle dans un réseau, le procédé comprenant les étapes suivantes :
(a) faire fonctionner un circuit de communication sans fil pour communiquer sans fil avec au moins une autre station de communication sans fil ayant une capacité de communication multibande comprenant une bande de découverte et une bande de communication directionnelle ;
(b) faire fonctionner ledit circuit de communication sans fil en tant que noeud de réseau déjà connecté à un réseau sans fil, où ledit noeud de réseau est configuré pour aider tout nouveau noeud tentant de rejoindre le réseau sans fil, en exécutant des étapes suivantes :
(i) annoncer sa capacité d'assistance à la découverte en transmettant des trames de message sur la bande de découverte, pour indiquer si la capacité d'assistance à la découverte est disponible pour la bande de communication directionnelle ;
(ii) transmettre un message sur la bande de découverte qui comprend un élément d'assistance à la découverte, contenant des informations sur une capacité de communication directionnelle du nouveau noeud, qui est généré en réponse à la réception d'une demande d'assistance à la découverte de tout nouveau noeud tentant de rejoindre le réseau sans fil, où l'élément d'assistance à la découverte comprend des informations sur la disponibilité du noeud de réseau déjà connecté au réseau sans fil pour s'engager dans l'assistance à la découverte avec le nouveau noeud lors de la réception d'une demande provenant du nouveau noeud et des informations sur un temps de déclenchement auquel la formation de faisceaux ou la signalisation de découverte doit commencer ; et
(iii) passer, au moment du déclenchement, à la bande de communication directionnelle et à la formation de faisceaux en fonction des informations reçues dans les éléments d'assistance à la découverte échangés ; et
(iv) établir une configuration de connexion sur la bande de communication directionnelle en réponse aux informations directionnelles reçues au cours dudit processus de formation de faisceaux ; et
(c) faire fonctionner ledit circuit de communication sans fil en tant que nouveau noeud tentant de rejoindre le réseau sans fil, en exécutant des étapes suivantes :
(i) recevoir une trame de message sur la bande de découverte, contenant une indication de la capacité d'assistance à la découverte, depuis le noeud de réseau déjà connecté au réseau sans fil ;
(ii) transmettre un message de demande contenant un élément d'assistance à la découverte, contenant des informations sur une capacité de communication directionnelle du nouveau noeud, sur la bande de découverte, au noeud de réseau déjà connecté au réseau sans fil ; et
(iii) recevoir une réponse au message de demande sous la forme d'un message de réponse contenant un élément d'assistance à la découverte sur la bande de découverte du noeud de réseau déjà connecté au réseau sans fil, où l'élément d'assistance à la découverte comprend des informations sur la disponibilité du noeud de réseau déjà connecté au réseau sans fil pour s'engager dans l'assistance à la découverte avec le nouveau noeud lors de la réception d'une demande en provenance du nouveau noeud et des informations sur le moment de déclenchement auquel la formation de faisceaux ou la signalisation de découverte doit commencer ;
(iv) passer, au moment du déclenchement, à la bande de communication directionnelle et à la formation de faisceaux en fonction des informations reçues dans les échanges d'éléments de demande d'assistance à la découverte et de réponse d'assistance à la découverte pour découvrir ce nouveau noeud dans le cadre d'un processus de formation de faisceaux ; et
(v) établir une configuration de connexion sur la bande de communication directionnelle en réponse aux informations directionnelles reçues au cours dudit processus de formation de faisceaux.
